# EUROPÄISCHE PATENTSCHRIFT

(11) **EP 3 847 022 B1**
(45) Veröffentlichungstag und Bekanntmachung des Hinweises auf die Patenterteilung: **13.07.2022**
(21) Anmeldenummer: 19753065.2
(22) Anmeldetag: 12.08.2019
(51) Int. Cl.: B41F 17/00, B41F 17/22, B65G 47/84

(54) **VORRICHTUNG ZUM BEDRUCKEN VON HOHLKÖRPERN**
DEVICE FOR PRINTING ON HOLLOW ARTICLES
ARRANGEMENT D'IMPRESSION DE CORPS CREUX

(30) Priorität: 04.09.2018 DE 102018121542
(43) Veröffentlichungstag der Anmeldung: 14.07.2021
(73) Patentinhaber: Koenig & Bauer AG, 97080 Würzburg (DE)
(72) Erfinder: BEHNKE, Stephan, 16356 Ahrensfelde (DE); WESCHENFELDER, Kurt, 97299 Zell am Main (DE)
(74) Vertreter: Koenig & Bauer AG
(86) Internationale Anmeldenummer: PCT/EP2019/071584
(87) Internationale Veröffentlichungsnummer: WO 2020/048739

(56) Entgegenhaltungen:
- EP-A1- 1 132 207
- EP-A1- 2 562 103
- DE-A1- 1 811 356

## Beschreibung

Die Erfindung betrifft eine Vorrichtung zum Bedrucken von Hohlkörpern gemäß dem Oberbegriff des Anspruches 1.

Wie z. B. aus der WO 2012/148576 A1 bekannt ist, werden in der Verpackungsindustrie in einer Vorrichtung zur Dekoration von jeweils eine zylindrische Mantelfläche aufweisenden Hohlkörpern zumeist mehrere Druckwerke verwendet. Dabei überträgt jedes dieser Druckwerke jeweils eine Druckfarbe auf ein von diesen Druckwerken gemeinsam verwendetes Drucktuch. Die Mantelfläche des betreffenden Hohlkörpers wird dann durch eine Relativbewegung zwischen der Mantelfläche des betreffenden Hohlkörpers und dem zuvor insbesondere mehrfarbig eingefärbten Drucktuch, insbesondere durch ein Abrollen der Mantelfläche des betreffenden Hohlkörpers auf diesem Drucktuch, mit einem z. B. mehrfarbigen Druckmotiv dekoriert.

Eine derartige Vorrichtung zum Bedrucken oder zur Dekoration von insbesondere jeweils eine vorzugsweise zylindrische Mantelfläche aufweisenden Hohlkörpern wird z. B. in Verbindung mit einer i.d.R. mehrere Arbeitsstationen aufweisenden Produktionsanlage zur Fertigung und weiteren Bearbeitung solcher Hohlkörper verwendet, wobei das Bedrucken bzw. die Dekoration der Hohlkörper durch ein Druckverfahren erfolgt, weshalb diese Hohlkörper allgemein auch als Druckprodukte bezeichnet werden können. In einer solchen Produktionsanlage werden die zu bedruckenden Hohlkörper in einer Massenfertigung mit z. B. mehreren hundert oder gar einigen tausend Stück pro Minute, z. B. zwischen 1.500 und 2.500 Stück pro Minute, besonders bevorzugt zwischen 1.800 und 2.200 Stück pro Minute gefertigt. Derartige Hohlkörper werden z. B. aus Metall, insbesondere aus Stahl oder Aluminium, oder aus einem Kunststoff gefertigt. Derartige Hohlkörper aus Metall werden z. B. als Getränkedosen oder als Aerosoldosen verwendet. Derartige Hohlkörper aus Kunststoff werden z. B. in Form von thermoplastischen Formkörpern hergestellt und z. B. als Becher zur Verpackung z. B. von flüssigen oder pastösen Lebensmitteln, insbesondere von Molkereierzeugnissen oder von Getränken verwendet. Der jeweilige Hohlkörper kann aber auch ein entweder aus einem Kunststoff oder aus Aluminium gefertigter runder Tubenkörper sein, wobei unter einer Tube ein längliches, festes, aber formbares Behältnis verstanden wird, welches zum Befüllen mit einer insbesondere pastenartigen Substanz vorgesehen ist. Tuben aus Aluminium werden z. B. in einem Rückwärtsfließpressverfahren hergestellt. Tuben aus Kunststoff werden z. B. mittels Extrusion jeweils als nahtlose Tuben hergestellt. Eine weitere Art von in einer vorgenannten Vorrichtung zu bedruckenden Hohlkörpern können aus Glas gefertigte vorzugsweise zylindrische Behälter oder Gefäße sein, z. B. Flaschen oder Flakons.

Getränkedosen werden vorzugsweise aus Aluminium gefertigt und sind i. d. R. so genannte Zweiteildosen, bei denen ein zirkularer Boden zusammen mit einem vorzugsweise geraden Zylindermantel jeweils aus einem einzigen Werkstück, d. h. aus einem so genannten Butzen (engl. Slugs) oder aus einer Ronde, d. h. einer kreisrunden Scheibe, in einem Umformverfahren, z. B. in einem Kaltfließpressverfahren oder in einem Zugdruckumformverfahren, vorzugsweise durch Tiefziehen, insbesondere durch Abstrecktiefziehen, zu einem einseitig offenen Hohlkörper, d. h. zu einer so genannten Rohdose gefertigt werden und wobei in einem am Produktionsende ausgeführten Fertigungsschritt ein zirkularer Deckel auf den Zylindermantel aufgesetzt und durch Umbördelung mit dem Zylindermantel luftdicht verbunden wird.

Eine weitere Dosenart sind Weißblechdosen. Weißblech ist ein verzinntes Stahlblech. Zur Herstellung von Weißblechdosen beträgt die Dicke des Stahlblechs z. B. 0,15 mm bis 0,49 mm, die Dicke der Zinnschicht z. B. 0,2 µm bis 0,8 µm, wobei der Zinnüberzug dem Korrosionsschutz dient. Bei Weißblechdosen handelt es sich um so genannte Dreiteildosen. Um den Mantel einer Weißblechdose herzustellen, wird ein rechteckiger Streifen aus Stahlblech zu einem vorzugsweise geraden Zylindermantel gebogen, wobei die Enden dieses zu einem Zylindermantel gebogenen Streifens in einem Stumpfstoß verschweißt werden. Anschließend werden ein zirkularer Boden und ein zirkularer Deckel auf den Zylindermantel aufgesetzt und die Ränder umgebördelt. Um für die betreffende Weißblechdose eine höhere Festigkeit gegen Eindrücken zu erhalten, besitzen z. B. alle drei Teile, d. h. der Zylindermantel, der Boden und der Deckel vorzugsweise ein Wellenprofil.

Eine Aerosoldose, die auch als Sprühdose oder Spraydose bezeichnet wird, ist eine Metalldose zum Versprühen von Flüssigkeiten. In einer Aerosoldose steht die eingefüllte Flüssigkeit unter Druck, wobei als Treibgas zum Ausbringen der betreffenden Flüssigkeit aus der betreffenden Dose z. B. Propan, Butan, Dimethylether oder Gemische daraus oder auch komprimierte Luft oder Stickstoff zum Einsatz kommt.

Die vorgenannte WO 2012/148576 A1 beschreibt eine Vorrichtung zur Dekoration von Dosen, wobei eine Anordnung von mehreren Druckwerken mit jeweils einem Farbwerk zur mehrfarbigen Dekoration einer Vielzahl von Dosen vorgesehen ist. Dabei weist jedes der zu einem der Druckwerke gehörenden Farbwerke jeweils einen Farbkasten zur Bereitstellung von Druckfarbe auf, wobei in jedem Farbkasten jeweils eine Farbkastenwalze zur Aufnahme der Druckfarbe aus dem betreffenden Farbkasten vorgesehen ist. In jedem Farbwerk ist jeweils ein Farbduktor vorgesehen, wobei der Farbduktor jeweils Druckfarbe von der betreffenden Farbkastenwalze aufnimmt, wobei in einem in dem betreffenden Farbwerk dem jeweiligen Farbduktor nachfolgenden Walzenzug mehrere changierende Farbreiberwalzen und mehrere jeweils mit mindestens einer der Farbreiberwalzen zusammenwirkende Farbübertragungswalzen vorgesehen sind. Für jedes Farbwerk ist jeweils ein Plattenzylinder mit mindestens einer Druckplatte vorhanden, wobei mit dem jeweiligen Plattenzylinder zum Auftragen der Druckfarbe jeweils nur eine einzige Farbauftragswalze zusammenwirkt.

Durch die US 4 741 266 A ist eine Vorrichtung zum Dekorieren von Dosen bekannt, mit mehreren Färbungsstationen und Plattenzylindereinrichtungen, wobei jede der Plattenzylindereinrichtungen getrennt von einem Hauptgetriebe angetrieben wird, wobei das Hauptgetriebe einer Druckrolleneinrichtung zugeordnet ist, um so vollständig von der Walzenantriebseinrichtung jeder Färbungsstation unabhängig zu sein.

Durch die WO 2018/015 134 A1 ist eine Vorrichtung zum Dekorieren von Hohlkörpern bekannt, mit mindestens einem Plattenzylinder und mit einem insbesondere als ein Kurzfarbwerk ausgebildeten Farbwerk mit einer an den betreffenden Plattenzylinder angestellten oder zumindest anstellbaren Farbauftragswalze sowie einer an die Farbauftragswalze angestellten oder zumindest anstellbaren Rasterwalze, wobei die Farbauftragswalze und die Rasterwalze für ihre jeweilige Rotation jeweils einen eigenen Antrieb aufweisen. Ebenso weisen auch der Plattenzylinder, ein mit ihm zusammenwirkender Gummituchzylinder und ein Gegendruckzylinder für ihre jeweilige Rotation jeweils einen eigenen Antrieb auf. Die jeweiligen Drehzahlen von Plattenzylinder, Gummituchzylinder, Gegendruckzylinder, Farbauftragswalze und Rasterwalze sind steuerungstechnisch aufeinander abgestimmt.

Durch die WO 2004/109581 A2 ist eine Vorrichtung zur Ausführung eines kontaktlosen Digitaldruckverfahrens, z. B. eines Inkjet-Druckverfahrens bekannt, um runde Objekte, insbesondere Zweiteildosen, ohne Verwendung eines Drucktuchs bedarfsweise individuell zu bedrucken, wobei vorzugsweise mehrere Druckköpfe vorgesehen sind, die jeweils eine einzige Druckfarbe verdrucken.

Durch die DE 10 2006 004 568 A1 ist ein Kurzfarbwerk für eine Druckmaschine bekannt, enthaltend einen Druckformzylinder, eine mit dem Druckformzylinder zusammenwirkende Farbauftragswalze und eine die Farbauftragswalze kontaktierende Rasterwalze, der eine Einrichtung zur Farbzuführung zugeordnet ist, wobei mindestens eine Egalisierwalze zwischen dem Ort der Farbzuführung und dem Berührungsspalt zwischen der Rasterwalze und der Farbauftragswalze, bezogen auf die Drehrichtung der Rasterwalze, angeordnet ist, wobei die Einrichtung zur Farbzuführung als eine Kammerrakel ausgebildet ist.

Durch die DE 101 60 734 A1 ist eine Druckmaschine bekannt, welche mindestens eine Druckform, ein Feuchtwerk zum Einfeuchten der Druckform mit einem Feuchtmittel, ein Farbwerk zum Einfärben der Druckform mit einer Druckfarbe und eine Entfeuchtungseinrichtung mit einer Heizwalze (Temperierwalze) zum Verringern eines zusammen mit der Druckfarbe geförderten Anteiles des Feuchtmittels umfasst, wobei das Farbwerk als ein heberloses Kurzfarbwerk ausgebildet ist, wobei eine Farbwerkswalze des Farbwerkes eine erste Abrollkontaktstelle aufweist, an welcher die Farbwerkswalze mit der Heizwalze in Abrollkontakt steht, wobei die Farbwerkswalze eine zweite Abrollkontaktstelle aufweist und wobei ein kürzester Förderweg der Druckfarbe von der Farbwerkswalze zur Druckform durch höchstens eine Zwischenwalze vorgegeben ist.

Durch die DE 32 32 780 A1 ist ein Farbwerk für Offsetdruckmaschinen zum Bedrucken von Bogen oder Bahnen mit einem Plattenzylinder bekannt, der die benötigte Farbe von höchstens zwei Farbauftragwalzen mit elastischer Oberfläche erhält, die mit einem Farbzylinder zusammenwirken, dem die Farbe über ein Farbzuführsystem zugeführt wird, das einen kontinuierlichen Farbfilm erzeugt, wobei dem Farbzylinder eine Farbauftragswalze mit nahezu gleichem Durchmesser wie der Plattenzylinder nachgeordnet ist, wobei dem Farbzylinder ein Feuchtwerk mit mindestens einer das Feuchtmittel übertragenden Walze zugeordnet ist und wobei die Übertragung des Feuchtmittels auf den Farbzylinder in Drehrichtung desselben nach dem Farbauftrag und vor dessen Kontaktstelle mit der Farbauftragswalze erfolgt.

Durch die DE 10 2006 048 286 A1 ist ein Verfahren zum Antreiben eines Druckwerks mit einem Kurzfarbwerk in einer Verarbeitungsmaschine mit einer Rasterwalze und einer zugeordneten Rakeleinrichtung und einer der Rasterwalze nachgeordneten Farbauftragswalze bekannt, welcher in Farbflussrichtung ein Platten-/Formzylinder nachgeordnet ist, wobei der Platten-/Formzylinder mit einem Gummituchzylinder und der Gummituchzylinder mit einem den Bedruckstoff führenden Druckzylinder in Wirkverbindung ist, wobei die Rasterwalze mit einem Einzelantrieb angetrieben wird, wobei im Druck-/Lackierbetrieb vom Hauptantrieb ein Eintrieb auf ein Antriebsrad des Druckzylinders und ein Antriebsrad des Gummituchzylinders und ein zweites und erstes Antriebsrad des Platten-/Formzylinders sowie ein Antriebsrad der Farbauftragswalze und ein Antriebsrad der Rasterwalze eingespeist wird, wobei der Einzelantrieb der Rasterwalze inaktiv ist, und wobei im Rüstbetrieb die Antriebsverbindung zum Hauptantrieb zwischen ersten Antriebsrad und zweiten Antriebsrad des Platten-/ Formzylinders getrennt wird, der Einzelantrieb der Rasterwalze aktiviert wird und mittels Einzelantrieb ein Antriebsmoment auf das Antriebsrad der Rasterwalze und das Antriebsrad der Farbauftragswalze und das erste Antriebsrad des Platten-/Formzylinders eingebracht wird.

Durch die DE 196 24 440 A1 ist eine Einrichtung zum Füllen von Vertiefungen eines Zylinders einer Druckmaschine mit einer Flüssigkeit bekannt, wobei an dem Zylinder mindestens zwei Rakeleinrichtungen zum Füllen von Vertiefungen des Zylinders mit der Flüssigkeit angeordnet sind, wobei eine mit einem Fördersystem verbundene Auftragsvorrichtung für die Flüssigkeit und eine dieser in Drehrichtung des Zylinders nachgeordnete Arbeitsrakel vorgesehen sind, wobei die Rakeln an einem Balken befestigt sind, wobei die abgerakelte Flüssigkeit zu einer Auffangwanne abgeleitet wird.

Durch die DE 89 12 194 U1 ist ein Farbwerk zum Einsatz in einer Druckmaschine mit einem an eine Rasterwalze anstellbaren Arbeitsrakelmesser sowie einer Farbwanne mit Farbfördermitteln bekannt, wobei das Arbeitsrakelmesser, die Farbwanne und die Mittel zum Fördern der Farbe zur Rasterwalze zu einer Baueinheit zusammengefasst sind und die Baueinheit an einem an der Druckmaschine gelagerten Träger lösbar befestigbar ist.

Durch die DE 10 2007 052 761 A1 ist ein Anilox-Druckwerk bekannt, welches als Farbwerkswalzen eine Farbauftragswalze und eine Rasterwalze aufweist, wobei die Rasterwalze an Schwenkhebeln gelagert ist, wobei die Rasterwalze und die Farbauftragswalze jeweils Schmitzringe aufweisen, wobei eine zum Andrücken der Schmitzringe der einen an die Schmitzringe der anderen Farbwerkswalze angeordnete Einrichtung Federn zum Ausgleichen von fertigungstoleranzbedingten Durchmesserdifferenzen aufweist.

Durch die DE 28 51 426 A1 ist eine Vorrichtung zum Bedrucken jeweils einer Mantelfläche von Hohlkörpern bekannt, wobei eine die zu bedruckenden Hohlkörper um eine Rotationsachse transportierende Transporteinrichtung vorgesehen ist, wobei mehrere Druckwerke vorgesehen sind, wobei jeder zu bedruckende Hohlkörper mit der Transporteinrichtung in einen Druckbereich von mindestens einem der Druckwerke transportierbar ist, wobei zumindest eines der Druckwerke einen Druckformzylinder und ein Farbwerk mit einer einzigen Farbauftragswalze aufweist.

Durch die US 2010/0282402 A1 ist bekannt, in einer Markier- oder Etikettiermaschine einen Torquemotor zu verwenden.

Durch die US 2010/0313771 A1 ist eine Rotationsdruckmaschine zum Bedrucken von Behältern bekannt, wobei ein ein Spannfutter tragendes Karussell vorgesehen ist, wobei das Karussell von einem elektrischen Motor mit einem integrierten Drehgeber rotativ angetrieben ist.

Durch die DE 18 11 356 A1 ist eine Maschine zum Bedrucken, Lackieren, Ausrüsten, Etikettieren usw. von Tuben, Hülsen oder rohrförmigen Werkstücken in kontinuierlichem Fluss bekannt, die aus mehreren hintereinandergeschalteten Bearbeitungsgruppen besteht, die durch eine endlose Förderkette miteinander verbunden sind und von denen mindestens eine Bearbeitungsgruppe als Werkstückträger einen die Werkstücke auf Halterungsspindeln aufgesteckt tragenden und sie im Verlaufe seiner schrittweisen Fortschaltbewegung nacheinander dem Werkzeug darbietenden Revolverkopf besitzt, wobei die an der Förderkette ankommenden Werkstücke mit Hilfe einer Aufsteck- und Transportvorrichtung auf die Halterungsspindeln aufgesteckt werden, wobei die Transport- und Aufschiebevorrichtung einen in koaxialer Anordnung mit der zu bestückenden Halterungsspindel des Werkstückträgers eine in Richtung auf den Werkstückträger zu und von diesem weg hin und her gehende axiale Aufschiebebewegung im Takte der Fortschaltbewegung des Werkstückträgers ausführenden Aufschieber und eine um eine mit der Achse des Werkstückträgers parallele zentrale Drehachse drehbare und hierbei im Takte der Schaltbewegung des Werkstückträgers eine schrittweise Fortschaltbewegung um ihre Drehachse ausführende Transportwalze mit an Ihrem Umfang entlang verteilten Aufnahmen für die Werkstücke besitzt, die im Verlaufe ihrer Fortschaltbewegung die von der Förderkette kommenden Werkstücke nacheinander aufnimmt und sie einzeln in koaxialer Anordnung mit der zu bestückenden Halterungsspindel dem Aufschieber darbietet, den sie auf die entsprechende Halterungsspindel aufschiebt, wobei der Transportwalze eine pneumatische Saugeinrichtung zugeordnet ist, die im Takte der Fortschaltbewegung des Werkstückträgers innerhalb der dem Transportband zugekehrten Aufnahme einen zweckmäßig einstellbaren Unterdruck erzeugt.

Durch die EP 2 562 103 A1 ist eine Transfervorrichtung mit einem Dornrad und einem Transferrad bekannt, die jeweils um zueinander parallele Rotationsachsen drehend angetrieben sind, im Bereich ihrer Peripherie jeweils Halterungen für zu bedruckende oder anderweitig zu bearbeitende Objekte aufweisen, wobei der Abstand der Halterungen an dem Dornrad von der Rotationsachse des Dornrades zwischen einem Mindestabstand und einem Maximalabstand veränderlich ist und Dornrad und Transferrad derart benachbart zueinander angeordnet sind, dass Objekte von einer Transporteinrichtung über das Transferrad an jeweils eine Halterung an dem Dornrad übergeben werden können, oder umgekehrt, vom Dornrad über das Transferrad zu einer Transporteinrichtung, wobei die Halterungen an dem Transferrad jeweils über einen Transferschwenkarm um eine Schwenkachse schwenkbar befestigt sind, wobei die Schwenkachse parallel zur Rotationsachse des Transferrades verläuft und die Schwenkachse für jede der Halterungen denselben festen Abstand zu der Rotationsachse hat.

Durch die EP 1 132 207 A1 ist eine Transfervorrichtung für in einer Druckmaschine zu bedruckende oder bereits bedruckte Hohlkörper wie Hülsen, Tuben, Dosen oder dergleichen bekannt, wobei ein Transferrotor mit in dessen Drehrichtung aufeinanderfolgend angeordneten Halteeinheiten vorgesehen ist, wobei die Halteeinheiten Aufnahmeplätze zur lösbaren Halterung zu transferierender Hohlkörper definieren, wobei die Halteeinheiten über Vakuumhaltemittel zum Festhalten der Hohlkörper während des Transfervorganges verfügen.

Durch die US 2001/0039889 A1 ist eine Vorrichtung zum Rotationsbedrucken bekannt, mit: a) einem Transportband, das eine Mehrzahl von Taschen enthält, die eine Mehrzahl von pillenförmigen Gegenständen wie Kapseln und Caplets aufnehmen; b) eine vom Transportband um einen vorbestimmten oder relativen Abstand beabstandete Druckwalze, die auf jeden der pillenförmigen Gegenstände berührend einen Streifen von Kennzeichen druckt, die einen Bereich von 0° bis 360° eines Umfanges jedes pillenförmigen Gegenstandes einschließen; und c) Organe, um den vorbestimmten oder relativen Abstand zwischen der Druckwalze und dem Förderband einzustellen, um eine Länge des Streifens von Kennzeichen, die auf die pillenförmigen Gegenstände gedruckt werden, zu verändern.

Durch die US 2015/0336750 A1 ist eine Zuführungsvorrichtung zum Zuführen von Dosenkörpern an eine Dosenkörperdekorierungsvorrichtung bekannt, wobei die Zuführungsvorrichtung umfasst: a) einen Förderer, welcher Dosenkörper von einem vorgelagerten Versorger transportiert; b) ein drehbares Dornrad, welches jeden Dosenkörper in einer Tasche auf dem Radumfang aufnimmt, wobei die Dosenkörper undekoriert zugeführt werden; c) wobei die Vorrichtung einen oder mehrere Revolver mit kreisförmiger Teilung umfasst, d) einen Trennrevolver, welcher jeden vom Förderer aufgenommenen Dosenkörper trennt, wodurch die lineare Dosenteilung auf dem Förderer in eine kreisförmige Dosenteilung auf dem oder den Zuführungsrevolvern umgewandelt wird; e) wobei die Vorrichtung gekennzeichnet ist durch einen Übergaberevolver zum Übergeben der Dosenkörper an das Dornrad und durch eine kreisförmige Teilung, welche der Teilung des Dornrads entspricht, wodurch die Dosenstabilität beim Laden erhöht wird und wodurch die Dosenteilung zwischen dem Förderer und dem Dornrad in einer oder mehreren Stufen geändert wird.

Durch die WO 2018/013465 A1 ist ein Dekorator mit einem Mandrelrad, einem Segmentrad, einer Transferscheibe und einer Transportkette bekannt, wobei das Mandrelrad, das Segmentrad, die Transferscheibe und die Transportkette jeweils einen Motor und einen Decoder aufweisen, wobei ein Controller vorgesehen ist, wobei der Controller auf der Grundlage einer von den Decodern erhaltenen Information die jeweilige Geschwindigkeit des Mandrelrades, des Segmentrades, der Transferscheibe und der Transportkette anpasst oder einstellt.

Der Erfindung liegt die Aufgabe zugrunde, eine Vorrichtung zum Bedrucken von Hohlkörpern zu schaffen, mit welcher durch eine hohe Positioniergenauigkeit eines am Transport der Hohlkörper beteiligten Förderrades eine präzise Übergabe der zu bedruckenden Hohlkörper vom Förderrad an ein mit diesem Förderrad zusammenwirkendes Mandrelrad erreichbar ist.

Die Aufgabe wird erfindungsgemäß durch die Merkmale des Anspruches 1 gelöst. Die abhängigen Ansprüche betreffen vorteilhafte Weiterbildungen und Ausgestaltungen der gefundenen Lösung.

Ein Ausführungsbeispiel der Erfindung ist in den Zeichnungen dargestellt und wird im Folgenden näher beschrieben. Mit der Erfindung erzielbare Vorteile sind in Verbindung mit dem Ausführungsbeispiel erwähnt.

Es zeigen:
- Fig. 1: eine Vorrichtung zum Bedrucken bzw. zur Dekoration von jeweils eine Mantelfläche aufweisenden Hohlkörpern;
- Fig. 2: ein Farbwerk insbesondere für die in Fig. 1 dargestellte Vorrichtung in einer ersten Betriebsstellung;
- Fig. 3: das Farbwerk insbesondere für die in Fig. 1 dargestellte Vorrichtung in einer zweiten Betriebsstellung;
- Fig. 4: ein Kammerrakelsystem insbesondere für das in den Fig. 2 und 3 dargestellte Farbwerk;
- Fig. 5: einen Plattenwechsler in einer ersten Betriebsstellung;
- Fig. 6: den Plattenwechsler der Fig. 5 in einer zweiten Betriebsstellung;
- Fig. 7: eine Speichereinrichtung für Drucktücher;
- Fig. 8: eine Einrichtung für einen senkrechten Transport der Speichereinrichtung gemäß der Fig. 7;
- Fig. 9: eine Einrichtung für einen waagerechten Transport von jeweils einem der Drucktücher zwischen der Speichereinrichtung gemäß der Fig. 7 und einem Montageort an einem Segmentrad in der Vorrichtung gemäß der Fig. 1;
- Fig. 10: die Speichereinrichtung der Fig. 7 in ihrem an der für ihren senkrechten Transport vorgesehenen Einrichtung angeordneten Betriebszustand;
- Fig. 11: die Einrichtung für einen waagerechten Transport von jeweils einem der Drucktücher gemäß Fig. 9 im Querschnitt mit einem aufgestellten Spachtel zum Abnehmen eines gebrauchten Drucktuchs vom Segmentrad;
- Fig. 12: eine perspektivische Darstellung der Einrichtung für einen waagerechten Transport von jeweils einem der Drucktücher gemäß Fig. 9 mit dem aufgestellten Spachtel;
- Fig. 13: die Vorrichtung zum Bedrucken bzw. zur Dekoration von jeweils eine Mantelfläche aufweisenden Hohlkörpern gemäß der Fig. 1 mit einer schematischen Darstellung der Segmente des Segmentrades;
- Fig. 14: eine perspektivische Einzeldarstellung des Segmentrades mit seiner Welle;
- Fig. 15: eine perspektivische Einzeldarstellung des das Segmentrad rotativ antreibenden Antriebs;
- Fig. 16: eine Schnittdarstellung des Segmentrades mit seinem Antrieb im in der Vorrichtung zum Bedrucken von Hohlkörpern angeordneten Zustand;
- Fig. 17: das Segmentrad mit auswechselbaren Segmenten;
- Fig. 18: ein einzelnes wechselbares Segment;
- Fig. 19: die Vorrichtung zum Bedrucken von Hohlkörpern mit mehreren Einzelantrieben;
- Fig. 20: einen eine Zuführung der Hohlkörper betreffenden Ausschnitt aus der Fig. 19;
- Fig. 21: eine schematische Darstellung eines Antriebskonzeptes für ein Förderrad und ein Mandrelrad;
- Fig. 22: eine mit dem Förderrad zusammenwirkende Saugeinrichtung.

Das Bedrucken insbesondere der Mantelfläche eines Hohlkörpers mit einem z. B. mehrfarbigen Druckmotiv, d. h. mindestens einem Druckbild, erfolgt in einer bevorzugten Ausführung in einem Hochdruckverfahren. Alternative oder zusätzliche Druckverfahren sind z. B. ein Siebdruckverfahren oder ein Offsetdruckverfahren oder ein druckformloses Digitaldruckverfahren. Im Folgenden wird die Erfindung beispielhaft in Verbindung mit einem indirekten Hochdruckverfahren beschrieben, bei dem Druckfarbe zunächst auf ein Drucktuch und erst von dort auf die Mantelfläche eines Hohlkörpers aufgetragen wird. Zur Ausführung dieses speziellen Hochdruckverfahrens wird als Druckform ein Druckklischee auf einer Mantelfläche eines Plattenzylinders angeordnet, weshalb dieser Zylinder mitunter auch als Klischeezylinder bezeichnet wird, insbesondere wenn das Druckklischee z. B. an einer auf dem Zylinder aufgezogenen Sleevehülse angeordnet ist bzw. wird. Der im Weiteren verwendete allgemeinere Begriff "Druckformzylinder" schließt grundsätzlich beide Ausführungsformen ein, d. h. die klassische Ausführung als Plattenzylinder als auch die Ausführung als ein "Klischeezylinder". Das für den Druckprozess einsatzfertige Druckklischee ist eine Druckform mit einem Druckrelief, wobei dieses Druckrelief das für den Druckprozess des indirekten Hochdruckverfahrens vorgesehene Druckbild im Gegensatz zum klassischen, d. h. direkten Hochdruckverfahren ungespiegelt wiedergibt, wobei in einem störungsfreien Druckbetrieb nur das Druckrelief an der Übertragung der dem Plattenzylinder vom Farbwerk zugeführten Druckfarbe auf mindestens ein mit diesem Plattenzylinder zusammenwirkenden Drucktuch beteiligt ist. Die auf einem Plattenzylinder aufzuziehende Druckform bzw. das Druckklischee weist einen plattenförmigen vorzugsweise biegsamen Träger endlicher Länge z. B. aus einem Stahlblech auf, wobei auf diesem Träger ein insbesondere flexibler Druckkörper angeordnet ist. Zumindest die in Umfangsrichtung des Plattenzylinders gegenüberliegenden Enden des Trägers können z. B. entsprechend der Krümmung der Mantelfläche des Plattenzylinders vorgebogen oder auch abgewinkelt sein, um eine leichtere Montage der Druckform, d. h. hier insbesondere des Druckklischees auf dem Plattenzylinder zu ermöglichen. Der Träger der Druckform bzw. des Druckklischees hat eine Dicke im Bereich von z. B. 0,2 mm bis 0,3 mm. Das Druckklischee hat einschließlich seines Trägers eine Gesamtdicke im Bereich von z. B. 0,7 mm bis 1,0 mm, vorzugsweise etwa 0,8 mm. Der Druckkörper ist z. B. aus einem Kunststoff gebildet. Der Druckkörper wird zur Herstellung des für den Druckprozess einsatzfähigen Druckklischees z. B. mit einem das Druckbild wiedergebenden Negativfilm belichtet, wobei nicht belichtete Stellen anschließend vom Druckkörper z. B. durch Auswaschen oder mittels eines Lasers entfernt werden.

Eine Vorrichtung zum Bedrucken bzw. zur Dekoration von insbesondere jeweils eine vorzugsweise zylindrische Mantelfläche aufweisenden Hohlkörpern weist vorzugsweise mehrere, z. B. acht oder zehn oder noch mehr Druckwerke - auch Druckstationen genannt - auf, wobei mindestens eines dieser Druckwerke, in der bevorzugten Ausführung alle diese Druckwerke jeweils einen rotierbaren Druckformzylinder, insbesondere einen als Plattenzylinder ausgebildeten Druckformzylinder aufweisen. Dabei sind die Druckwerke oder Druckstationen und gegebenenfalls auch die Druckformzylinder in dieser Vorrichtung jeweils in einem Gestell gelagert und können in demselben Druckprozess verwendet werden, um auf demselben Hohlkörper ein entsprechend der Zahl der beteiligten Druckwerke bzw. Druckformzylinder mehrfarbiges Druckmotiv auszubilden. Die Lagerung der Druckformzylinder bzw. Plattenzylinder erfolgt jeweils vorzugsweise beidendig, sie kann jedoch auch als eine fliegende Lagerung ausgebildet sein, bei der der betreffende Druckformzylinder bzw. Plattenzylinder nur an einer seiner Stirnseiten jeweils z. B. auf einem vorzugsweise konischen Zapfen gelagert ist. An der Mantelfläche jeden Plattenzylinders ist i. d. R. jeweils nur ein einziges Druckklischee angeordnet, wobei der Träger des Druckklischees den Umfang des betreffenden Plattenzylinders vollständig oder zumindest größtenteils, insbesondere zu mehr als 80% umspannt. Eine in Umfangsrichtung des betreffenden Plattenzylinders gerichtete Länge des Druckkörpers des Druckklischees ist vorzugsweise kürzer ausgebildet als die Umfangslänge des betreffenden Plattenzylinders. Die Druckform bzw. das Druckklischee ist mittels seines Trägers insbesondere magnetisch an der Mantelfläche eines jeden Plattenzylinders angeordnet oder zumindest anordenbar, d. h. die Druckform bzw. das Druckklischee wird dort vorzugsweise magnetisch, d. h. mittels einer magnetischen Haltekraft gehalten. In einer alternativen oder ergänzenden Ausführungsvariante der Vorrichtung zum Bedrucken bzw. zur Dekoration von jeweils eine vorzugsweise zylindrische Mantelfläche aufweisenden Hohlkörpern ist mindestens eines der Druckwerke oder es sind auch mehrere dieser Druckwerke jeweils als ein in einem Digitaldruckverfahren druckformlos druckendes Druckwerk ausgebildet, wobei ein solches Druckwerk insbesondere mindestens einen Inkjetdruckkopf oder einen Laser aufweist.

Die insbesondere gleichzeitige Übertragung von mehreren Druckfarben insbesondere auf die Mantelfläche des betreffenden Hohlkörpers erfordert, dass diese Farbübertragung registerhaltig erfolgt, um im Druckprozess eine gute Druckqualität zu erzielen. Für eine registerhaltige Anordnung der Druckform bzw. des Druckklischees auf der Mantelfläche des betreffenden Druckformzylinders bzw. Plattenzylinders sind in der bevorzugten Ausführung an der Mantelfläche des betreffenden Druckformzylinder bzw. Plattenzylinders vorzugsweise mehrere z. B. in ihrer jeweiligen Position jeweils einstellbare Passstifte vorgesehen, welche in korrespondierende an der Druckform bzw. an dem Druckklischee ausgebildete Aussparungen greifen und der Druckform bzw. dem Druckklischee dadurch bei ihrer bzw. seiner Anordnung auf der Mantelfläche des betreffenden Druckformzylinders bzw. Plattenzylinders dort eine definierte Position geben. Insbesondere kann ein Seitenregister der Druckform bzw. des Druckklischees an einer z. B. geschnittenen Seitenkante dieser Druckform bzw. dieses Druckklischees und ein Umfangsregister dieser Druckform bzw. dieses Druckklischees an einem Anschlag ausgerichtet sein. In einer bevorzugten Ausführung hat jeder Druckformzylinder bzw. Plattenzylinder jeweils einen Durchmesser im Bereich zwischen 100 mm und 150 mm, insbesondere zwischen 120 mm und 130 mm, wobei eine axiale Länge des betreffenden Druckformzylinders bzw. Plattenzylinders jeweils z. B. zwischen 200 mm und 250 mm, insbesondere zwischen 200 mm und 220 mm beträgt. Das auf der Mantelfläche des betreffenden Plattenzylinders anzuordnende Druckklischee hat eine in Axialrichtung des betreffenden Plattenzylinders gerichtete Breite im Bereich von 150 mm bis 200 mm, vorzugsweise etwa 175 mm.

Jeder der im Druckprozess verwendeten z. B. als Plattenzylinder ausgebildeten Druckformzylinder überträgt mit seiner Druckform bzw. mit seinem Druckklischee jeweils eine bestimmte Druckfarbe auf ein Drucktuch. Bei den verwendeten Druckfarben handelt es sich i. d. R. um vorgemischte, insbesondere auftragsspezifische Sonderfarben, die hinsichtlich ihrer jeweiligen Verdruckbarkeit in besonderer Weise auf den Werkstoff des zu bedruckenden Hohlkörpers abgestimmt sind, je nachdem, ob eine Oberfläche z. B. aus Aluminium, einem Weißblech oder einem Kunststoff bedruckt wird. In einer bevorzugten Ausführung einer Vorrichtung zum Bedrucken bzw. zur Dekoration von jeweils z. B. eine zylindrische Mantelfläche aufweisenden Hohlkörpern ist eine Druckfarbe von der Druckform bzw. dem Druckklischee auf die Mantelfläche des betreffenden Hohlkörpers übertragende Einrichtung vorgesehen. Diese Druckfarbe übertragende Einrichtung ist vorzugsweise als ein um eine insbesondere horizontale Achse rotierendes Segmentrad ausgebildet, wobei an der Peripherie dieses Segmentrades, d. h. entlang seines Umfangs hintereinander vorzugsweise mehrere, z. B. acht, zehn, zwölf oder noch mehr Drucktücher angeordnet oder zumindest anordenbar sind. Die Druckfarbe übertragende Einrichtung kann als Alternative zum Segmentrad je nach verwendetem Druckverfahren aber auch als eine Dekorationstrommel oder als ein Drucktuchzylinder oder als ein Übertragungszylinder ausgebildet sein, die zumindest beim Drucken jeweils um eine Rotationsachse rotierbar sind. Die Anordnung der Drucktücher am Umfang des Segmentrades erfolgt bislang dadurch, dass die Drucktücher am Umfang des Segmentrades jeweils z. B. durch eine stoffschlüssige Verbindung, vorzugsweise durch eine Klebung angebracht sind. Die vorzugsweise mehreren Druckformzylinder bzw. Plattenzylinder sind jeweils radial an die an dem Umfang des betreffenden Segmentrades angeordneten Drucktücher angestellt oder zumindest anstellbar. In einer besonders bevorzugten Ausführung einer Vorrichtung zum Bedrucken bzw. zur Dekoration von jeweils eine z. B. zylindrische Mantelfläche aufweisenden Hohlkörpern ist entlang des Umfangs des Segmentrades hintereinander eine größere Anzahl von Drucktücher angeordnet, als jeweils an das Segmentrad radial angestellte oder zumindest anstellbare Druckformzylinder bzw. Plattenzylinder vorgesehen sind. Die vorzugsweise karussellartig ausgebildete Druckfarbe übertragende Einrichtung, insbesondere das Segmentrad hat einen Durchmesser von z. B. 1.400 mm bis 1.600 mm, vorzugsweise etwa 1.520 mm bis 1.525 mm, und weist bei z. B. acht zugeordneten Druckformzylindern bzw. Plattenzylindern an seinem Umfang hintereinander z. B. zwölf Drucktücher auf. Die Oberfläche eines jeden Druckklischees ist vorzugsweise mit einer größeren Härte ausgebildet als die Härte der jeweiligen Oberfläche der Drucktücher. Die Oberfläche der Drucktücher ist vorzugsweise plan, d. h. ohne eine Profilierung ausgebildet. In einem Betriebszustand, in dem die an dem Druckprozess beteiligten Druckformzylinder bzw. Plattenzylinder jeweils an die Drucktücher des rotativ angetriebenen Segmentrades radial angestellt sind, rollen die jeweiligen Druckformen dieser Druckformzylinder bzw. die jeweiligen Druckklischees dieser Plattenzylinder auf den mit dem Segmentrad bewegten Drucktüchern ab, wobei die Druckklischees zumindest ihr Druckrelief jeweils in das jeweilige Drucktuch eindrücken. Eine Intensität der Eindrückung ist z. B. vor oder zu Beginn eines Druckprozesses z. B. mittels einer Fernbetätigung durch eine Einstellung einer von dem betreffenden Druckformzylinder bzw. Plattenzylinder auf das betreffende Drucktuch des Segmentrades ausgeübten Anpresskraft einstellbar bzw. wird derart eingestellt.

Die hier beispielhaft zu bedruckenden Hohlkörper, z. B. die zu bedruckenden Zweiteildosen, werden z. B. mittels einer die zu bedruckenden Hohlkörper vorzugsweise entlang zumindest eines Teils einer Kreisbahn, d. h. eines Kreisbogens um eine Rotationsachse transportierenden Transporteinrichtung, vorzugsweise mittels mindestens eines Zuführrades, insbesondere mittels eines Mandrelrades kontinuierlich oder in einem eingestellten Takt an jeweils zumindest eines der zur Vorrichtung zum Bedrucken jeweils einer Mantelfläche von Hohlkörpern gehörenden Druckwerke herangeführt und damit in einen Druckbereich von mindestens einem dieser Druckwerke transportiert. Insbesondere werden die zu bedruckenden Hohlkörper mittels der Transporteinrichtung an jeweils zumindest eines der z. B. auf dem Segmentrad angeordneten Drucktücher herangeführt, oder die zu bedruckenden Hohlkörper werden mittels dieser Transporteinrichtung jeweils direkt und unmittelbar, d. h. ohne Zuhilfenahme einer z. B. als Segmentrad ausgebildeten Druckfarbe übertragenden Einrichtung in den jeweiligen Druckbereich von mindestens einem dieser Druckwerke transportiert, was z. B. der Fall ist, wenn das betreffende Druckwerk in einem Direktdruckverfahren, z. B. in einem Inkjetdruckverfahren druckt.

Das wie z. B. das Segmentrad gleichfalls um eine vorzugsweise horizontale Achse rotierende Zuführrad oder Mandrelrad weist konzentrisch zu seiner Umfangslinie in vorzugsweise äquidistanter Verteilung mehrere, z. B. 24 oder 36 Halteeinrichtungen - kurz: Halter - z. B. jeweils in Form eines aus einer Stirnseite des Mandrelrades auskragenden Aufspanndorns oder einer Spindel auf, wobei von jedem Halter jeweils einer der zu bedruckenden Hohlkörper gehalten wird oder zumindest gehalten werden kann. Eine als Mandrelrad ausgebildete Transporteinrichtung wird mitunter auch als ein Drehtisch mit Spindeln bezeichnet. Ein Mandrelrad ist z. B. in der EP 1 165 318 A1 beschrieben. Eine Beschreibung geeigneter Halter, Spindeln bzw. Aufspanndorne findet sich z. B. in der WO 2011/156052 A1. Im Folgenden wird jeder Aufspanndorn kurz als Dorn bezeichnet. Eine Längsachse jeden Dorns ist dabei parallel zur Achse des Mandrelrades gerichtet. Im Fall von jeweils z. B. als eine Zweiteildose ausgebildeten zu bedruckenden Hohlkörpern wird jeder dieser Hohlkörper z. B. mittels einer Fördereinrichtung, z. B. eines Bandförderers und/oder eines Förderrades, an die z. B. als Mandrelrad ausgebildete Transporteinrichtung herangeführt und dort an einer Übergabestation z. B. mittels Unterdruck saugend auf einen der Dorne des Mandrelrades aufgestülpt und dann von dem betreffenden Dorn gehalten, während die als Mandrelrad ausgebildete Transporteinrichtung den jeweiligen zu bedruckenden Hohlkörper z. B. zu dem mit mindestens einem Drucktuch belegten Segmentrad und damit in Richtung zu mindestens einem der Druckwerke transportiert oder in einer alternativen Ausführung z. B. ohne Segmentrad direkt zu mindestens einem der Druckwerke transportiert. I. d. R. werden dem Mandrelrad mit der Fördereinrichtung in rascher Folge aufeinanderfolgend eine größere Menge an zu bedruckenden Hohlkörpern zugeführt. Eine Fördereinrichtung ist z. B. in der EP 1 132 207 A1 beschrieben.

Zwischen einer Innenwandung des jeweiligen zu bedruckenden Hohlkörpers und der Oberfläche des betreffenden Dorns des Mandrelrades ist vorzugsweise ein Spalt mit einer Weite von weniger als 1 mm, z. B. von 0,2 mm ausgebildet, so dass der zu bedruckende Hohlkörper nicht durch eine Pressung auf dem betreffenden Dorn gehalten wird. Jeder Dorn ist um seine jeweilige Längsachse nahezu reibungslos rotierbar. Jeder der Dorne wird von einem mit dem jeweiligen Dorn zusammenwirkenden Antriebsmittel z. B. mittels Friktion auf eine bestimmte Umfangsgeschwindigkeit eingestellt oder ist zumindest derart einstellbar, so dass jeder von einem Dorn gehaltene zu bedruckende Hohlkörper zusätzlich zur Rotation des Mandrelrades durch eine eigenständig vom Dorn ausgeführte oder zumindest ausführbare Rotation rotierbar ist. Das Aufstülpen des zu bedruckenden Hohlkörpers auf einen der Dorne des Mandrelrades erfolgt vorzugsweise während einer Stillstandsphase des betreffenden Dorns, wobei der betreffende Dorn während seiner Stillstandsphase keine Drehbewegung um seine eigene Längsachse ausführt. Die Belegung eines jeden Dorns mit einem zu bedruckenden Hohlkörper wird vorzugsweise überprüft, z. B. berührungslos mit einem Sensor. Bei einer fehlenden Belegung eines Dorns mit einem zu bedruckenden Hohlkörper wird das Mandrelrad z. B. derart bewegt, dass ein Kontakt des betreffenden freien Dorns und gegebenenfalls noch einiger weniger weiterer Dorne mit einem Drucktuch des Segmentrades zuverlässig vermieden wird.

Zu bedruckende Zweiteildosen werden vor ihrer Zuführung z. B. zum Mandrelrad in einer dem Mandrelrad vorgelagerten Bearbeitungsstation hergestellt, z. B. aus einer Ronde tiefgezogen. In einer weiteren Bearbeitungsstation wird an jeder Zweiteildose ihr Rand an ihrer offenen Stirnseite beschnitten. Jede Zweiteildose wird in weiteren Bearbeitungsstationen z. B. gewaschen, insbesondere ihr Inneres ausgewaschen, gegebenenfalls werden die Innenwandung und der Boden der betreffenden Zweiteildose auch lackiert. Zumindest die äußere Mantelfläche einer jeden Zweiteildose wird z. B. grundiert, insbesondere mit einer weißen Grundierung. Nach dem Bedrucken ihrer Mantelfläche wird jede Zweiteildose von ihrem jeweiligen Halter z. B. am Mandrelrad z. B. durch Druckluft oder durch einen vorzugsweise schaltbaren Magneten abgenommen und mindestens einer dem Mandrelrad nachgeordneten Bearbeitungsstation zugeführt, z. B. einer Lackierstation zum Lackieren der äußeren Mantelfläche einer jeden bedruckten Zweiteildose und/oder einer Randbearbeitungsstation. Die bedruckten Zweiteildosen durchlaufen insbesondere einen Trockner, z. B. einen Heißlufttrockner, um die mindestens eine auf ihre jeweilige Mantelfläche aufgebrachte Druckfarbe auszuhärten.

Der Druckprozess zum Bedrucken insbesondere der jeweiligen Mantelfläche von z. B. an dem Mandrelrad gehaltenen Hohlkörpern, insbesondere Zweiteildosen, beginnt damit, dass alle für das auf der jeweiligen Mantelfläche des Hohlkörpers zu druckende Druckbild erforderlichen Druckfarben jeweils z. B. von dem jeweiligen Druckklischee der z. B. an das Segmentrad angestellten Plattenzylinder auf dasselbe von einem der am Umfang des Segmentrades angeordneten Drucktücher aufgetragen werden. Das betreffende derart mit allen erforderlichen Druckfarben eingefärbte Drucktuch überträgt sodann in einem Berührungskontakt zwischen Drucktuch und der Mantelfläche des zu bedruckenden Hohlkörpers diese Druckfarben gleichzeitig während einer einzigen Umdrehung des auf einem der Dorne des Mandrelrades gehaltenen zu bedruckenden Hohlkörpers um seine Längsachse auf die Mantelfläche dieses Hohlkörpers. Während der Übertragung der Druckfarben vom Drucktuch auf die Mantelfläche des Hohlkörpers rotiert der z. B. von einem der Dorne des Mandrelrades gehaltene zu bedruckende Hohlkörper mit einer betragsgleichen Umfangsgeschwindigkeit wie das betreffende z. B. am Umfang des Segmentrades angeordnete Drucktuch. Die jeweiligen Umfangsgeschwindigkeiten von Hohlkörper und Drucktuch bzw. Segmentrad sind demnach miteinander synchronisiert, wobei der z. B. auf einem der Dorne des Mandrelrades gehaltene zu bedruckende Hohlkörper insbesondere durch ein auf den betreffenden Dorn wirkendes Antriebsmittel z. B. aus seinem Stillstand insbesondere bis zum Erreichen der Umfangsgeschwindigkeit z. B. des Segmentrades entsprechend beschleunigt wird, wobei die Umfangsgeschwindigkeit des betreffenden Dorns des Mandrelrades vorzugsweise beginnend ab einer ersten Kontaktstelle des zu bedruckenden Hohlkörpers mit dem betreffenden Drucktuch während des Abrollens seiner Mantelfläche auf einer Strecke z. B. von den ersten 50 mm von der Umfangslänge des Drucktuches mit der Umfangsgeschwindigkeit des Segmentrades synchronisiert wird. In der bevorzugten Ausführung gibt das das betreffende Drucktuch tragende Segmentrad die z. B. an dem jeweiligen Dorn des Mandrelrades einzustellende Umfangsgeschwindigkeit vor. Auch die Umfangsgeschwindigkeit des die Druckform tragenden Druckformzylinders oder des das Druckklischee tragenden Plattenzylinders wird oder ist vorzugsweise in Abhängigkeit von der Umfangsgeschwindigkeit z. B. des Segmentrades eingestellt. In der bevorzugten Ausführung sind das Mandrelrad und das Segmentrad jeweils durch einen eigenen Antrieb einzeln angetrieben und von einer Steuereinheit in ihrem jeweiligen Rotationsverhalten gesteuert oder geregelt.

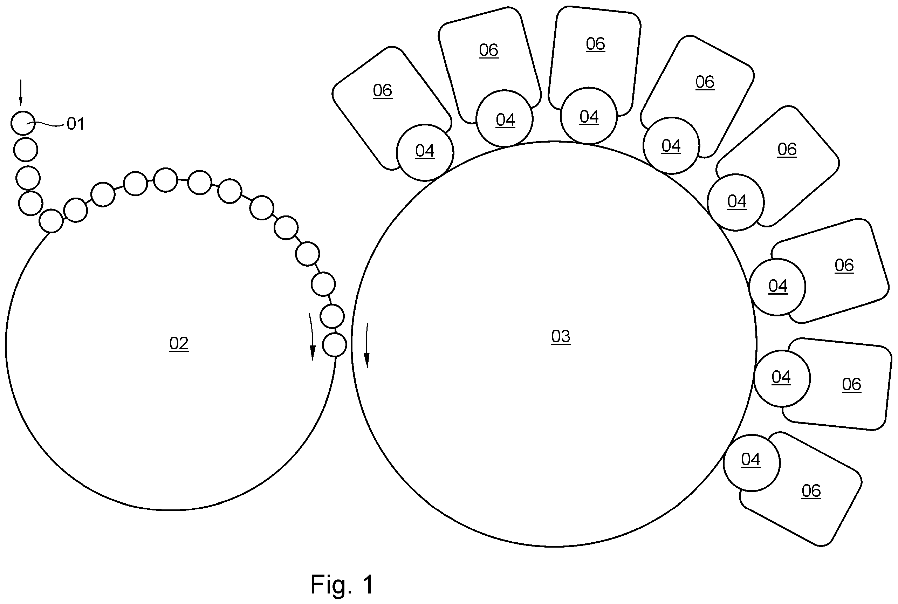

Insbesondere mit Bezug auf die bisher beschriebene Vorrichtung zum Bedrucken bzw. zur Dekoration insbesondere von jeweils eine z. B. zylindrische Mantelfläche aufweisenden Hohlkörpern werden nachfolgend beispielhaft noch verschiedene Einzelheiten erläutert. Fig. 1 zeigt in einer schematischen Darstellung vereinfacht und beispielhaft eine gattungsgemäße Vorrichtung zum Bedrucken bzw. zur Dekoration von insbesondere jeweils eine vorzugsweise zylindrische Mantelfläche aufweisenden Hohlkörpern 01, z. B. Zweiteildosen 01, wobei diese Hohlkörper 01 mit einer Fördereinrichtung sequentiell der z. B. als rotierendes oder zumindest rotierbares Zuführrad, insbesondere als Mandrelrad 02 ausgebildeten Transporteinrichtung zugeführt und dort an dieser Transporteinrichtung einzeln jeweils an einem Halter gehalten werden. Im Folgenden wird aufgrund des gewählten Ausführungsbeispiels für die Druckmaschine bzw. der Vorrichtung zum Bedrucken von Hohlkörpern davon ausgegangen, dass diese Transporteinrichtung als ein Mandrelrad 02 ausgebildet ist. Mit dem Mandrelrad 02 wirkt eine Druckfarbe übertragende Einrichtung, nämlich ein rotierendes oder zumindest rotierbares Segmentrad 03 zusammen, entlang deren bzw. dessen Umfang hintereinander mehrere Drucktücher angeordnet sind. In Zuordnung zum genannten Segmentrad 03 sind entlang dessen Umfangslinie mehrere radia an dieses Segmentrad 03 angestellte oder zumindest anstellbare Druckformzylinder 04, insbesondere Plattenzylinder 04 vorgesehen, wobei auf der jeweiligen Mantelfläche dieser Druckformzylinder 04 bzw. Plattenzylinder 04 jeweils eine Druckform, insbesondere ein Druckklischee angeordnet ist, wobei dieses Druckklischee insbesondere zur Ausführung eines Hochdruckverfahrens ausgebildet ist. Jedem der Druckformzylinder 04 bzw. Plattenzylinder 04 wird zur Einfärbung seiner Druckform bzw. seines Druckklischees mittels eines Farbwerks 06 jeweils eine bestimmte Druckfarbe zugeführt. Im Folgenden wird beispielhaft davon ausgegangen, dass die Druckformzylinder 04 jeweils als ein mindestens ein Druckklischee tragender Plattenzylinder 04 ausgebildet sind.

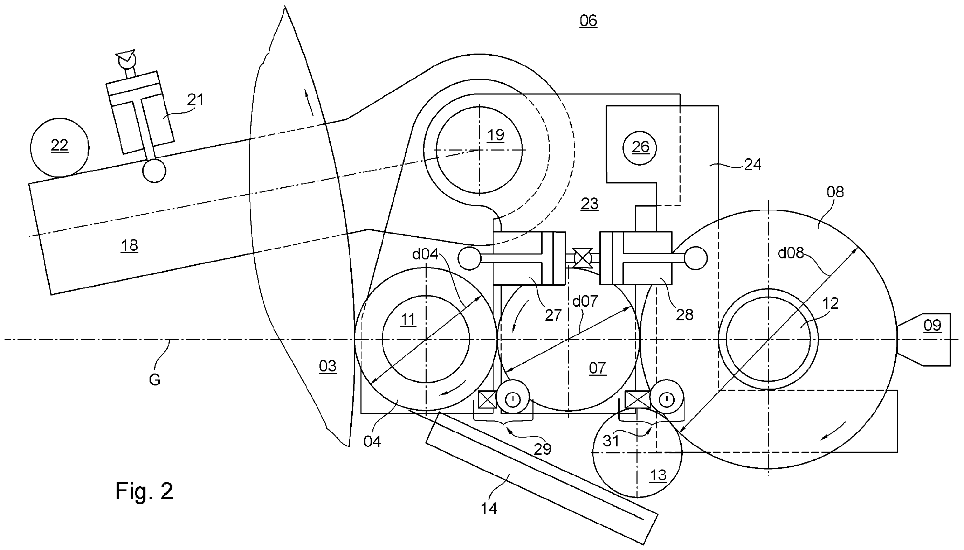

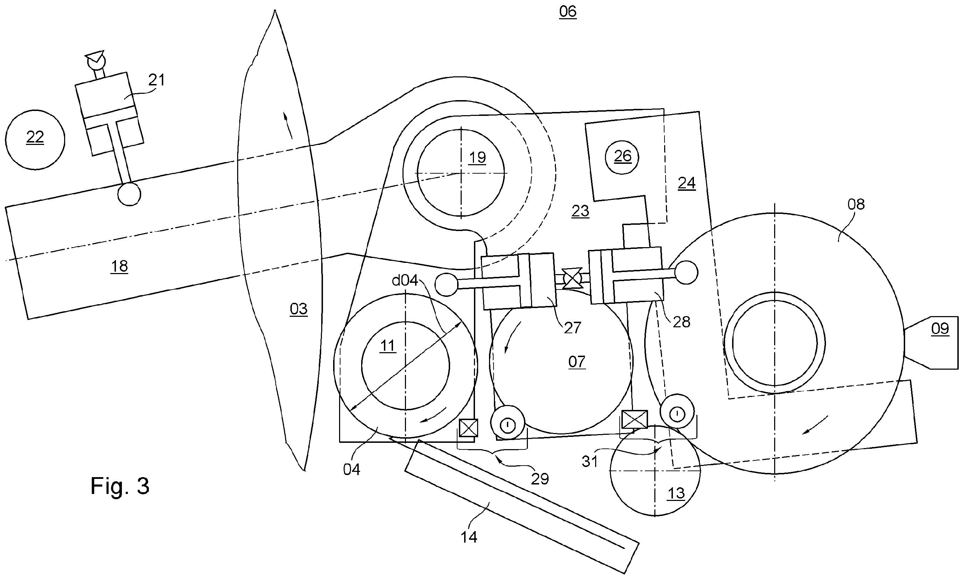

Fig. 2 und 3 zeigen in einer vereinfachten schematischen Darstellung einige Details des jeweils mit einem Plattenzylinder 04 zusammenwirkenden Farbwerks 06, welches z. B. zur Verwendung in der in Fig. 1 dargestellten Vorrichtung zum Bedrucken bzw. zur Dekoration insbesondere von jeweils eine vorzugsweise zylindrische Mantelfläche aufweisenden Hohlkörpern 01 vorgesehen ist. Das hier vorgeschlagene Farbwerk 06 weist für den Farbtransport von einem Farbreservoir zu dem betreffenden Plattenzylinder 04 in vorteilhafter Weise einen sehr kurzen, d. h. aus nur wenigen, vorzugsweise maximal aus fünf Walzen bestehenden, insbesondere zweiwalzigen Walzenzug auf. Im Fall des zweiwalzigen Walzenzuges besteht dieser Walzenzug nur aus einer einzigen Farbauftragswalze 07 und einer Rasterwalze 08. Ein Farbwerk 06 mit einem maximal aus fünf Walzen bestehenden Walzenzug gehört zur Gattung der Kurzfarbwerke. Fig. 2 zeigt beispielhaft ein (Kurz-)Farbwerk 06 mit einem zweiwalzigen Walzenzug in einer ersten Betriebsstellung, bei der die Farbauftragswalze 07 und die Rasterwalze 08 aneinander angestellt, die Farbauftragswalze 07 an den Plattenzylinder 04 angestellt und auch der Plattenzylinder 04 radial an die Druckfarbe vom Plattenzylinder 04 an die Mantelfläche des jeweiligen Hohlkörpers 01 übertragende Einrichtung, insbesondere an das Segmentrad 03 angestellt sind. Fig. 3 zeigt hingegen für das in der Fig. 2 dargestellte Farbwerk 06 eine zweite Betriebsstellung, bei der die Farbauftragswalze 07 und die Rasterwalze 08 voneinander abgestellt, die Farbauftragswalze 07 vom Plattenzylinder 04 abgestellt und auch der Plattenzylinder 04 von der Druckfarbe übertragenden Einrichtung, insbesondere von dem Segmentrad 03 abgestellt sind. Auf den An- und Abstellmechanismus wird später noch eingegangen.

Der Plattenzylinder 04 und die Rasterwalze 08 sind z. B. jeweils eigenständig jeweils von einem Motor 11; 12 rotativ angetrieben, insbesondere bei dem bevorzugt verwendeten in den Fig. 2 und 3 dargestellten Farbwerk 06, wobei der betreffende Motor 11; 12 z. B. in seiner jeweiligen Drehzahl von einer z. B. elektronischen Steuereinheit insbesondere geregelt oder zumindest regelbar ist. Die z. B. als Segmentrad 03 ausgebildete Druckfarbe übertragende Einrichtung ist durch einen eigenen Antrieb rotativ angetrieben. Die Farbauftragswalze 07 ist bzw. wird von der Rasterwalze 08 durch Friktion rotativ angetrieben. In der bevorzugten Ausführung sind ein Außendurchmesser d07 der Farbauftragswalze 07 und ein Außendurchmesser d04 des mindestens eine Druckform, insbesondere mindestens ein Druckklischee tragenden Plattenzylinders 04 betragsmäßig gleich. Auf der Mantelfläche des Plattenzylinders 04 ist mindestens ein Druckklischee angeordnet oder zumindest anordenbar, so dass bei der Ausführungsform mit gleichen Außendurchmessern d04; d07 der das Druckklischee tragende Plattenzylinder 04 und die Farbauftragswalze 07 jeweils eine identische Umfangslänge aufweisen. In der bevorzugten Ausführung sind in der ersten Betriebsstellung des mit dem Plattenzylinder 04 zusammenwirkenden Farbwerks 06, bei der die Farbauftragswalze 07 und die Rasterwalze 08 aneinander angestellt, die Farbauftragswalze 07 an den Plattenzylinder 04 angestellt und auch der Plattenzylinder 04 an das Segmentrad 03 angestellt sind, zumindest die jeweiligen Zentren vom Plattenzylinder 04, der Farbauftragswalze 07 und der Rasterwalze 08 entlang einer selben Geraden G angeordnet. Zur Erfassung der Rotation der Farbauftragswalze 07 ist eine Erfassungseinrichtung z. B. in Form eines Drehgebers vorgesehen, wobei dieser Drehgeber insbesondere starr mit einer Welle der Farbauftragswalze 07 verbunden ist. Das vom Drehgeber bei einer Rotation der Farbauftragswalze 07 generierte Signal wird von der Steuereinheit dazu verwendet, die Drehzahl der Farbauftragswalze 07 mittels der Rotation der Rasterwalze 08 derart einzustellen oder im Bedarfsfall derart nachzuführen, dass sich ein Gleichlauf zwischen dem Plattenzylinder 04 und der Farbauftragswalze 07 einstellt bzw. eingestellt ist, so dass die Umfangsgeschwindigkeit der Farbauftragswalze 07 mit der Umfangsgeschwindigkeit des Plattenzylinders 04 innerhalb zuvor festgelegter zulässiger Toleranzgrenzen übereinstimmt. Zur Erreichung dieses Ziels kann vorgesehen sein, dass die Steuereinheit vorzugsweise während der von ihr ausgeführten Einstellphase die Umfangsgeschwindigkeit der Rasterwalze 08 derart einstellt, dass diese gegenüber der Umfangsgeschwindigkeit des Plattenzylinders 04 insbesondere kurzzeitig - und damit nicht dauerhaft - eine Vor- oder Nacheilung aufweist. Durch die Ausgestaltung von Plattenzylinder 04 und Farbauftragswalze 07 mit jeweils betragsmäßig gleicher Umfangslänge und durch die Einstellung des Gleichlaufs zwischen dem Plattenzylinder 04 und der Farbauftragswalze 07 wird der der Druckqualität abträgliche Effekt des Schablonierens weitgehend vermieden. Das hier beschriebene Antriebskonzept mit einer friktionsgetriebenen Farbauftragswalze 07 hat zudem den Vorteil, dass für die Farbauftragswalze 07 ein eigener Antrieb nicht erforderlich ist, was Kosten spart und zudem wegen der einfacheren mechanischen Konstruktion z. B. bei Wartungs- oder Reparaturarbeiten einen Austausch der Farbauftragswalze 07 erleichtert.

Die Farbauftragswalze 07 weist in ihrer bevorzugten Ausführung eine geschlossene, vorzugsweise gummierte Mantelfläche auf. Die Rasterwalze 08 weist eine z. B. mit einer Keramik beschichtete Mantelfläche auf, wobei in der Keramikschicht eine Haschur von z. B. 60, 80 oder 100 Linien pro Zentimeter axialer Länge der Rasterwalze 08 oder eine Näpfchenstruktur ausgebildet ist. Um mit der Rasterwalze 08 mit jeder ihrer Umdrehungen jeweils eine Einspeisung einer möglichst großen Menge an Druckfarbe in den Walzenzug des Farbwerks 06 zu ermöglichen, ist der Außendurchmesser d08 der Rasterwalze 08 vorzugsweise größer ausgebildet als der Außendurchmesser d07 der Farbauftragswalze 07. Die Rasterwalze 08 soll demnach ein möglichst großes Fördervolumen aufweisen. In der Fig. 2 ist die jeweilige Drehrichtung vom Segmentrad 03, dem Plattenzylinder 04, der Farbauftragswalze 07 und der Rasterwalze 08 jeweils durch einen Drehrichtungspfeil angedeutet.

In der bevorzugten Ausführung weist zumindest die Rasterwalze 08 eine Temperiereinrichtung auf, mit deren Hilfe die Mantelfläche der Rasterwalze 08 temperiert wird. Die Temperiereinrichtung der Rasterwalze 08 arbeitet z. B. mit einem in das Innere der Rasterwalze 08 eingeleiteten Temperierfluid, wobei das Temperierfluid z. B. Wasser oder ein anderes flüssiges Kühlmittel ist. Mit der Temperiereinrichtung der Rasterwalze 08 ist das Fördervolumen der Rasterwalze 08 beeinflussbar, da damit die Viskosität der vom Farbwerk 06 zu transportierenden Druckfarbe beeinflusst wird. Das Fördervolumen der Rasterwalze 08 und die Viskosität der vom Farbwerk 06 zu transportierenden Druckfarbe beeinflussen ihrerseits letztlich eine Farbdichte der auf die zylindrische Mantelfläche des zu bedruckenden Hohlkörpers 01 aufzutragenden Druckfarbe. Eine Dicke eines auf der zylindrische Mantelfläche des zu bedruckenden Hohlkörpers 01 aufzutragenden, durch die Druckfarbe gebildeten Farbfilms liegt z. B. bei weniger als 10 µm, insbesondere in einem Bereich von etwa 2 µm bis 3 µm.

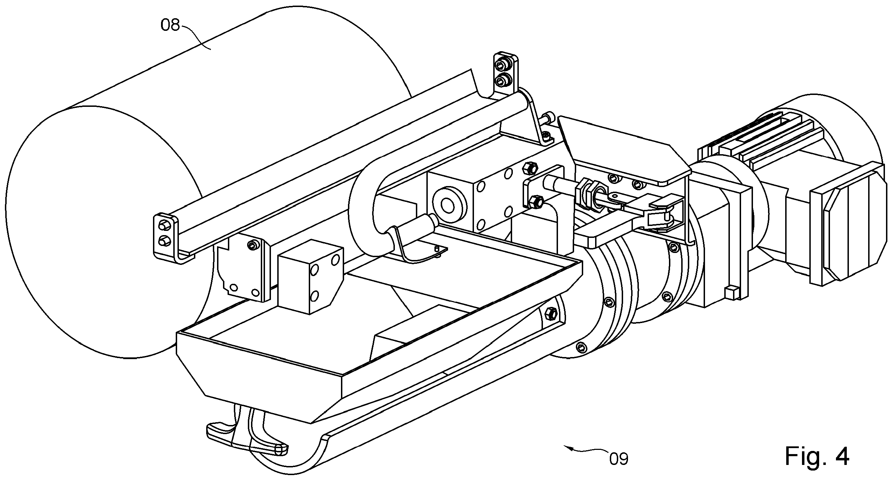

Das Farbreservoir des Farbwerks 06 ist z. B. als ein in Verbindung mit der Rasterwalze 08 wirkendes Kammerrakelsystem 09 ausgebildet. In vorteilhafter Weise bilden bei diesem Kammerrakelsystem 09 zumindest eine Farbwanne, ein achsparallel an die Rasterwalze 08 angestellter oder zumindest anstellbarer Rakelbalken und vorzugsweise auch eine Pumpe zur Förderung der Druckfarbe eine einzige Baueinheit. Dabei ist dieses Kammerrakelsystem 09 im Farbwerk 06, d. h. an einem Gestell des Farbwerks 06 vorzugsweise nur einseitig z. B. durch eine Aufhängung gehalten bzw. gelagert, so dass diese Baueinheit auf einfache Weise nach ihrem Lösen vom Gestell des Farbwerks 06 seitlich, d. h. durch eine achsparallel zur Rasterwalze 08 gerichtete Bewegung, z. B. durch ein Ziehen an einem an dieser Baueinheit angeordneten Griff aus dem Farbwerk 06 entfernbar und damit austauschbar ist. Diese Baueinheit des Kammerrakelsystems 09 bildet vorzugsweise einen Kragarm an einem Seitengestell des Farbwerks 06. Fig. 4 zeigt in einer perspektivischen Darstellung das als eine einzige Baueinheit ausgebildete Kammerrakelsystem 09 im Zusammenwirken mit der Rasterwalze 08 des Farbwerks 06.

Nachdem die Rasterwalze 08 Druckfarbe vom Farbreservoir, d. h. insbesondere von dem Kammerrakelsystem 09 aufgenommen hat, transportiert die Rasterwalze 08 diese Druckfarbe unmittelbar und direkt oder über weitere Walzen des zum Farbwerk 06 gehörenden Walzenzuges zu der vorzugsweise nur einen Farbauftragswalze 07. In einem in Drehrichtung der Rasterwalze 08 dem an die Rasterwalze 08 angestellten Kammerrakelsystem 09 nachfolgenden Bereich zwischen dem Kammerrakelsystem 09 und der Farbauftragswalze 07 ist vorzugsweise eine Reiterwalze 13 an die Rasterwalze 08 angestellt oder zumindest anstellbar, um den Farbtransport der Rasterwalze 08 zu verbessern. Die Reiterwalze 13 ist achsparallel zur Rasterwalze 08 angeordnet. Die Reiterwalze 13 wird nicht als zum Walzenzug des Farbwerks 06 gehörend betrachtet, da sie keine Druckfarbe von der Rasterwalze 08 an eine andere Walze überträgt. Die von der Rasterwalze 08 z. B. durch Friktion rotativ angetriebene Reiterwalze 13 weist z. B. eine gummierte Mantelfläche auf. Die an die Rasterwalze 08 angestellte Reiterwalze 13 saugt bei ihrem Abrollen auf der Mantelfläche der Rasterwalze 08 einen Teil der von der Rasterwalze 08 vom Kammerrakelsystem 09 aufgenommenen Druckfarbe aus der Haschur oder den Näpfchen der Rasterwalze 08 und legt diese Druckfarbe zumindest teilweise auf an der Mantelfläche der Rasterwalze 08 ausgebildeten Stegen ab. Dadurch bewirkt die auf der Rasterwalze 08 abrollende Reiterwalze 13, dass die Rasterwalze 08 eine größere Menge an Druckfarbe an die Farbauftragswalze 07 abgibt. In einer weiteren Folge wird bei einer z. B. eine Temperiereinrichtung aufweisenden Rasterwalze 08 auch die Wirksamkeit einer Steuerung der Farbdichte dadurch verbessert, dass die auf der Rasterwalze 08 abrollende Reiterwalze 13 zur Bereitstellung einer größeren Menge an Druckfarbe beiträgt. Die auf der Rasterwalze 08 abrollende Reiterwalze 13 reduziert somit ungeachtet der konkreten Ausgestaltung der Rasterwalze 08, d. h. mit oder ohne einer Temperiereinrichtung, sowohl Dichteunterschiede, die durch Fertigungstoleranzen der Rasterwalze 08 entstehen können, als auch das Risiko einer Sichtbarkeit der Haschur oder Näpfchen der Rasterwalze 08 auf dem Bedruckstoff, d. h. hier auf der Mantelfläche des zu bedruckenden Hohlkörpers 01 infolge eines zumindest stellenweise zu geringen Farbauftrags.

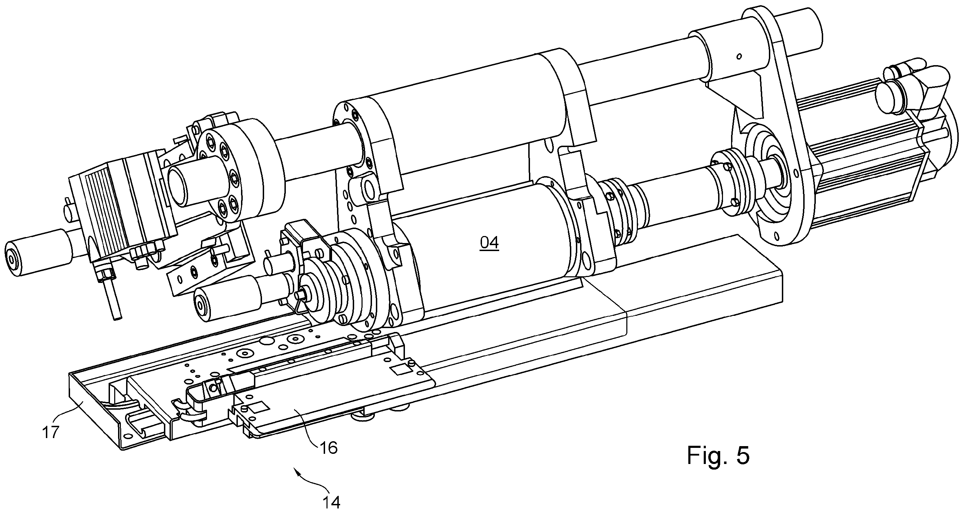

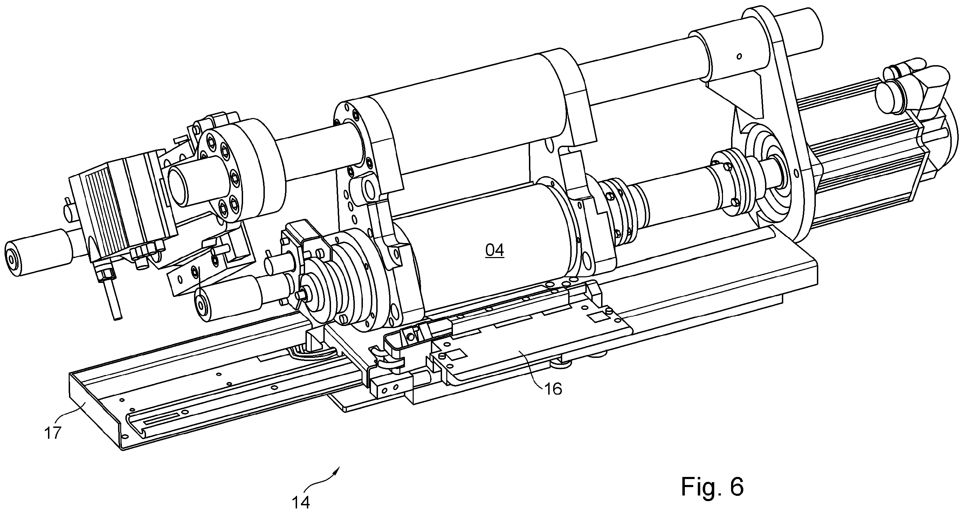

In einer sehr vorteilhaften Ausbildung der Vorrichtung zum Bedrucken von Hohlkörpern ist vorzugsweise in fester Zuordnung z. B. zu jedem Druckformzylinder, insbesondere Plattenzylinder 04 jeweils ein Plattenwechsler 14 vorgesehen, mit welchem die für den betreffenden Druckformzylinder bestimmte Druckform oder das für den betreffenden Plattenzylinder 04 bestimmte Druckklischee innerhalb z. B. der betreffenden Vorrichtung zum Bedrucken bzw. zur Dekoration von jeweils eine insbesondere zylindrische Mantelfläche aufweisenden Hohlkörpern 01 vorzugsweise automatisiert auswechselbar ist. Die Fig. 5 und 6 zeigen in einer perspektivischen Darstellung eine bevorzugte Ausführung eines sehr vorteilhaft ausgebildeten Plattenwechslers 14 in zwei verschiedenen Betriebsstellungen zur Ausführung eines z. B. bei einem Produktionswechsel in sehr kurzer Rüstzeit vorzugsweise automatisiert, zuverlässig und vorzugsweise auch registerhaltig vollziehbaren Plattenwechsels bzw. Druckformwechsels. Fig. 5 zeigt eine erste Betriebsstellung, in der axial seitlich neben dem Druckwerk am Druckformzylinder bzw. Plattenwechsler 14 z. B. ein Druckklischee vorgelegt oder vom Plattenwechsler 14 entnommen werden kann. Fig. 6 zeigt eine zweite Betriebsstellung, in der unmittelbar vor dem Druckformzylinder bzw. Plattenzylinder 04 längs zu diesem vom Plattenwechsler 14 aus z. B. ein Druckklischee direkt an dem zugeordneten Plattenzylinder 04 aufgelegt oder ein Druckklischee vom Plattenzylinder 04 abgenommen und mit dem Plattenwechsler 14 in dessen erste Betriebsstellung abgeführt werden kann. Der Plattenwechsler 14 weist eine insbesondere plane, z. B. tischförmige Auflagefläche 16 auf, auf welcher z. B. ein an dem Plattenzylinder 04 angeordnetes oder anzuordnendes Druckklischee vorzugsweise vollständig aufgelegt werden kann. Die Auflagefläche 16 ist vorzugsweise linear längs eines Transportweges, insbesondere längs zur Rotationsachse des zugeordneten Druckformzylinders bzw. Plattenzylinders 04 zwischen mindestens zwei definierten Positionen bidirektional bewegbar, d. h. hin- und herbewegbar angeordnet. In einer seitlich neben dem Druckwerk befindlichen ersten Position der Auflagefläche 16 nimmt der Plattenwechsler 14 seine erste Betriebsstellung ein, in einer unmittelbar vor dem Druckformzylinder bzw. Plattenzylinder 04 längs zu diesem befindlichen zweiten Position der Auflagefläche 16 seine zweite Betriebsstellung. In der ersten Betriebsstellung befindet sich die Auflagefläche 16 des Plattenwechslers 14 zumindest teilweise vor einer Stirnseite des betreffenden Druckformzylinders bzw. Plattenzylinders 04. In der zweiten Betriebsstellung befindet sich die Auflagefläche 16 des Plattenwechslers 14 vorzugsweise zumindest teilweise unterhalb der Mantelfläche des Druckformzylinders bzw. Plattenzylinders 04. Die Bewegung der Auflagefläche 16 des Plattenwechslers 14 erfolgt z. B. entlang einer längs zum Druckformzylinder bzw. Plattenzylinder 04 angeordneten Traverse 17. Die Auflagefläche 16 des Plattenwechslers 14 hat somit einen mit Bezug auf den betreffenden Druckformzylinder bzw. Plattenzylinder 04 axialen Verfahrweg. An den die erste oder die zweite Betriebsstellung des Plattenwechslers 14 definierenden Positionen ist die Bewegung der Auflagefläche 16 z. B. jeweils durch einen Anschlag begrenzt. Zumindest der Träger des betreffenden Druckklischees ist z. B. durch einen insbesondere unter Verwendung von Passermarken ausgeführten Beschnitt derart ausgebildet, dass das betreffende Druckklischee auf der Auflagefläche 16 des Plattenwechslers 14 registerhaltig angeordnet werden kann. Dazu werden zumindest zwei in einem rechten Winkel zueinander angeordnete Kanten des Trägers des betreffenden Druckklischees in einen Berührungskontakt zu an der Auflagefläche 16 des Plattenwechslers 14 angeordneten, insbesondere von Registerstiften gebildeten Anschlägen gebracht, wobei eine erste Kante des Trägers des betreffenden Druckklischees an einen ersten Registerstift und eine zur ersten Kante orthogonale zweite Kante des Trägers des betreffenden Druckklischees an einen zweiten Registerstift anschlägt, wobei einer dieser beiden Registerstifte in seiner Position veränderbar und vorzugsweise einstellbar ist. Durch die Einstellung des in seiner Position veränderbaren Registerstiftes ist z. B. das betreffende Druckklischee registerhaltig ausrichtbar. Die Einstellung des in seiner Position veränderbaren Registerstiftes kann manuell oder automatisiert erfolgen. Da das Druckklischee dem betreffenden Plattenzylinder 04 registerhaltig zugeführt wird, ist am Plattenzylinder 04 z. B. kein Zentrierstift und auch keine andere Registereinrichtung vorgesehen.

Der Plattenwechsler 14 weist in seiner bevorzugten Ausführung außer der Auflagefläche 16 zur Aufnahme eines z. B. dem Plattenzylinder 04 insbesondere registerhaltig zuzuführenden Druckklischees z. B. ein Fach auf, in welches z. B. ein vom Plattenzylinder 04 abgenommenes Druckklischee abgelegt werden kann. Ein z. B. mittels seines Trägers insbesondere magnetisch an der Mantelfläche des betreffenden Plattenzylinders 04 gehaltenes Druckklischee wird z. B. mittels eines tangential zur Druckform geführten Werkzeugs, z. B. mittels eines zwischen den Träger des Druckklischees und der Mantelfläche des betreffenden Plattenzylinders 04 geführten Spachtels von der Mantelfläche des betreffenden Plattenzylinders 04 abgehoben oder ist von dort zumindest abhebbar. Das von der Mantelfläche des betreffenden Plattenzylinders 04 abgehobene eine Ende des betreffenden Druckklischees wird durch eine Drehung des betreffenden Plattenzylinders 04 in das betreffende Fach des Plattenzylinders 04 eingeführt. Durch eine Fortsetzung dieser Drehung des betreffenden Plattenzylinders 04 wird dann das gesamte von der Mantelfläche des betreffenden Plattenzylinders 04 gelöste Druckklischee in das betreffende Fach des Plattenwechslers 14 eingeschoben.

Ein dem betreffenden Plattenzylinder 04 vorzugsweise registerhaltig zuzuführendes Druckklischee wird insbesondere nach seiner registerhaltigen Ausrichtung durch eine magnetische Haltekraft auf der Auflagefläche 16 des Plattenwechslers 14 gehalten. Es ist mindestens ein Stempel, vorzugsweise sind zwei in Längsrichtung des betreffenden Plattenzylinders 04 beabstandet angeordnete Stempel jeweils mit einer der magnetischen Haltekraft entgegen gerichteten, zur Auflagefläche 16 des Plattenwechslers 14 z. B. im Wesentlichen orthogonalen Wirkrichtung vorgesehen, mit welchem mindestens einen Stempel zumindest ein dem betreffenden Plattenzylinder 04 zugewandtes Ende des an der Auflagefläche 16 des Plattenwechslers 14 gehaltenen Druckklischees von dieser Auflagefläche 16 lösbar und aufgrund einer Hubbewegung des mindestens einen Stempels an den betreffenden Plattenzylinder 04 übergebbar ist. Der mindestens eine Stempel wird z. B. pneumatisch betätigt oder ist zumindest derart betätigbar. Zum Halten der Druckform bzw. des Druckklischees an der Auflagefläche 16 des Plattenwechslers 14 oder auf der Mantelfläche des Plattenzylinders 04 werden jeweils Magnete verwendet, wobei diese Magnete vorzugsweise jeweils als ein Dauermagnet ausgebildet sind. Die zuvor beschriebene Ausgestaltung des Plattenzylinders 04 hat den Vorteil, dass eine Fördereinrichtung für das Übergeben des Druckklischees an den betreffenden Plattenzylinder 04 oder für das Abnehmen des Druckklischees von dem betreffenden Plattenzylinder 04 nicht erforderlich ist und der Plattenwechsler 14 daher sehr kostengünstig realisiert werden kann. Insbesondere ist ein Plattenwechsel mit dem zuvor beschriebenen Plattenwechsler 14 automatisiert ausführbar.

Die jeweilige Anstellung und/oder Abstellung von Druckformzylinder bzw. Plattenzylinder 04, Farbauftragswalze 07 und/oder Rasterwalze 08 und/oder eine Einstellung einer von ihnen jeweils ausgeübten Anpresskraft erfolgt mit einem beispielhaft in den Fig. 2 und 3 dargestellten An- und Abstellmechanismus, der nun näher beschrieben wird. In der bevorzugten Ausführung ist der Druckformzylinder bzw. Plattenzylinder 04 insbesondere beidendig an einem Lastarm einer aus einem Kraftarm und dem Lastarm bestehenden vorzugsweise einseitigen ersten Hebelanordnung 18 gelagert, wobei der Kraftarm und der winkelfest zum Kraftarm angeordnete Lastarm dieser ersten Hebelanordnung 18 gemeinsam um eine achsparallel zum Plattenzylinder 04 gerichtete erste Drehachse 19 schwenkbar sind. In einer Wirkverbindung zum Kraftarm der ersten Hebelanordnung 18 ist zur Ausübung eines Drehmomentes um die erste Drehachse 19 ein vorzugsweise von einer Steuereinheit steuerbarer erster Antrieb 21 z. B. in Form eines hydraulischen oder pneumatischen Arbeitszylinders angeordnet, wobei bei einer Betätigung dieses ersten Antriebs 21 je nach dessen Wirkrichtung der am Lastarm dieser ersten Hebelanordnung 18 angeordnete Druckformzylinder bzw. Plattenzylinder 04 entweder von einem Drucktuch z. B. des Segmentrades 03 abgestellt oder an selbiges angestellt wird. Zur Begrenzung der vom Druckformzylinder bzw. Plattenzylinder 04 gegen das betreffende Drucktuch z. B. des Segmentrades 03 ausgeübten Anpresskraft ist beispielsweise für den Kraftarm der ersten Hebelanordnung 18 ein erster Anschlag 22 vorgesehen, mittels welchem ein durch die Schwenkbewegung des Druckformzylinders bzw. Plattenzylinders 04 gegen das Segmentrad 03 zurückgelegter Weg begrenzt wird. Mit dem ersten Antrieb 21 ist die vom Druckformzylinder bzw. Plattenzylinder 04 gegen das Segmentrad 03 ausgeübte Anpresskraft eingestellt oder zumindest einstellbar.

In der bevorzugten Ausführung ist auch die Farbauftragswalze 07 insbesondere beidendig an einem Lastarm einer aus einem Kraftarm und dem Lastarm bestehenden vorzugsweise einseitigen zweiten Hebelanordnung 23 gelagert, wobei der Kraftarm und der Lastarm dieser zweiten Hebelanordnung 23 gemeinsam um die achsparallel zum Plattenzylinder 04 gerichtete erste Drehachse 19 schwenkbar sind. Ebenso ist in der bevorzugten Ausführung auch die Rasterwalze 08 insbesondere beidendig an einem Lastarm einer aus einem Kraftarm und dem Lastarm bestehenden vorzugsweise einseitigen dritten Hebelanordnung 24 gelagert, wobei der Kraftarm und der Lastarm dieser dritten Hebelanordnung 24 gemeinsam um eine achsparallel zur Rasterwalze 08 gerichtete zweite Drehachse 26 schwenkbar sind, wobei die zweite Drehachse 26 der dritten Hebelanordnung 24 an der zweiten Hebelanordnung 23 angeordnet ist, wobei die zweite Drehachse 26 an der zweiten Hebelanordnung 23 ortsfest ausgebildet ist. Am Lastarm der ersten Hebelanordnung 18 ist ein bei seiner Betätigung auf den Kraftarm der zweiten Hebelanordnung 23 wirkender vorzugsweise steuerbarer zweiter Antrieb 27 angeordnet, mittels welchem die Farbauftragswalze 07 je nach Wirkrichtung des zweiten Antriebs 27 an den Plattenzylinder 04 anstellbar oder von diesem abstellbar. Am Lastarm der zweiten Hebelanordnung 23 ist ein bei seiner Betätigung auf den Kraftarm der dritten Hebelanordnung 24 wirkender vorzugsweise steuerbarer dritter Antrieb 28 angeordnet, mittels welchem die Rasterwalze 08 vorzugsweise mitsamt dem Kammerrakelsystem 09 je nach Wirkrichtung des dritten Antriebs 28 an die Farbauftragswalze 07 anstellbar oder von dieser abstellbar. Der zweite Antrieb 27 und/oder der dritte Antrieb 28 sind jeweils z. B. auch in Form eines hydraulischen oder pneumatischen Arbeitszylinders ausgebildet. Es kann vorgesehen sein, dass der zweite Antrieb 27 und der dritte Antrieb 28 z. B. gemeinsam und vorzugsweise auch gleichzeitig betätigt werden oder zumindest betätigbar sind. Die Schwenkbewegung des Lastarms der zweiten Hebelanordnung 23 ist z. B. durch ein vorzugsweise einstellbares, insbesondere durch einen Exzenter einstellbares erstes Anschlagssystem 29 begrenzt, wodurch auch die von der Farbauftragswalze 07 gegen den Druckformzylinder bzw. Plattenzylinder 04 ausgeübte Anpresskraft begrenzt oder zumindest begrenzbar ist. Die Schwenkbewegung des Lastarms der dritten Hebelanordnung 24 ist z. B. durch ein vorzugsweise einstellbares, insbesondere durch einen Exzenter einstellbares zweites Anschlagssystem 31 begrenzt, wodurch auch die von der Rasterwalze 08 gegen die Farbauftragswalze 07 ausgeübte Anpresskraft begrenzt oder zumindest begrenzbar ist. Fig. 2 zeigt beispielhaft einen ersten Betriebszustand, bei dem der erste Antrieb 21 und der zweite Antrieb 27 und der dritte Antrieb 28 jeweils unbetätigt oder in ihrem Ruhezustand sind, wodurch die Rasterwalze 08 an die Farbauftragswalze 07 und die Farbauftragswalze 07 an den Druckformzylinder bzw. Plattenzylinder 04 und der Druckformzylinder bzw. Plattenzylinder 04 an das Segmentrad 03 jeweils angestellt sind. Fig. 3 zeigt beispielhaft einen zweiten Betriebszustand, bei dem der erste Antrieb 21 und der zweite Antrieb 27 und der dritte Antrieb 28 jeweils betätigt und damit in ihrem jeweiligen Arbeitszustand sind, wodurch die Rasterwalze 08 von der Farbauftragswalze 07 und die Farbauftragswalze 07 vom Druckformzylinder bzw. Plattenzylinder 04 und der Druckformzylinder bzw. Plattenzylinder 04 vom Segmentrad 03 jeweils abgestellt sind. Der jeweilige Kraftarm und/oder Lastarm der drei vorgenannten Hebelanordnungen 18; 23; 24 ist bzw. sind jeweils z. B. als ein Paar von gegenüber stehenden Hebelstangen oder Seitengestellwänden ausgebildet, zwischen denen in der jeweiligen zuvor beschriebenen Zuordnung entweder der Druckformzylinder bzw. Plattenzylinder 04 oder die Farbauftragswalze 07 oder die Rasterwalze 08 angeordnet ist. Die drei vorgenannten Hebelanordnungen 18; 23; 24 sind jeweils in unterschiedlichen voneinander beabstandeten vertikalen Ebenen angeordnet, so dass sie sich in ihrer jeweiligen Schwenkbarkeit nicht gegenseitig behindern.

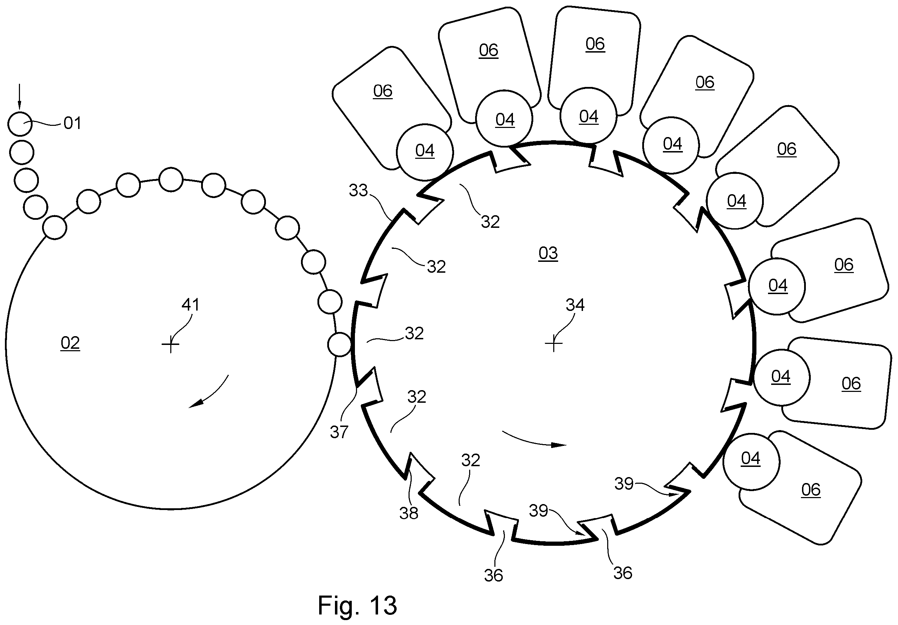

Wie bereits beschrieben und in Fig. 13 dargestellt, sind am Umfang des Segmentrades 03 hintereinander i. d. R. mehrere, z. B. acht bis zwölf Drucktücher 33 angeordnet, wobei im Druckprozess während der Rotation dieses Segmentrades 03 um eine Rotationsachse 34 Druckformen der Druckformzylinder bzw. Druckklischees der Plattenzylinder 04 auf den mit diesem Segmentrad 03 bewegten Drucktüchern 33 abrollen. Während des Abrollens drücken die Druckklischees, d. h. zumindest ihr Druckrelief jeweils z. B. 0,2 mm bis 0,25 mm tief in das jeweilige Drucktuch 33 ein, wodurch die Drucktücher einem Verschleiß unterliegen und in Abhängigkeit von ihrer Beschaffenheit und insbesondere mechanischen Beanspruchung nach einer gewissen Anzahl von Drucken, z. B. nach 50.000 bedruckten Hohlkörpern 01 erneuert werden müssen. Wenn in einer dieses Segmentrad 03 aufweisenden Vorrichtung zum Bedrucken oder zur Dekoration von Hohlkörpern 01, d. h. in einem sogenannten Dekorator, in einer Massenfertigung z. B. mehrere hundert oder gar einige tausend Stück dieser Hohlkörper 01 pro Minute, z. B. zwischen 1.500 und 3.000 Stück pro Minute gefertigt werden, dann steht die Erneuerung der am Umfang des Segmentrades 03 angeordneten Drucktücher 33 recht häufig an, unter Umständen halbstündlich oder circa nach jeder dreiviertel Stunde. Um die Produktivität einer solchen Vorrichtung zum Bedrucken oder zur Dekoration von Hohlkörpern 01 hoch zu halten, ist es vorteilhaft, die erforderliche Erneuerung der am Umfang des Segmentrades 03 angeordneten Drucktücher 33 mit einer möglichst kurzen Rüstzeit durchzuführen.

Daher ist in Zuordnung zu dem Segmentrad 03 vorteilhafterweise eine Vorrichtung zum automatischen Wechseln der Drucktücher 33 vorgesehen. In der bevorzugten Ausführung ist ein jedes dieser an dem Segmentrad 03 anzuordnenden Drucktücher 33 jeweils auf einem vorzugsweise flachen tafelförmigen Metallträger mit einer Materialstärke von z. B. 0,2 mm stoffschlüssig, insbesondere durch eine Klebung aufgebracht. Der jeweilige vorzugsweise magnetisierbare Metallträger wird dann mitsamt dem auf ihm angeordneten Drucktuch 33 auf einem der Segmente 32 am Umfang des Segmentrades 03 z. B. durch mindestens einen dort am Umfang für jedes Drucktuch 33 bzw. dessen Träger vorgesehenen Haltemagneten insbesondere positionsrichtig angeordnet. Um die positionsrichtige Anordnung des jeweiligen Metallträgers auf dem betreffenden Segment 32 am Umfang des Segmentrades 03 zu unterstützen, ist z. B. an der in Drehrichtung des Segmentrades 03 vorlaufenden Kante 37 des jeweiligen Metallträgers jeweils ein spitzwinklig abgewinkelter Einhängeschenkel 38 vorgesehen, wobei dieser Einhängeschenkel 38 bei der Anordnung des jeweiligen Metallträgers auf einem der Segmente 32 am Umfang des Segmentrades 03 in eine am Umfang dieses Segmentrades 03 parallel zu dessen Rotationsachse 34 gerichtete z. B. als eine Nut ausgebildete Aussparung 36 greift und an einer in Drehrichtung des Segmentrades 03 vorlaufenden Kante 39 der betreffenden Aussparung 36 insbesondere formschlüssig zur Anlage kommt. Die Drucktücher 33 sind jeweils vorzugsweise als ein Gummituch ausgebildet. Die während des Druckprozesses ausgeführte Drehrichtung des Segmentrades 03 ist in der Fig. 13 durch einen Drehrichtungspfeil angedeutet. Die vom um die Rotationsachse 41 rotierenden Mandrelrad 02 jeweils auf einem Aufspanndorn an das Segmentrad 03 herangeführten Hohlkörper 01 werden im Druckprozess durch eine vornehmlich radiale Bewegung des betreffenden Aufspanndorns einzeln und nacheinander kurzzeitig, d. h. i. d. R. für eine einzige Umdrehung des zu bedruckenden Hohlkörpers 01 an das betreffende aktuell druckende Drucktuch 33 angedrückt.

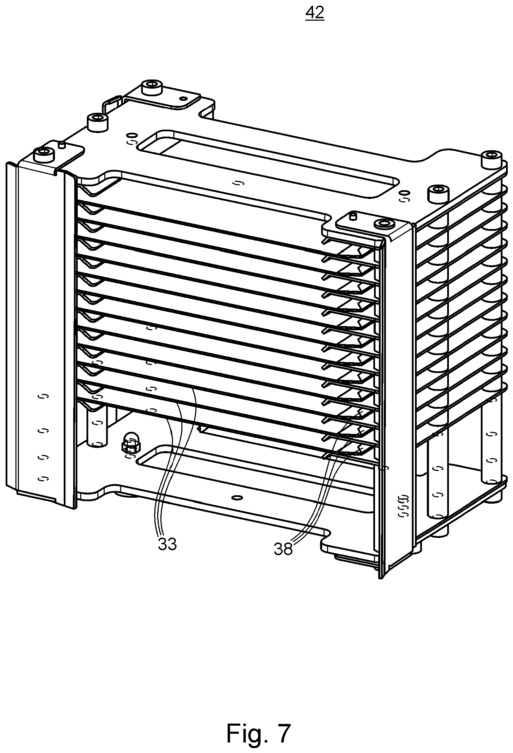

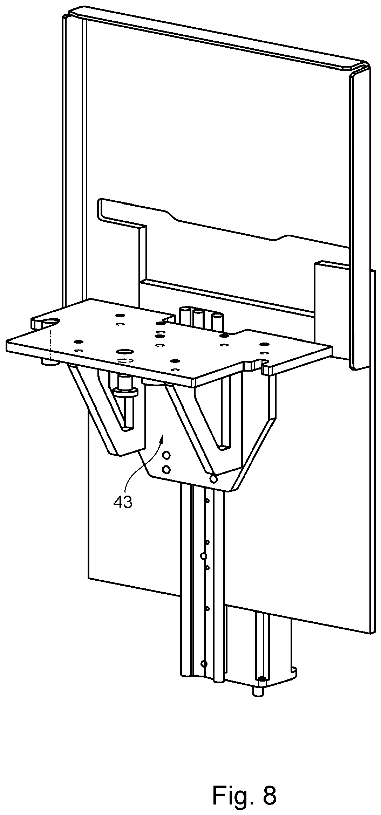

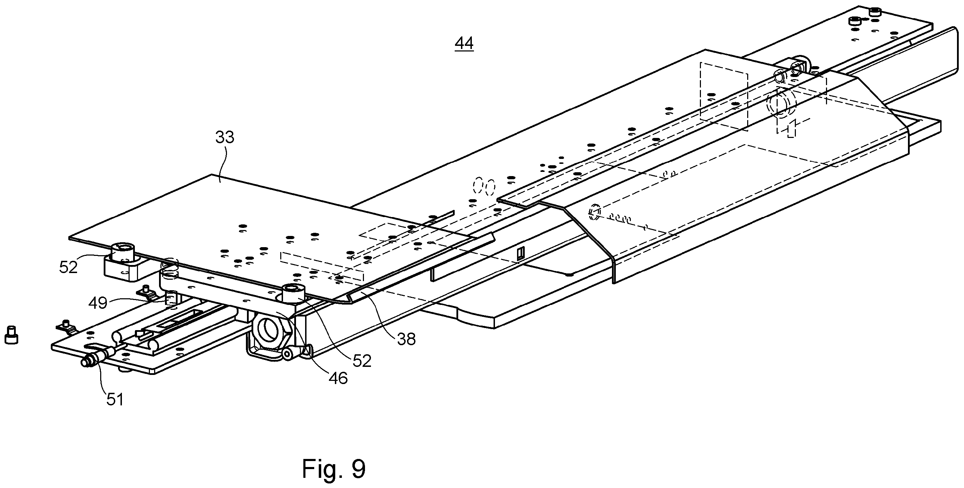

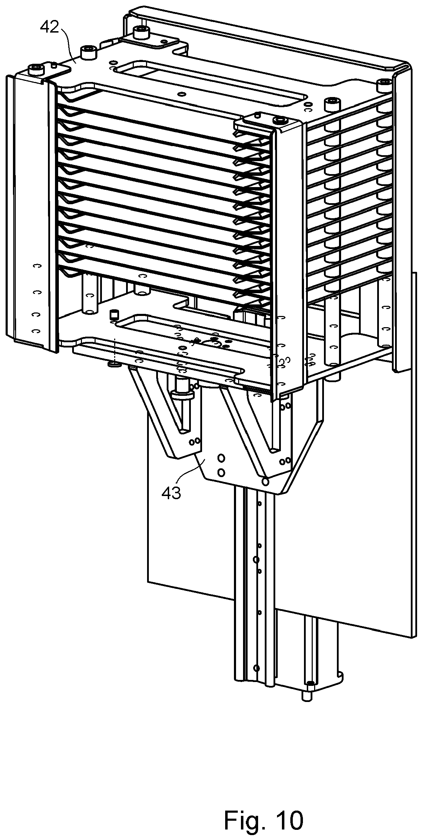

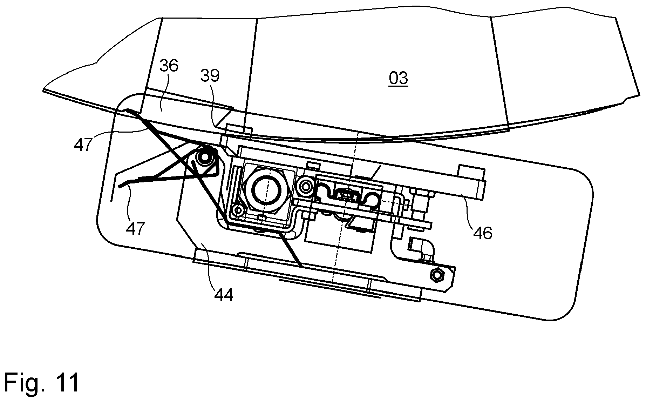

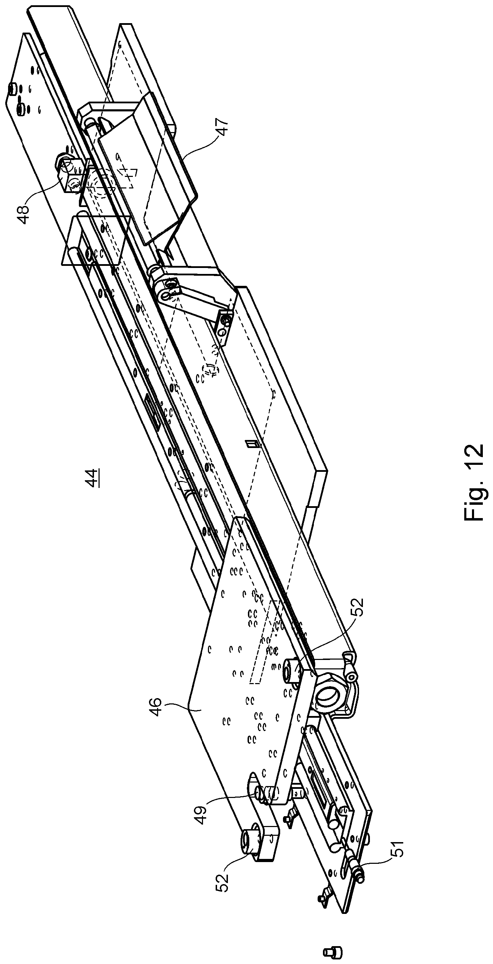

Die Vorrichtung zum automatischen Wechseln der Drucktücher 33 ist vorzugsweise modular aufgebaut und weist - wie in den Fig. 7 bis 12 beispielhaft dargestellt - als Module z. B. eine Speichereinrichtung 42 für mehrere, z. B. bis zu zwölf Drucktücher 33 auf (Fig. 7) sowie eine Einrichtung 43 für einen senkrechten Transport der vorgenannten Speichereinrichtung 42 (Fig. 8) und eine Einrichtung 44 für einen waagerechten Transport von jeweils einem der Drucktücher 33 zwischen der Speichereinrichtung 42 und einem Montageort an dem Segmentrad 03 (Fig. 9). Die Fig. 10 zeigt die Speichereinrichtung 42 in ihrem an der für ihren senkrechten Transport vorgesehenen Einrichtung 43 angeordneten Betriebszustand. Die Speichereinrichtung 42 weist in einem vorzugsweise quaderförmigen Gehäuse mehrere vertikal übereinander angeordnete Fächer auf, in denen jeweils ein einzelnes Drucktuch 33 rücklings, d. h. auf seinem Träger liegend vorzugsweise jeweils in horizontaler Ausrichtung gespeichert oder zumindest speicherbar ist, wobei in dem Gehäuse z. B. mindestens so viele Fächer vorgesehen sind, wie das zugeordnete Segmentrad 03 an seinem Umfang Segmente 32 für Drucktücher 33 aufweist. Die Fächer sind jeweils z. B. zumindest an einer ihrer Längsseiten offen, um an der offenen Seite des jeweiligen Faches eine Zufuhr oder Entnahme des jeweiligen Drucktuchs 33 zu ermöglichen. Diese Speichereinrichtung 42 ist vorzugsweise auf oder an einem Träger der Einrichtung 43 für den senkrechten Transport dieser Speichereinrichtung 42 als ein leicht, z. B. werkzeuglos austauschbares Modul befestigt oder zumindest befestigbar. Die Einrichtung 43 für den senkrechten Transport der Speichereinrichtung 42 ist z. B. eine Hubbewegung ausführend ausgebildet, wobei der vertikale Stellweg z. B. etwa 200 mm beträgt. Die Hubbewegung der Einrichtung 43 für den senkrechten Transport der Speichereinrichtung 42 wird z. B. mittels einer vorzugsweise von einem Elektromotor angetriebenen Trapezgewindespindel ausgeführt. Um die einzelnen Drucktücher 33 zwischen der Speichereinrichtung 42 und einem Montageort an einem Segment 32 des Segmentrades 03 zu transportieren, ist eine Einrichtung 44 für den waagerechten Transport dieser Drucktücher 33 vorgesehen. Diese Einrichtung 44 für den waagerechten Transport der Drucktücher 33 weist z. B. einen zwischen zwei Endpunkten bidirektional insbesondere linear verfahrbaren Schlitten 46 auf, wobei mit dem Schlitten 46 jeweils ein einzelnes Drucktuch 33 transportiert wird oder zumindest transportierbar ist. Ein aus der Speichereinrichtung 42 automatisch entnommenes Drucktuch 33 wird auf dem Schlitten 46 vorzugsweise rücklings liegend an einen sich z. B. unter dem Segmentrad 03 befindenden Montageort transportiert und dort von einem Segment 32 des Segmentrades 03 aufgenommen. Ein von einem Segment 32 des Segmentrades 03 abzunehmendes Drucktuch 33 wird vorzugsweise mit einem an das betreffende Segment 32 angestellten oder dort zumindest anstellbaren Spachtel 47 von dem betreffenden Segment 32 abgeschält und von seinem Demontageort am Umfang des Segmentrades 03 z. B. auf dem Schlitten 46 liegend zur Speichereinrichtung 42 transportiert, wobei der in einem spitzen Winkel oder tangential an das betreffende Segment 32 des Segmentrades 03 angestellte Spachtel 47 in Verbindung mit einer gegen den Spachtel 47 gerichteten Drehbewegung des Segmentrades 03 in der bevorzugten Ausführung jeweils den insbesondere magnetisch am Umfang des Segmentrades 03 gehaltenen Metallträger des betreffenden Drucktuches 33 vom betreffenden Segment 32 und damit vom Umfang dieses Segmentrades 03 abhebt. In der Fig. 11 ist der Spachtel 47 sowohl in einer an das betreffende Segment 32 des Segmentrades 03 angestellten Betriebsstellung als auch in einer abgestellten Betriebsstellung dargestellt, wobei diese Betriebsstellungen alternativ eingenommen werden.

Die Erneuerung oder der Wechsel von mindestens einem der am Umfang des Segmentrades 03 angeordneten Drucktücher 33 wird dann vorzugsweise folgendermaßen durchgeführt:
Das Segmentrad 03 befördert durch seine Rotation ein an seinem Umfang angeordnetes abzunehmendes Drucktuch 33 in eine Winkelposition, an der mit der Vorrichtung zum automatischen Wechseln der Drucktücher 33 eine Demontage dieses Drucktuches 33 ausführbar ist. Der Schlitten 46 der Einrichtung 44 für den waagerechten Transport der Drucktücher 33 fährt entlang seines Stellweges bis zu demjenigen Endpunkt, der dem Demontageort des abzunehmenden Drucktuches 33 am nächsten liegt. Diese Position des Schlittens 46 ist vorzugsweise sensorisch und/oder durch ein erstes Schaltelement 48 überwacht, z. B. durch einen induktiven oder kapazitiven Näherungsschalter. Danach wird der Spachtel 47 vorzugsweise an der in Drehrichtung des Segmentrades 03 nachlaufenden Kante 37 des Metallträgers des betreffenden abzunehmenden Drucktuches 33 angestellt. Durch eine zumindest kurzzeitige Drehbewegung des Segmentrades 03 entgegen seiner während des Druckprozesses ausgeführten Drehrichtung wird das vorzugsweise magnetisch am Umfang des Segmentrades 03 gehaltene abzunehmende Drucktuch 33 vom Umfang dieses Segmentrades 03 abgeschält, d. h. der Metallträger des Drucktuchs 33 wird von seiner Auflage auf dem Segmentrad 03 abgehoben. Sodann wird der Spachtel 47 wieder vom Umfang des Segmentrades 03 abgestellt. Das vom betreffenden Segment 32 des Segmentrades 03 gelöste Drucktuch 33 fällt aufgrund der Schwerkraft dann entweder direkt in eine Speichereinrichtung für verschlissene Drucktücher 33 oder wird mittels des Schlittens 46 der Einrichtung 44 für den waagerechten Transport der Drucktücher 33 zu dieser Speichereinrichtung für verschlissene Drucktücher transportiert.

In mindestens einem Fach, vorzugsweise in allen Fächern der für mehrere neue Drucktücher 33 vorgesehenen Speichereinrichtung 42 ist jeweils ein neues auf einem Metallträger aufgeklebtes Drucktuch 33 eingelegt, wobei diese Speichereinrichtung 42 durch die Einrichtung 43 für deren senkrechten Transport vorzugsweise in einer angehobenen oberen Position angeordnet ist. Der Schlitten 46 der Einrichtung 44 für den waagerechten Transport von jeweils einem der Drucktücher 33 zwischen der Speichereinrichtung 42 und dem Montageort an dem Segmentrad 03 ist unterhalb des Faches mit dem neuen Drucktuch 33 angeordnet. Durch ein von der Einrichtung 43 für den senkrechten Transport ausgeführtes Absenken dieser Speichereinrichtung 42 wird das neue Drucktuch 33 auf dem Schlitten 46 der Einrichtung 44 für den waagerechten Transport abgelegt. Es wird vorzugsweise sensorisch und/oder durch ein zweites Schaltelement 49, z. B. durch einen induktiven oder kapazitiven Näherungsschalter, überwacht, ob das neue Drucktuch 33 tatsächlich auf dem Schlitten 46 der Einrichtung 44 für den waagerechten Transport abgelegt worden ist. Falls dem nicht so ist, ergeht eine Fehlermeldung. Andernfalls, also im fehlerfreien Zustand, fährt der Schlitten 46 der Einrichtung 44 für den waagerechten Transport der Drucktücher 33 entlang seines Stellweges bis zu demjenigen Endpunkt, der dem Montageort des neuen Drucktuches 33 am nächsten liegt, wobei diese Position des Schlittens 46 wiederum vorzugsweise sensorisch und/oder durch ein drittes Schaltelement 51 überwacht ist, z. B. durch einen induktiven oder kapazitiven Näherungsschalter. Auch das Segmentrad 03 befindet sich bereits in einer zur Aufnahme des neuen Drucktuches 33 geeigneten Winkelposition, wobei sich diese Winkelposition z. B. am Fußpunkt des Segmentrades 03 oder in seiner Nähe befindet. In der bevorzugten Ausführung wird das neue Drucktuch 33 durch einen Stoß gegen mindestens Anschlag 52 in seiner Lage zumindest registerhaltig ausgerichtet, bevor es am Umfang des Segmentrades 03 montiert wird. Zum Verfahren des Schlittens 46 der Einrichtung 44 für den waagerechten Transport der Drucktücher 33 ist ein Antrieb vorgesehen, wobei dieser Antrieb z. B. als ein Druckluftzylinder ausgebildet ist. Um das neue Drucktuch 33 am Umfang des Segmentrades 03 zu montieren, dreht dieses Segmentrad 03 in seine während des Druckprozesses ausgeführte Drehrichtung und nimmt dabei das neue Drucktuch 33 an seinem Umfang auf. Danach wird der Schlitten 46 der Einrichtung 44 für den waagerechten Transport der Drucktücher 33 wieder zu der Speichereinrichtung 42 für die mehreren neuen Drucktücher 33 gefahren, um gegebenenfalls ein weiteres neues Drucktuch 33 zu holen.

Um Rüstzeiten zu verringern, ist es vorteilhaft, eine Vorrichtung zum Bedrucken von Hohlkörpern 01 derart auszubilden, dass diese Vorrichtung ein um eine Rotationsachse 34 rotierbares Segmentrad 03 aufweist, wobei das Segmentrad 03 an seinem Umfang hintereinander mehrere Segmente 32 jeweils zur Aufnahme von einem Drucktuch 33 aufweist, wobei zumindest eines der auf einem der Segmente 32 angeordneten Drucktücher 33 auf dem zu bedruckenden Hohlkörper 01 abrollend oder zumindest abrollbar angeordnet ist. Dabei sind mehrere Druckwerke vorgesehen, wobei mindestens eines der Druckwerke an mindestens eines der am Umfang des Segmentrades 03 angeordneten Drucktücher 33 angestellt oder zumindest anstellbar ist. Zumindest eines der Druckwerke weist einen Druckformzylinder 04 auf, wobei in Zuordnung zu dem betreffenden Druckformzylinder 04 ein Plattenwechsler 14 zum automatischen Wechseln einer Druckform an diesem Druckformzylinder 04 angeordnet ist und wobei in Zuordnung zu dem Segmentrad 03 eine Vorrichtung zum automatischen Wechseln von mindestens einem der am Umfang dieses Segmentrades 03 angeordneten Drucktücher 33 angeordnet ist. Dabei weist der Plattenwechsler 14 vorzugsweise eine Auflagefläche 16 auf, auf welcher die an dem Druckformzylinder 04 anzuordnende oder angeordnete Druckform aufgelegt oder zumindest auflegbar ist, wobei diese Auflagefläche 16 längs eines Transportweges zwischen mindestens zwei definierten Positionen bidirektional bewegbar ist. Die dem betreffenden Druckformzylinder 04 zuzuführende Druckform ist z. B. durch eine magnetische Haltekraft auf der Auflagefläche 16 des Plattenwechslers 14 gehalten. Die Vorrichtung zum automatischen Wechseln der Drucktücher 33 ist insbesondere modular aufgebaut, wobei sie als Module eine Speichereinrichtung 42 für mehrere Drucktücher 33 sowie eine Einrichtung 43 für einen senkrechten Transport dieser Speichereinrichtung 42 und eine Einrichtung 44 für einen waagerechten Transport von jeweils einem der Drucktücher 33 zwischen der Speichereinrichtung 42 und einem der Segmente 32 des Segmentrades 03 aufweist. Die Speichereinrichtung 42 weist in einem Gehäuse mehrere vertikal übereinander angeordnete Fächer auf, in denen jeweils ein einzelnes Drucktuch 33 gespeichert oder zumindest speicherbar ist. Die Drucktücher 33 sind in der Speichereinrichtung 42 jeweils vorzugsweise rücklings liegend und/oder in einer horizontalen Ausrichtung gespeichert. Die Einrichtung 43 für den senkrechten Transport der Speichereinrichtung 42 ist z. B. eine Hubbewegung ausführend ausgebildet und/oder die Einrichtung 44 für den waagerechten Transport der Drucktücher 33 weist einen zwischen zwei Endpunkten bidirektional verfahrbaren Schlitten 46 auf, wobei mit dem Schlitten 46 jeweils ein einzelnes Drucktuch 33 transportiert wird oder zumindest transportierbar ist. Der Plattenwechsler 14 und die Vorrichtung zum automatischen Wechseln der Drucktücher 33 sind z. B. jeweils von einer Steuereinheit gesteuert, wobei der Plattenwechsler 14 und die Vorrichtung zum automatischen Wechseln der Drucktücher 33 jeweils z. B. gleichzeitig aktiv sind, d. h. ihren jeweiligen Wechsel einer Druckform bzw. eines Drucktuches 33 während einer selben Produktionsunterbrechung dieser Vorrichtung zum Bedrucken von Hohlkörpern 01 ausführen. Die an dem Druckformzylinder 04 anzuordnende Druckform ist auf der Auflagefläche 16 des Plattenwechslers 14 hinsichtlich ihrer Montageposition auf dem Druckformzylinder 04 vorzugsweise registerhaltig angeordnet und/oder das am Umfang des Segmentrades 03 anzuordnende Drucktuch 33 ist auf dem Schlitten 46 der Einrichtung 44 für den waagerechten Transport der Drucktücher 33 hinsichtlich seiner Montageposition auf einem Segment 32 des Segmentrades 03 positionsrichtig angeordnet. Ein Druckfarbe zum Druckformzylinder 04 transportierendes Farbwerk 06 ist vorzugsweise als ein eine Rasterwalze 08 aufweisendes Kurzfarbwerk ausgebildet.

Hinsichtlich einer Vorrichtung zum Bedrucken von Hohlkörpern 01, welche ein um eine Rotationsachse 34 rotierbares Segmentrad 03 aufweist, wobei das Segmentrad 03 an seinem Umfang hintereinander mehrere Segmente 32 jeweils zur Aufnahme von einem Drucktuch 33 aufweist, wobei zumindest eines der auf einem der Segmente 32 angeordneten Drucktücher 33 auf dem zu bedruckenden Hohlkörper 01 abrollend oder zumindest abrollbar angeordnet ist, wobei benachbarte Segmente 32 jeweils durch eine parallel zur Rotationsachse 34 des Segmentrades 03 gerichtete Aussparung 36 voneinander getrennt sind, ist es auch vorteilhaft, dass jedes der Drucktücher 33 jeweils auf einem plattenförmigen metallischen Träger angeordnet ist, wobei der Träger mitsamt dem auf ihm angeordneten Drucktuch 33 als solcher im Ganzen wechselbar an einem der Segmente 32 des Segmentrades 03 angeordnet oder zumindest anordenbar ist, wobei der an einem der Segmente 32 des Segmentrades 03 angeordnete Träger auf diesem Segment 32 in einem Formschluss und/oder in einem Kraftschluss gehalten ist. Dabei ist jeder Träger eines Drucktuches 33 an seiner in Drehrichtung des Segmentrades 03 vorlaufenden Kante 37 vorzugsweise spitzwinklig abgekantet, wobei diese Abkantung 38 im auf einem Segment 32 des Segmentrades 03 angeordneten Betriebszustand dieses Trägers an eine in Drehrichtung des Segmentrades 03 vorlaufende Kante 39 der betreffenden am Umfang des Segmentrades 03 ausgebildeten Aussparung 36 angelegt ist, wobei die Abkantung 38 des Trägers an dieser Kante 39 der Aussparung 36 in einem Formschluss angeordnet oder zumindest anordenbar ist. Der plattenförmige metallische Träger ist insbesondere biegsam ausgebildet und bildet mitsamt dem auf ihm angeordneten Drucktuch 33 z. B. ein Metalldrucktuch. Der an einem der Segmente 32 des Segmentrades 03 angeordnete Träger ist auf diesem Segment 32 durch eine magnetische Kraft gehalten. Am Umfang des Segmentrades 03 sind hintereinander z. B. acht bis zwölf Segmente 32 jeweils zur Aufnahme von einem Drucktuch 33 angeordnet. In Zuordnung zu dem Segmentrad 03 ist z. B. eine Vorrichtung zum automatischen Wechseln der Drucktücher 33 vorgesehen, wobei die Vorrichtung zum automatischen Wechseln der Drucktücher 33 vorzugsweise modular aufgebaut ist und als Module eine Speichereinrichtung 42 für mehrere Drucktücher 33 sowie eine Einrichtung 43 für einen senkrechten Transport der vorgenannten Speichereinrichtung 42 und eine Einrichtung 44 für einen waagerechten Transport von jeweils einem der Drucktücher 33 zwischen der Speichereinrichtung 42 und einem der Segmente 32 des Segmentrades 03 aufweist. Die Speichereinrichtung 42 weist in einem Gehäuse insbesondere mehrere vertikal übereinander angeordnete Fächer auf, in denen jeweils ein einzelnes Drucktuch 33 gespeichert oder zumindest speicherbar ist. In dem Gehäuse der Speichereinrichtung 42 sind z. B. mindestens so viele Fächer vorgesehen, wie das zugeordnete Segmentrad 03 an seinem Umfang Segmente 32 für Drucktücher 33 aufweist. In der bevorzugten Ausführung ist die Einrichtung 43 für den senkrechten Transport der Speichereinrichtung 42 eine Hubbewegung ausführend ausgebildet und/oder die Einrichtung 44 für den waagerechten Transport der Drucktücher 33 weist einen zwischen zwei Endpunkten bidirektional verfahrbaren Schlitten 46 auf, wobei mit dem Schlitten 46 jeweils ein einzelnes Drucktuch 33 transportiert wird oder zumindest transportierbar ist.

Es ergibt sich auch ein Verfahren zum Betrieb einer ein Segmentrad 03 aufweisenden Vorrichtung zum Bedrucken von Hohlkörpern 01, wobei an mindestens einem Segment 32 des an seinem Umfang hintereinander mehrere Segmente 32 aufweisenden Segmentrades 03 jeweils ein Drucktuch 33 angeordnet wird, wobei mindestens ein auf einem der Segmente 32 angeordnetes Drucktuch 33 bei einer Rotation des Segmentrades 03 auf dem zu bedruckenden Hohlkörper 01 abrollt, wobei eine in Zuordnung zu dem Segmentrad 03 vorgesehene Vorrichtung zum automatischen Wechseln von Drucktüchern 33 zufolge eines an ihre Steuereinheit gegebenen Befehls das an dem betreffenden Segment 32 des Segmentrades 03 anzuordnende Drucktuch 33 selbsttätig einer Speichereinrichtung 42 entnimmt und zu dem betreffenden Segment 32 des Segmentrades 03 transportiert. Die Vorrichtung zum automatischen Wechseln von Drucktüchern 33 weist eine Einrichtung 44 für einen waagerechten Transport der Drucktücher 33 mit einem verfahrbaren Schlitten 46 auf, wobei die zu transportierenden Drucktücher 33 jeweils auf dem Schlitten 46 liegend transportiert werden. Dabei wird ein auf dem Schlitten 46 liegendes Drucktuch 33 hinsichtlich einer Montageposition auf einem der Segmente 32 des Segmentrades 03 vorzugsweise positionsrichtig angeordnet. In der Speichereinrichtung 42 werden insbesondere mehrere Drucktücher 33 gespeichert, wobei die Drucktücher 33 jeweils einzeln eines nach dem anderen auf dem Schlitten 46 der Einrichtung 44 für den waagerechten Transport der Drucktücher 33 abgelegt und nacheinander zu einem der Segmente 32 des Segmentrades 03 transportiert werden. Ein auf einem der Segmente 32 des Segmentrades 03 anzuordnendes Drucktuch 33 wird insbesondere durch einen bei einer Rotation dieses Segmentrades 03 zwischen dem betreffenden Segment 32 und dem Drucktuch 33 hergestellten Formschluss auf dem betreffenden Segment 32 angeordnet. Ein auf einem der Segmente 32 des Segmentrades 03 angeordnetes Drucktuch 33 wird vorzugsweise durch einen z. B. magnetischen Kraftschluss auf dem betreffenden Segment 32 gehalten. Ein von einem der Segmente 32 des Segmentrades 03 abgenommenes Drucktuch 33 wird gleichfalls vorzugsweise mit der Einrichtung 44 für den waagerechten Transport der Drucktücher 33 von dem betreffenden Segmentrad 03 abtransportiert. Es ist vorzugsweise vorgesehen, dass die Einrichtung 44 für den waagerechten Transport der Drucktücher 33 abwechselnd ein von einem der Segmente 32 des Segmentrades 03 abgenommenes Drucktuch 33 abtransportiert und ein neues, d. h. unbenutztes Drucktuch 33 aus der Speichereinrichtung 42 zu einem freien Segment 32 des Segmentrades 03 transportiert, d. h. zu einem Segment 32, an dem aktuell kein Drucktuch 33 angeordnet ist. Mittels eines Schaltelementes 49 wird z. B. überwacht, ob ein aus der Speichereinrichtung 42 zu entnehmendes oder entnommenes Drucktuch 33 tatsächlich und/oder positionsrichtig auf dem Schlitten 46 der Einrichtung 44 für den waagerechten Transport abgelegt worden ist.

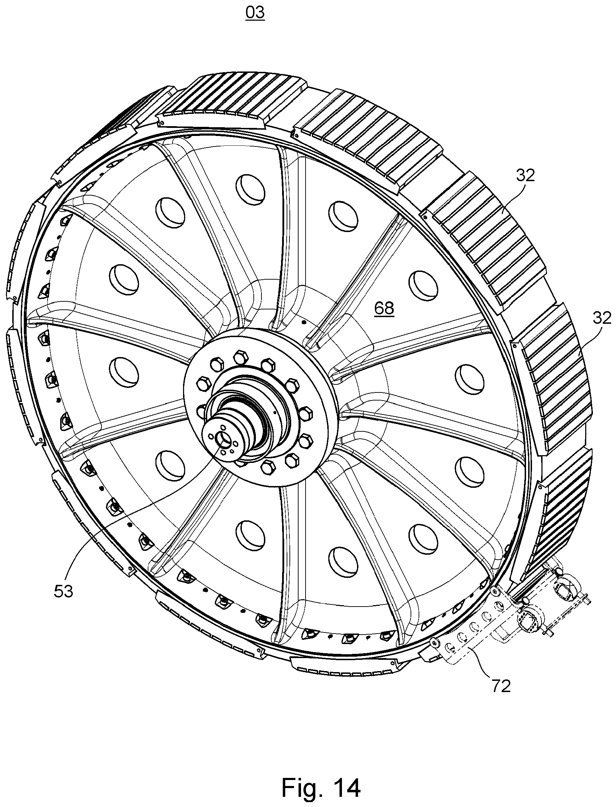

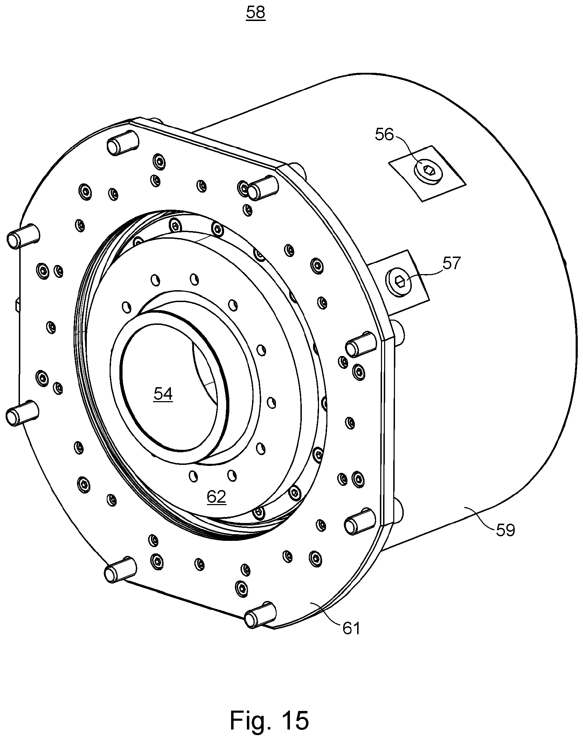

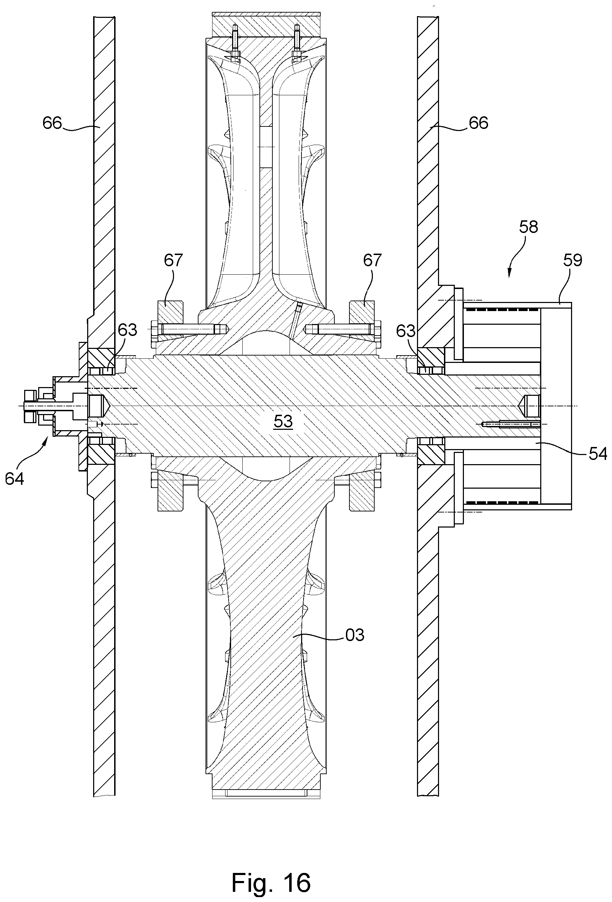

Fig. 14 zeigt in einer perspektivischen Darstellung nochmals das Segmentrad 03 der Vorrichtung zum Bedrucken von Hohlkörpern 01, wobei am Umfang dieses Segmentrades 03 hintereinander mehrere, z. B. zwölf Segmente 32 zur Aufnahme von jeweils einem Drucktuch 33 angeordnet sind. Dieses Segmentrad 03 ist vorzugsweise aus einem Gießwerkstoff gefertigt, z. B. aus Gusseisen, und weist eine Masse von z. B. mehr als 500 kg, insbesondere von etwa 1.000 kg oder mehr auf. Das Segmentrad 03 hat einen Außendurchmesser im Bereich von z. B. 1.400 mm bis 1.600 mm. Das Segmentrad 03 ist mit seiner Welle 53 in einem Gestell 66 dieser Vorrichtung zum Bedrucken von Hohlkörpern 01 vorzugsweise beidendig z. B. jeweils in insbesondere doppelreihigen Wälzlagern 63 gelagert und von einem Antrieb rotativ angetrieben. Dieser das Segmentrad 03 rotativ antreibende Antrieb ist als ein elektrischer Motor 58 mit einem Stator 61 und einem eine Hohlwelle 54 aufweisenden Rotor 62 ausgebildet, wobei die Hohlwelle 54 koaxial zur Welle 53 des Segmentrades 03 angeordnet oder zumindest anordenbar ist. Im in der Vorrichtung zum Bedrucken von Hohlkörpern 01 angeordneten Zustand - wie der Schnittdarstellung der Fig. 16 dargestellt - ragt die Welle 53 des Segmentrades 03 in den Bauraum des Motors 58 und die Welle 53 des Segmentrades 03 und der Rotor 62 des Motors 58 sind starr miteinander verbunden. Das Segmentrad 03 ist vorzugsweise beidseitig z. B. mittels Klemmelementen 67 mit seiner Welle 53 starr verbunden und dadurch auf der Welle 53 fixiert. Der für den rotativen Antrieb des Segmentrades 03 vorgesehene Motor 58 ist vorzugsweise als ein hochpoliger, elektrischer Direktantrieb mit einer Polzahl größer zwanzig und/oder als ein permanenterregter bürstenloser Gleichstrommotor ausgebildet und beispielhaft in der Fig. 15 perspektivisch dargestellt. Dieser Motor 58 weist z. B. eine Kühleinrichtung auf oder ist zumindest mit einer solchen verbunden, wobei die Kühleinrichtung als eine Flüssigkeitskühlung ausgebildet ist. Fig. 15 zeigt zwei am Gehäuse 59 des Motors 58 ausgebildete Anschlüsse für diese Flüssigkeitskühlung, nämlich einen Anschluss für den Kühlmittelzufluss 56 und einen anderen Anschluss für den Kühlmittelabfluss 57. In einer vorteilhaften Ausführung ist dieser Motor 58 als ein Torquemotor ausgebildet. Für diesen Motor 58 ist eine ihn steuernde oder regelnde vorzugsweise digitale Steuereinheit vorgesehen, wobei durch die Steuereinheit durch eine Positionierung der Welle 53 des Segmentrades 03 im Stator des Motors 58 eine Position am Umfang dieses Segmentrades 03 relativ zu einer Position an der Mantelfläche eines zu bedruckenden Hohlkörpers 01 vorzugsweise mit einer Positioniergenauigkeit von unter 0,1 mm eingestellt oder zumindest einstellbar ist. Gleichfalls ist auch z. B. am dem Motor 58 gegenüberliegenden Ende der Welle 53 ein Drehgeber 64 vorgesehen, wobei der Drehgeber 64 eine hohe Winkelauflösung von z. B. 27 Bit aufweist und eine Drehwinkelposition der Welle 53 des Segmentrades 03 erfasst und einen mit der Drehwinkelposition der Welle 53 des Segmentrades 03 korrespondierenden Messwert der den Motor 58 steuernden oder regelnden Steuereinheit zur Verfügung stellt. Der Motor 58 und/oder der Drehgeber sind vorzugsweise jeweils über einen Datenbus, insbesondere Steuerbus mit der den Motor 58 steuernden oder regelnden Steuereinheit verbunden.

Die vorgenannte Ausführungsform des rotativen Antriebs des Segmentrades 03 hat den Vorteil, dass dieser Antrieb dezentral sowie getriebelos und kupplungslos ausgebildet ist. Damit ist dieser Antrieb des Segmentrades 03 spielfrei und kompakt. In Verbindung mit der Steuereinheit dieses Antriebs lässt sich eine Position am Umfang dieses Segmentrades 03 relativ zu einer Position an der Mantelfläche eines zu bedruckenden Hohlkörpers 01 ohne weiteres mit einer Positioniergenauigkeit von unter 0,1 mm einstellen, was sich sehr vorteilhaft auf die erzielbare Druckqualität auswirkt. Ebenso ergibt sich i. V. m. der doppelreihigen Lagerung des Segmentrades 03 ein sehr guter Rundlauf dieses Segmentrades 03, wodurch eine gleichmäßige Farbübertragung von den jeweiligen Farbwerken 06 auf die betreffenden am Umfang des Segmentrades 03 angeordneten Drucktücher 33 sichergestellt ist. Mit dem hier beschriebenen rotativen Antrieb des Segmentrades 03 sind für dieses Segmentrad 03 eine hohe Beschleunigung und damit kurze Hochlaufzeiten von 10 s oder weniger realisierbar. Der vorgeschlagene Antrieb für das Segmentrad 03 hat darüber hinaus noch den Vorteil, geräuscharm und wartungsarm zu sein. In Summe ergibt sich somit ein sehr effizienter Antrieb für das Segmentrad 03.

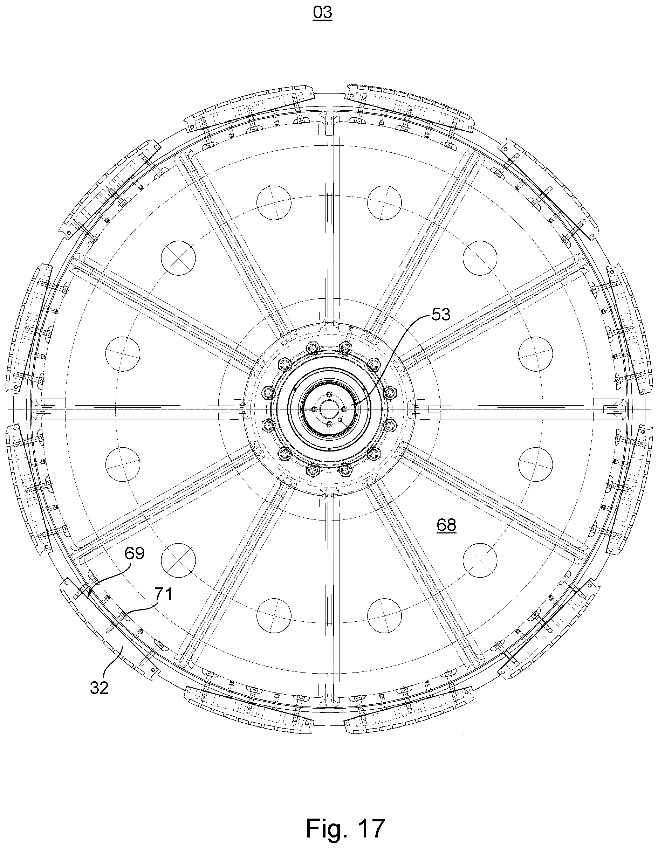

Fig. 17 zeigt nochmals das bereits i. V. m. den Fig. 14 und 16 beschriebene Segmentrad 03, hier jedoch in einer besonders vorteilhaften Ausgestaltung. Das im Druckprozess im Gestell 66 der Vorrichtung zum Bedrucken von Hohlkörpern gelagerte Segmentrad 03 weist einen vorzugsweise aus einem metallischen Werkstoff, z. B. aus einer Schweißkonstruktion oder aus Gusseisen gefertigten Grundkörper 68 auf, wobei mehrere, z. B. zwölf Segmente 32 entlang des Umfangs des Grundkörpers 68 jeweils an einer Fügestelle 69 insbesondere jeweils beabstandet voneinander angeordnet oder zumindest anordenbar sind. Das Segmentrad 03 ist demnach nicht einteilig ausgebildet, mit bereits angeformten Segmenten 32, sondern diese Segmente 32 bilden jeweils ein vom Grundkörper 68 trennbares eigenes Maschinenelement und sind am Grundkörper 68 wechselbar angeordnet. Jedes dieser Segmente 32 ist - wie zuvor in gleicher Weise - geeignet, jeweils ein Drucktuch 33 in der bereits beschriebenen Weise aufzunehmen.

Ein Vorteil am Segmentrad 03 wechselbarer Segmente 32 besteht darin, dass z. B. bei einer Umstellung der Maschinenanordnung auf eine Produktion von Hohlkörpern 01 anderen Formats, z. B. auf Dosen mit einer im Vergleich zur aktuellen Produktion kürzeren oder längeren Dosenhöhe und/oder eines anderen Dosendurchmessers, auch eine Anpassung im Format der zum Drucken erforderlichen Drucktücher 33 leichter und schneller möglich ist. In einer Maschinenanordnung mit einem Segmentrad 03 mit bereits angeformten Segmenten 32 ist bei einer Umstellung der Produktion auf Hohlkörper 01 anderen Formats jeweils das gesamte Segmentrad 03 auszutauschen, was in Anbetracht der üblichen Größe mit einem Außendurchmesser im Bereich von z. B. 1.400 mm bis 1.600 mm und/oder der üblichen Masse des Segmentrades 03 von z. B. mehr als 500 kg, insbesondere mehr als 1.000 kg einen beträchtlichen Aufwand und unvertretbar lange Rüstzeiten bedeuten.

Um im Druckprozess auf Hohlkörpern 01 ein Druckbild hoher Druckqualität zu erzeugen, muss ein Segmentrad 03 sehr hohe Anforderungen an seinen Rundlauf erfüllen, was dazu führt, dass ein solches Segmentrad 03 hochgenau, d. h. mit geringen zulässigen Fertigungstoleranzen zu bearbeiten ist. Dies ist bei einem Segmentrad 03 mit bereits angeformten Segmenten 32 aufgrund des relativ großen Außendurchmessers im Bereich von z. B. 1.400 mm bis 1.600 mm sehr aufwendig und teuer. Was bei einer Erstfertigung noch mittels eher seltener und teurer Großbearbeitungsmaschinen machbar ist, ist im Falle einer Beschädigung der Segmente 32 oder anderer Teile des Segmentrades 03 nur über sehr teure sowie in der Maschinenanordnung äußerst schwierig ausführbare Reparaturmaßnahmen wie Richten, Zerspanen, Aufschweißen und Überschleifen der Schadstelle oder durch einen Austausch des kompletten Segmentrades 03 möglich. Dies bedeutet für den Betreiber einer solchen Maschinenanordnung neben hohen Reparaturkosten auch einen langen Produktionsausfall, da die gesamte Maschinenanordnung für die Dauer der Reparaturmaßnahme still steht. Letztendlich ist bei einteiligen Segmenträdern 03 auch keine Variation in den verwendeten Werkstoffen z. B. zur Verringerung der Trägheit des betreffenden Segmentrades 03 möglich.

Ein Segmentrad 03 mit mehreren entlang des Umfangs seines Grundkörpers 68 jeweils an einer Fügestelle 69 insbesondere jeweils beabstandet voneinander angeordneten und damit wechselbaren Segmenten 32 vereinfacht die Fertigung des betreffenden Segmentrades 03 und erleichtert aufgrund seines modularen Aufbaus seine Anpassung an verschiedene von der jeweiligen Produktion abhängige Formate sowie gegebenenfalls eine in der Maschinenanordnung auszuführende Reparatur schadhafter Stellen an diesem Segmentrad 03, insbesondere an seinen Segmenten 32.

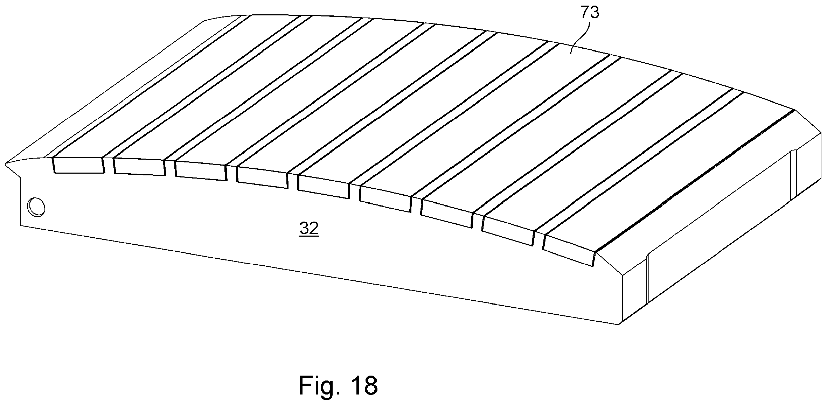

In der Ausgestaltung des Segmentrades 03 gemäß Fig. 17 sind die einzelnen, jeweils wechselbaren Segmente 32 bevorzugt endbearbeitet ausgebildet (Fig. 18). Das bedeutet, dass die endbearbeiteten Segmente 32 nur in ihrer jeweiligen Oberflächenkrümmung dem gewünschten Außendurchmesser des betreffenden Segmentrades 03 mit einer hohen Genauigkeit entsprechen müssen. Die restlichen Geometrien spielen toleranztechnisch eine untergeordnete Rolle. Ebenso sind beim Grundkörper 68 des Segmentrades 03 die Fertigungstoleranzen der äußeren Geometrie von untergeordneter Bedeutung. Das in der Fig. 18 beispielhaft dargestellte einzelne Segment 32 weist z. B. mindestens einen Haltemagneten 73 auf, um nach der Montage dieses Segmentes 32 am Grundkörper 68 des Segmentrades 03 ein einen magnetisierbaren Metallträger aufweisendes Drucktuch 33 am Umfang dieses Segmentrades 03 insbesondere positionsrichtig zu halten.

Die notwendige hohe Genauigkeit der jeweiligen Lauffläche der betreffenden Drucktücher 33 bezüglich Rundlauf und Radius wird durch einen z. B. mit Hilfe einer insbesondere längs des Umfangs des Segmentrades 03 verfahrbaren Reiterlehre 72 (Fig. 14) ausgeführten Ausrichtvorgang der Segmente 32 bei in der Maschinenanordnung angeordnetem Grundkörper 68 des Segmentrades 03 erreicht und z. B. durch ein Vergießen eines Ausgleichsspaltes fixiert. Denn an der betreffenden Fügestelle 69 zwischen dem jeweiligen Segment 32 und dem Grundkörper 68 ist jeweils ein Ausgleichsspalt mit einem in dem betreffenden Ausgleichsspalt angeordneten Trennfugenbelag ausgebildet, wobei der Trennfugenbelag vorzugsweise als ein z. B. niedrigviskoser Gießwerkstoff oder als eine Spachtelmasse ausgebildet ist. Die jeweiligen Segmente 32 werden an ihrer Fügestelle 69 zum Grundkörper 68 des Segmentrades 03 somit jeweils insbesondere passgenau vergossen. Der Ausgleichsspalt weist an der betreffenden Fügestelle 69 eine Spaltweite von z. B. mindestens 1 mm bis zu z. B. 5 mm auf. Zudem sind die Segmente 32 jeweils z. B. durch mindestens ein Verbindungselement 71 an dem Grundkörper 68 fixiert und/oder mit dem Grundkörper 68 lösbar verbunden. Das mindestens eine das jeweilige Segment 32 jeweils mit dem Grundkörper 68 des Segmentrades 03 verbindende Verbindungselement 71 ist z. B. als eine Zylinderschraube oder als ein Kegelstift ausgebildet.

Ein Trennfugenbelag wird zum Anpassen und Einpassen von Maschinenteilen mit höchsten Genauigkeitsanforderungen eingesetzt. Er gestattet ein Anpassen im µm-Bereich ohne aufwendige mechanische Vor- und Nacharbeit. Er weist eine hohe statische Druckfestigkeit von z. B. 100 N/mm² und/oder einen Traganteil von z. B. 100% auf. Ein Trennfugenbelag besitzt eine sehr hohe Haftkraft und härtet ohne technisch relevanten Schwund aus. Ein derartiger Trennfugenbelag wird z. B. von der Fa. SKC Gleittechnik GmbH in D-96469 Rödental angeboten.

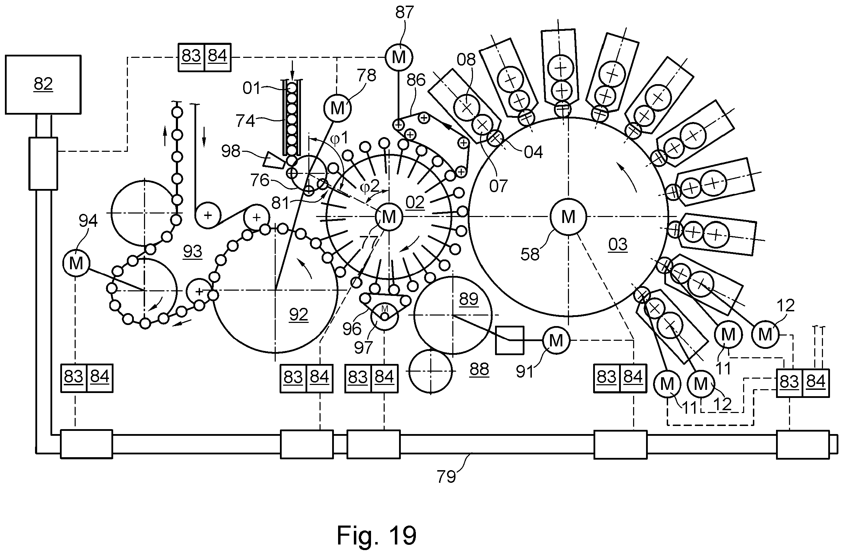

Fig. 19 zeigt vereinfacht und schematisch eine Vorrichtung zum Bedrucken von Hohlkörpern 01, bei der mehrere Hohlkörper 01 mit einer Fördereinrichtung 74 in der durch einen Pfeil angedeuteten Transportrichtung sequentiell einem Förderrad 76 und von dort einem Mandrelrad 02 und danach einem Segmentrad 03 zugeführt werden. Das Förderrad 76 und das Mandrelrad 02 sind i. d. R. Bestandteile des Dekorators und bilden eine Einrichtung zum sequentiellen Zuführen der Hohlkörper 01 an den Umfang des Segmentrades 03. Am Umfang des Förderrades 76 sind mehrere, z. B. acht oder zehn Mitnehmer und am Umfang des Mandrelrades 02 sind mehrere, z. B. 24 oder 36 Halteeinrichtungen jeweils zur Aufnahme von jeweils einem im Zusammenwirken mit dem Segmentrad 03 zu bedruckenden Hohlkörper 01 angeordnet. Entlang des Umfangs des Segmentrades 03 sind in dessen Drehrichtung hintereinander mehrere, z. B. acht, zehn oder zwölf vorzugsweise jeweils voneinander verschiedene Druckfarben verdruckende Druckwerke jeweils mit einem Plattenzylinder 04 und einem Farbwerk 06 angeordnet, wobei vorzugsweise jedes Farbwerk 06 als ein Kurzfarbwerk ausgebildet ist und z. B. nur eine einzige Farbauftragswalze 07 und eine Rasterwalze 08 aufweist. Am Umfang des Segmentrades 03 sind hintereinander vorzugsweise äquidistant mehrere, z. B. 12 Drucktücher 33 angeordnet, wobei ein 24 Halteeinrichtungen aufweisendes Mandrelrad 02 im Vergleich zu einem Segmentrad 03 mit 12 Segmenten 32 mit halber Drehzahl rotierend eingestellt ist. Jedes der am Umfang des Segmentrades 03 jeweils auf einem Segment 32 angeordneten Drucktücher 33 ist z. B. als ein Metalldrucktuch ausgebildet und vorzugsweise durch eine magnetische Kraft an dem betreffenden Segment 32 des Segmentrades 03 gehalten. Das Segmentrad 03 weist vorzugsweise einen Grundkörper 68 auf, wobei die mehreren, z. B. zwölf Segmente 32 entlang des Umfangs des Grundkörpers 68 jeweils an einer Fügestelle 69 insbesondere jeweils beabstandet voneinander angeordnet oder zumindest anordenbar sind. Das Segmentrad 03 ist in der bevorzugten Ausführung daher nicht einteilig, mit bereits angeformten Segmenten 32 ausgebildet, sondern die Segmente 32 bilden jeweils ein vom Grundkörper 68 trennbares eigenes Maschinenelement und sind am Grundkörper 68 z. B. durch das Lösen von mindestens einem Verbindungselement 71 wechselbar angeordnet. Die Mitnehmer des Förderrades 76 sind z. B. durch Aussparungen an dessen Umfang ausgebildet, wobei jede Aussparung zu einem bestimmten Zeitpunkt immer genau einen einzigen Hohlkörper 01 aufnehmen und während der Drehung des Förderrades 76 befördern kann. Die Aufnahme eines Hohlkörpers 01 in die betreffende Aussparung des Förderrades 76 wird z. B. durch eine in der Peripherie des Förderrades 76 angeordnete Blaslufteinrichtung 98 unterstützt, wobei in Abhängigkeit von einer Winkelposition des Förderrades 76 von der Blaslufteinrichtung 98 jeweils mindestens ein den betreffenden Hohlkörper 01 stoßender Luftstoß in Richtung des Förderrades 76 ausgelöst wird. Das Förderrad 76 ist in einer vorteilhaften Ausführung als ein Sternrad mit mehreren Mitnehmern jeweils in Form spitzer Zacken ausgebildet, wobei ein in einen Zwischenraum zwischen benachbarten Zacken aufgenommener Hohlkörper 01 während der Drehung des Sternrades befördert wird.

Das Mandrelrad 02 und das Förderrad 76 weisen jeweils einen vom Antrieb 58 des Segmentrades 03 separaten eigenen jeweils z. B. als ein Motor ausgebildeten Antrieb 77; 78 auf, wobei der Antrieb 58 des Segmentrades 03 und der Antrieb 77 des Mandrelrades 02 und der Antrieb 78 des Förderrades 76 durch einen gemeinsamen Datenbus 79 datentechnisch miteinander verbunden sind. Dieser die Antriebe 58; 77; 78 verbindende vorzugsweise digital ausgebildete Datenbus 79 ist z. B. in einer Ring-Topologie oder in einer Stern-Topologie ausgebildet. Dabei steuert eine an den Datenbus 79 angeschlossene, z. B. als zentrale Maschinensteuerung ausgebildete Steuereinheit 82 mittels jeweils über den gemeinsamen Datenbus 79 transportierter Steuerdaten zumindest sowohl den Antrieb 78 des Förderrades 76 als auch den Antrieb 77 des Mandrelrades 02, vorzugsweise auch den Antrieb 58 des Segmentrades 03 und weitere, insbesondere alle an diesen Datenbus 79 angeschlossene Antriebe. In einem Dekorator mit mehreren über einen gemeinsamen Datenbus 79 verbundenen Einzelantrieben wird z. B. der Antrieb 77 des Mandrelrades 02 oder der Antrieb 58 des Segmentrades 03 jeweils als Master festgelegt, so dass sich die übrigen Antriebe jeweils als Slave in ihrem jeweiligen Rotationsverhalten nach dem zuvor festgelegten Master ausrichten. Durch die den Antrieb 78 des Förderrades 76 und den Antrieb 77 des Mandrelrades 02 steuernden Steuerdaten sind mindestens ein Paar von diskreten Winkelpositionen ϕ1; ϕ2, welches aus einer von einem der Mitnehmer am Umfang des Förderrades 76 eingenommenen oder einzunehmenden ersten Winkelposition ϕ1 und aus einer von einer der Halteeinrichtungen am Umfang des Mandrelrades 02 eingenommenen oder einzunehmenden zweiten Winkelposition ϕ2 jeweils an einer den jeweiligen Hohlkörper 01 vom Förderrad 76 an das Mandrelrad 02 übergebenden Übergabeposition 81 besteht, jeweils mit Bezug auf diese Übergabeposition 81 fest zueinander eingestellt. Das bedeutet, dass die das betreffende Paar von Winkelpositionen ϕ1; ϕ2 bildenden Winkelpositionen ϕ1; ϕ2 während einer jeweiligen Rotation von Förderrad 76 und Mandrelrad 02 jeweils mit Bezug auf die Übergabeposition 81 unverändert bleiben, und zwar vorzugsweise für alle Mitnehmer des Förderrades 76 und alle Halteeinrichtungen am Umfang des Mandrelrades 02, die zumindest während einer Produktion der Vorrichtung zum Bedrucken der Hohlkörper 01 jeweils an der den jeweiligen Hohlkörper 01 vom Förderrad 76 an das Mandrelrad 02 übergebenden Übergabeposition 81 zu positionieren sind. Die über den Datenbus 79 an den jeweiligen Antrieb 58; 77; 78 transportierten Steuerdaten umfassen vorzugsweise zumindest die jeweilige Drehzahl der Welle des betreffenden Antriebs 58; 77; 78 und/oder mindestens eine von dessen Welle einzunehmende Winkelposition. Diese Steuerdaten üben mit Bezug auf den betreffenden Dekorator damit z. B. die Funktion einer virtuellen Leitachse aus. Die über die virtuelle Leitachse transportierten Steuerdaten sind eine Führungsgröße für die zu koordinierenden Achsen der mit diesem Datenbus 79 verbundenen Antriebe 58; 77; 78. Aus den einen Positionswert der virtuellen Leitachse bildenden Steuerdaten, d. h. dem Leitwert der virtuellen Leitachse, wird für jede durch die Antriebe 58; 77; 78 gegebene Folgeachse ein Positionssollwert berechnet. Zumindest der Antrieb 77 des Mandrelrades 02 und der Antrieb 58 des Segmentrades 03 und gegebenenfalls auch der Antrieb 78 des Förderrades 76 sind jeweils als ein elektrischer, von der Steuereinheit 82 in ihrer jeweiligen Drehzahl gesteuerter und/oder lagegeregelter motorischer Direktantrieb ausgebildet. Der Antrieb 58 des Segmentrades 03 ist z. B. als ein Torquemotor ausgebildet. In einer vorteilhaften Ausführung ist zumindest den jeweiligen Antrieben 58; 77; 78 vom Förderrad 76, Mandrelrad 02 und Segmentrad 03 jeweils ein jeweils an den Datenbus 79 angeschlossener eigener Antriebsregler 83 und ein eigenes Leistungsteil 84 zugeordnet.

Die jeweils z. B. mittels Unterdruck saugend nacheinander jeweils einzeln auf einen der Dorne des Mandrelrades 02 aufgestülpten und dann von dem betreffenden Dorn gehaltenen Hohlkörper 01 werden zusätzlich zur Rotation des Mandrelrades 02 durch eine eigenständig vom Dorn ausgeführte oder zumindest ausführbare Rotation rotiert, denn jeder Dorn ist um seine jeweilige Längsachse rotierbar und dabei insbesondere auf eine bestimmte Umfangsgeschwindigkeit eingestellt oder zumindest einstellbar. In einer bevorzugten Ausführung wird mindestens ein Hohlkörper 01, vorzugsweise werden mehrere jeweils an einem der Dorne des Mandrelrades 02 gehaltene Hohlkörper 01 vor ihrem jeweiligen Bedrucken mittels mindestens eines der am Umfang des Segmentrades 03 angeordneten Drucktücher 33 z. B. durch ein insbesondere in der Peripherie des Mandrelrades 02 angeordnetes, vorzugsweise endlos umlaufendes mit diesen Hohlkörpern 01 jeweils in einem Berührungskontakt stehendes Beschleunigungsband 86, d. h. durch Friktion jeweils in Rotation versetzt und auf die für den Druckprozess erforderliche Umfangsgeschwindigkeit eingestellt. Dieses Beschleunigungsband 86 weist vorzugsweise einen eigenen von den Antrieben 58; 77; 78 des Förderrades 76, des Mandrelrades 02 und/oder des Segmentrades 03 getrennten, jedoch z. B. auch an den Datenbus 79 angeschlossenen Antrieb 87 auf, wobei die Umfangsgeschwindigkeit des Beschleunigungsbandes 86 wahlfrei einstellbar ist. Die Umfangsgeschwindigkeit des Beschleunigungsbandes 86 ist somit durch dessen Antrieb 87 z. B. für jeden Hohlkörper 01 in Abhängigkeit von den Erfordernissen des Druckprozesses individuell einstellbar und/oder veränderbar. Auch dem Antrieb 87 des Beschleunigungsbandes 86 ist z. B. ein eigener Antriebsregler 83 und ein eigenes Leistungsteil 84 zugeordnet.

Mindestens eine in der Peripherie des Mandrelrades 02 nach dem Bedrucken der Hohlkörper 01 angeordnete Bearbeitungsstation ist z. B. als eine Lackiereinrichtung 88 zum Lackieren der äußeren Mantelfläche eines jeden bedruckten Hohlkörpers 01 und/oder insbesondere bei Zweiteildosen als eine Randbearbeitungsstation ausgebildet. Die als Lackiereinrichtung 88 ausgebildete Bearbeitungsstation weist eine an die Mantelfläche von zumindest einem der vom Mandrelrad 02 gehaltenen bedruckten Hohlkörper 01 angestellte oder zumindest anstellbare Lackauftragswalze 89 auf. Die Lackauftragswalze 89 der Lackiereinrichtung 88 ist vorzugsweise von einem eigenen Antrieb 91 rotativ angetrieben, wobei ein am Mandrelrad 02 gehaltener Hohlkörper 01 nach dem Bedrucken mittels mindestens eines der am Umfang des Segmentrades 03 angeordneten Drucktücher 33 durch die vom Antrieb 91 angetriebene Lackauftragswalze 89 mittels Friktion in Rotation versetzt und z. B. in Abhängigkeit von den Erfordernissen des Lackierprozesses auf eine bestimmte Umfangsgeschwindigkeit eingestellt ist. Insbesondere ist die Umfangsgeschwindigkeit des Hohlkörpers 01 durch den Antrieb 91 der Lackauftragswalze 89 unabhängig von den Antrieben 58; 77; 78 des Förderrades 76, des Mandrelrades 02 und/oder des Segmentrades 03 eingestellt oder zumindest einstellbar. Vorteilhafterweise ist auch dem Antrieb 91 der Lackauftragswalze 89 ein eigener Antriebsregler 83 und ein eigenes Leistungsteil 84 zugeordnet.

In der bevorzugten Ausführung ist in der Peripherie des Mandrelrades 02, z. B. an dessen unterem Rand insbesondere in Transportrichtung der Hohlkörper 01 nach der Lackauftragswalze 89 der Lackiereinrichtung 88, ein Abbremsband 96 vorgesehen ist, wobei das Abbremsband 96 mindestens einen an einer der Halteeinrichtungen des Mandrelrades 02 gehaltenen rotierenden Hohlkörper 01 durch Friktion abbremsend angeordnet ist. Das Abbremsband 96 ist vorzugsweise durch einen eigenen Antrieb 97 angetrieben, wobei mindestens ein am Mandrelrad 02 gehaltener rotierender vom Abbremsband 96 durch Friktion abzubremsender Hohlkörper 01 nach seinem Bedrucken durch mindestens eines der am Umfang des Segmentrades 03 angeordneten Drucktücher 33 mittels dieses Antriebs 97 auf eine für den Weitertransport erforderliche Umfangsgeschwindigkeit eingestellt ist. Diese Umfangsgeschwindigkeit des Hohlkörpers 01 ist durch den Antrieb 97 des Abbremsbandes 96 unabhängig von den Antrieben 58; 77; 78; 91 des Förderrades 76 und/oder des Mandrelrades 02 und/oder des Segmentrades 03 und/oder der Lackauftragswalze 89 der Lackiereinrichtung 88 eingestellt oder zumindest einstellbar. Auch dem Antrieb 97 des Abbremsbandes 96 ist vorzugsweise ein eigener Antriebsregler 83 und ein eigenes Leistungsteil 84 zugeordnet. Das Abbremsband 96 mit einem eigenen Antrieb 97 ermöglicht einen optimalen Abbremsvorgang der Aufspanndorne vor der Aufnahme der stehenden Hohlkörper 01. Es ist insbesondere bei hohen Drehgeschwindigkeiten der Aufspanndorne in Verbindung mit Aufspanndorne für großvolumige Hohlkörper 01 mit einem hohen Massenträgheitsmoment von Vorteil bzw. erforderlich.

Des Weiteren ist in Transportrichtung der Hohlkörper 01 eine z. B. als eine rotierbare Transferscheibe 92 ausgebildete Fördereinrichtung zur Übernahme von am Mandrelrad 02 gehaltenen, mittels mindestens eines der am Umfang des Segmentrades 03 angeordneten Drucktücher 33 bedruckten und gegebenenfalls an ihrer Mantelfläche lackierten Hohlkörpern 01 vorgesehen, wobei eine Umfangsgeschwindigkeit der Transferscheibe 92 vorzugsweise in Abhängigkeit von der Rotation des Förderrades 76 z. B. mit dem Antrieb 78 dieses Förderrades 76 z. B. mittels eines Riemenantriebs eingestellt oder zumindest einstellbar ist. Ein Antrieb der Transferscheibe 92 ist z. B. mit dem Antrieb 78 des Förderrades 76 z. B. mechanisch oder elektrisch, insbesondere steuerungstechnisch gekoppelt. Alternativ dazu ist die Transferscheibe 92 von einem eigenen, d. h. von den übrigen Antrieben 58; 77; 78; 87; 91; 97 separaten Antrieb rotativ angetrieben.

In Transportrichtung der Hohlkörper 01 ist nach der Transferscheibe 92 vorzugsweise eine weitere Fördereinrichtung 93 zum Fördern bedruckter und/oder lackierter Hohlkörper 01 z. B. in einen Trockner vorgesehen, wobei diese Fördereinrichtung 93 z. B. als eine umlaufende Transportkette 93 mit mehreren, z. B. zwanzig Aufnehmern jeweils zur Aufnahme von einem der zu fördernden Hohlkörper 01 ausgebildet ist und vorzugsweise einen eigenen Antrieb 94, insbesondere einen Kettenantrieb aufweist, wobei dieser Antrieb 94 vorzugsweise zumindest mit dem die Antriebe 58; 77; 78 von Segmentrad 03, Mandrelrad 02 und Förderrad 76 verbindenden Datenbus 79 verbunden ist. Auch dem Antrieb 94 dieser Fördereinrichtung 93 ist z. B. ein eigener Antriebsregler 83 und ein eigenes Leistungsteil 84 zugeordnet.

Gemäß dem hier beispielhaft beschriebenen Antriebskonzept für einen Dekorator sind zumindest die Antriebe 58; 77; 78 von Segmentrad 03, Mandrelrad 02 und Förderrad 76 jeweils als Einzelantriebe ausgebildet und über einen gemeinsamen Datenbus 79 miteinander verbunden. Vorteilhafterweise sind in der Vorrichtung zum Bedrucken von Hohlkörpern 01 weitere an den gemeinsamen Datenbus 79 angeschlossene Einzelantriebe vorgesehen, z. B. der Antrieb 87 für das Beschleunigungsband 86 und/oder der Antrieb 91 für die Lackauftragswalze 89 der Lackiereinrichtung 88 und/oder der Antrieb 97 für das Abbremsband 96 und/oder der gegebenenfalls eigene Antrieb für die Transferscheibe 92 und/oder der Antrieb 94 für die Transportkette 93. Alle diese Antriebe 58; 77; 78; 87; 91; 94; 97 sind von einer an den gemeinsamen Datenbus 79 angeschlossenen, z. B. als zentrale Maschinensteuerung ausgebildeten Steuereinheit 82 mittels jeweils über diesen gemeinsamen Datenbus 79 transportierter Steuerdaten gesteuert, wobei diese Steuerdaten vorzugsweise zumindest die jeweilige Drehzahl der Welle des betreffenden Antriebs 58; 77; 78; 87; 91; 94; 97 sowie mindestens eine von dessen Welle einzunehmende Winkelposition beinhalten. Die als zentrale Maschinensteuerung ausgebildete Steuereinheit 82 ist z. B. als ein zum betreffenden Dekorator gehörender Leitstand ausgebildet, wobei sich die für die betreffenden Antriebe 58; 77; 78; 87; 91; 94; 97 erforderlichen Steuerdaten an diesem Leitstand einstellen lassen.

In einer bevorzugten Ausführung sind das Förderrad 76, das Mandrelrad 02, das Segmentrad 03 und die Transferscheibe 92 durch die Steuerung ihrer jeweiligen Antriebe 58; 77; 78 mittels der über den gemeinsamen Datenbus 79 transportierten Steuerdaten derart miteinander synchronisiert, dass zu einem bestimmten Zeitpunkt, an dem das Förderrad 76 einen Hohlkörper 01 an das Mandrelrad 02 übergibt, ein anderer bereits am Mandrelrad 02 angeordneter Hohlkörper 01 gerade durch ein am Segmentrad 03 angeordnetes Drucktuch 33 bedruckt wird und noch ein weiterer bereits bedruckter Hohlkörper 01 vom Mandrelrad 02 an die Transferscheibe 92 übergeben wird.

Ein Vorteil des für einen Dekorator anstelle eines zentralen Antriebs Einzelantriebe verwendenden Antriebskonzepts besteht in der sehr hohen Positioniergenauigkeit, die insbesondere für das Mandrelrad 02 und das Segmentrad 03 erreichbar ist, wodurch auf der Mantelfläche der Hohlkörper 01 ein punktscharfer Druck ermöglicht wird. Der separate Antrieb 87 für das Beschleunigungsband 86 ermöglicht eine individuelle Steuerung der Rotation jedes einzelnen auf einem Dorn des Mandrelrades 02 angeordneten Hohlkörpers 01, wobei bei Bedarf eine Voreilung oder Nacheilung der Rotation des betreffenden Hohlkörpers 01 jeweils mit Bezug auf ein am Umfang des Segmentrades 03 angeordnetes Drucktuch 33 eingestellt oder zumindest einstellbar ist. Der separate Antrieb 94 für die Transportkette 93 ermöglicht eine exakte Zählung der beförderten Hohlkörper 01 und/oder eine gezielte Ausschleusung fehlerbehafteter Hohlkörper 01. Die separaten Antriebe 77; 78; 94 für die unmittelbar am Transport der Hohlkörper 01 beteiligten Einrichtungen, d. h. insbesondere Förderrad 76, Mandrelrad 02, Transferscheibe 92 und/oder Transportkette 93 bieten den Vorteil, dass der zeitliche Einsatz der verschiedenen Übergabeaktionen zur Übergabe der betreffenden Hohlkörper 01 von einem Förderelement auf das andere ohne mechanische Eingriffe an den jeweiligen Antriebselementen eingestellt werden kann.

Vorteilhafterweise ist auch dem Motor 11 des Plattenzylinders 04 und dem Motor 12 der Rasterwalze 08 des jeweiligen mit dem Segmentrad 03 zusammenwirkenden Farbwerks 06 jeweils ein eigener Antriebsregler 83 und ein eigenes Leistungsteil 84 zugeordnet, wobei der betreffende Antriebsregler 83 i. d. R. mitsamt dem zugehörigen Leistungsteil 84 z. B. eine Ausbildung derjenigen zuvor beschriebenen elektronischen Steuereinheit darstellt, mit welcher der betreffende Motor 11 des Plattenzylinders 04 und der betreffende Motor 12 der Rasterwalze 08 jeweils z. B. in seiner jeweiligen Drehzahl geregelt oder zumindest regelbar ist. Der jeweilige Antriebsregler 83 und das zugehörige Leistungsteil 84 sind vorzugsweise über den Datenbus 79 mit der als zentrale Maschinensteuerung ausgebildeten Steuereinheit 82 verbunden, wobei diese zentrale Steuereinheit 82 z. B. als der zum betreffenden Dekorator gehörende Leitstand ausgebildet ist.

In der bevorzugten Ausführung sind mehrere, vorzugsweise alle an den gemeinsamen Datenbus 79 angeschlossenen Antriebe bzw. Motoren 11; 12; 58; 77; 78; 87; 91; 94; 97 jeweils einzeln und unabhängig voneinander gesteuert oder zumindest steuerbar. Dabei ist vorzugsweise vorgesehen, dass für die jeweiligen Motoren 11; 12; 58; 77; 78; 87; 91; 94; 97 für ihre jeweilige Steuerung jeweils mindestens ein Kennlinienfeld z. B. in der zentralen Steuereinheit 82 oder z. B. im zum jeweiligen Motor 11; 12; 58; 77; 78; 87; 91; 94; 97 gehörenden Antriebsregler 83 gespeichert ist. Um z. B. einen Produktionswechsel, insbesondere eine Umstellung der Maschinenanordnung auf eine Produktion von Hohlkörpern 01 anderen Formats, z. B. auf Dosen mit einer im Vergleich zur aktuellen Produktion kürzeren oder längeren Dosenhöhe und/oder eines anderen Dosendurchmessers zu erleichtern, ist es von Vorteil, dass die jeweiligen Motoren 11; 12; 58; 77; 78; 87; 91; 94; 97 jeweils gemäß aufeinander abgestimmter Kennlinienfelder gesteuert oder zumindest steuerbar sind. Dadurch sind oder werden die jeweiligen jeweils einzeln und unabhängig voneinander gesteuerten oder zumindest steuerbaren Motoren 11; 12; 58; 77; 78; 87; 91; 94; 97 in Abhängigkeit von der jeweiligen, zuvor insbesondere an der zentralen Steuereinheit 82, d. h. insbesondere am Leitstand eingestellten oder ausgewählten Produktion miteinander synchronisiert. Andererseits ist es bei einem jeweils Einzelantriebe verwendenden Antriebskonzept auch möglich, z. B. zu Zwecken der Wartung oder Reparatur oder Einrichtung oder Umrüstung eine erste Teilmenge der jeweils von einem der Motoren 11; 12; 58; 77; 78; 87; 91; 94; 97 antreibbaren Baugruppen 02; 03; 04; 08; 76; 86; 89; 92; 93; 96, insbesondere eine einzige von einem der Motoren 11; 12; 58; 77; 78; 87; 91; 94; 97 angetriebene Baugruppe 02; 03; 04; 08; 76; 86; 89; 92; 93; 96 einzeln, d. h. selektiv in Betrieb zu nehmen, so dass sie jeweils eine Rotationsbewegung ausführt bzw. ausführen, während mindestens eine andere Baugruppe 02; 03; 04; 08; 76; 86; 89; 92; 93; 96, d. h. eine zweite Teilmenge der jeweils von einem der Motoren 11; 12; 58; 77; 78; 87; 91; 94; 97 antreibbaren Baugruppen 02; 03; 04; 08; 76; 86; 89; 92; 93; 96 jeweils im Stillstand verharrt.

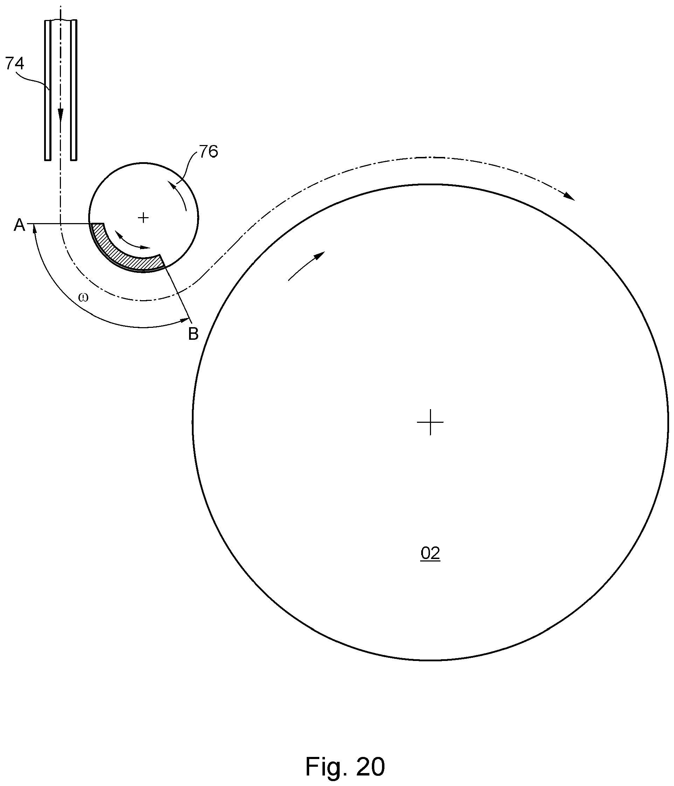

Fig. 20 zeigt einen die Zuführung der Hohlkörper 01 betreffenden Ausschnitt aus der Fig. 19, wobei mehrere Hohlkörper 01 mittels der Fördereinrichtung 74 in der durch den Pfeil angedeuteten Transportrichtung und entlang des durch den Pfeil angedeuteten Transportweges sequentiell dem Förderrad 76 und von dort dem Mandrelrad 02 zugeführt werden, wobei die jeweilige Drehrichtung von Förderrad 76 und Mandrelrad 02 gleichfalls jeweils durch einen Drehrichtungspfeil angedeutet sind. Das Förderrad 76 weist einen Winkelbereich ω auf, in welchem Winkelbereich ω eine im Förderrad 76 integrierte oder zumindest mit dem Förderrad 76 zusammenwirkende Saugeinrichtung 99 wirksam ist oder zumindest wirksam werden kann. Die Saugeinrichtung 99 ist demnach derart im oder am Förderrad 76 angeordnet, dass sie die Zuführung eines zu bedruckenden Hohlkörpers 01 zu einer der am Segmentrad 03 angeordneten Halteeinrichtungen unterstützt.

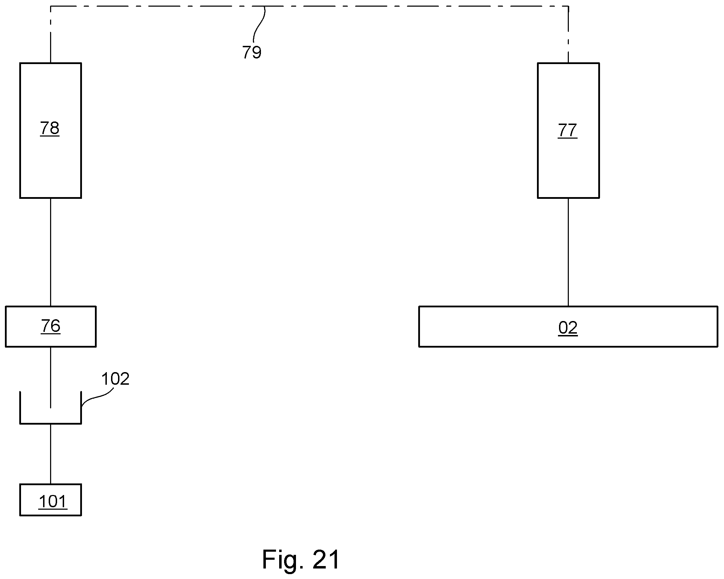

Fig. 21 zeigt nochmals vereinfacht und schematisch das Antriebskonzept von Förderrad 76 und Mandrelrad 02, wobei das Förderrad 76 vom Antrieb 78 und das Mandrelrad 02 vom Antrieb 77 jeweils separat vom Antrieb 58 des Segmentrades 03 eigenständig angetrieben oder zumindest antreibbar sind. Die beiden Antriebe 77; 78 sind über ihre jeweiligen Antriebsregler 83 mit dem Datenbus 79 verbunden. Die durch diese beiden Antriebe 77; 78 ausgeübten Drehbewegungen sind durch auf dem Datenbus 79 kommunizierte Steuerdaten miteinander synchronisiert. Eine Saugpumpe 101 ist z. B. über eine vorzugsweise fernbetätigbare Kupplung 102 dem Förderrad 76 zugeschaltet oder zumindest zuschaltbar, und zwar sowohl im Maschinenlauf als auch bei einem Maschinenstopp, d. h. sowohl beim rotierenden wie auch beim still stehenden Förderrad 76. Die Saugpumpe 101 und/oder die Kupplung 102 sind jeweils von der zentralen Steuereinheit 82, d. h. insbesondere vom Leitstand aus schaltbar bzw. betätigbar. In ihrem zugeschalteten Betriebszustand erzeugt die Saugpumpe 101 im vom rotierenden Förderrad 76 überstrichenen Winkelbereich ω einen Unterdruck, durch welchen ein vom Förderrad 76 zum Mandrelrad 02 zu fördernder Hohlkörper 01 an einem der am Umfang des Förderrades 76 angeordneten Mitnehmer korrekt aufgenommen und in dieser Position gehalten einer der am Umfang des Mandrelrades 02 angeordneten Halteeinrichtungen zugeführt wird. Da das Mandrelrad 02 in seiner Drehbewegung durch die Antriebssteuerung mit dem Förderrad 76 synchronisiert ist, wird ein von einem der Mitnehmer des Förderrades 76 gehaltener Hohlkörper 01 einer der Halterungen am Umfang des Mandrelrades 02 sehr präzise, d. h. positionsgenau zugeführt.

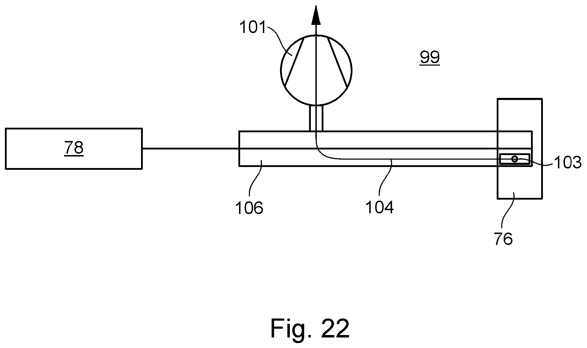

Details einer mit dem Förderrad 76 zusammenwirkenden Saugeinrichtung 99 sind vereinfacht in der Fig. 22 dargestellt. Das Förderrad 76 weist an seinem Umfang vorzugsweise im Bereich von mindestens einem seiner Mitnehmer jeweils mindestens eine Saugöffnung 103 auf. Ein von der zugeschalteten Saugpumpe 101 z. B. in einem Kanal 106 erzeugter Luftstrom 104 erzeugt an der betreffenden Saugöffnung 103 einen Unterdruck, durch welchen ein vom Förderrad 76 zum Mandrelrad 02 zu fördernder Hohlkörper 01 an einem der am Umfang des Förderrades 76 angeordneten Mitnehmer aufgenommen und gehalten wird. Die Saugpumpe 101 ist bzw. wird in Abhängigkeit von einer jeweiligen Winkelposition A; B des vom Antrieb 78 angetriebenen Förderrades 76 zugeschaltet oder abgeschaltet, so dass der vom rotierenden Förderrad 76 während der Dauer der zugeschalteten Saugpumpe 101 überstrichene Winkelbereich derjenige Winkelbereich ω ist, in welchem ein vom Förderrad 76 zum Mandrelrad 02 zu fördernder Hohlkörper 01 an einem der am Umfang des Förderrades 76 angeordneten Mitnehmer gehalten wird. Durch die DeiAusbildung des Antriebs 78 des Förderrades 76 als lagegeregelter motorischer Direktantrieb ist es möglich, den Winkelbereich ω, in welchem ein vom Förderrad 76 zum Mandrelrad 02 zu fördernder Hohlkörper 01 an einem der am Umfang des Förderrades 76 angeordneten Mitnehmer gehalten wird, und damit auch die Winkelposition, an der ein vom Förderrad 76 zum Mandrelrad 02 zu fördernder Hohlkörper 01 am Umfang des Förderrades 76 gehalten und dann an das Mandrelrad 02 übergeben wird, in Schrittweiten von 0,01 mm oder in noch geringeren Schrittweiten und damit sehr präzise einzustellen, so dass für die Übergabe eines Hohlkörpers 01 an eine der Halterungen am Umfang des Mandrelrades 02 eine sehr hohe Positioniergenauigkeit erreicht wird. Denn der Direktantrieb des Förderrades 76 ermöglicht eine sehr genaue Einstellung eines Umfangsregisters dieses Förderrades 76 in Bezug auf die jeweiligen Halterungen am Umfang des Mandrelrades 02. Diese hohe Positioniergenauigkeit führt ihrerseits dazu, dass in einem Dekorator zu bedruckende Hohlkörper 01 selbst bei einer hohen Produktionsgeschwindigkeit im Bereich von z. B. 1.500 bis 3.000, insbesondere im Bereich von z. B. 1.800 bis 2.500 Hohlkörpern 01 pro Minute sehr präzise vom Förderrad 76 an das Mandrelrad 02 übergeben und Störungen im Produktionsverlauf vermieden werden können. Auch können durch die beschriebene Steuerung der Saugeinrichtung 99 Einrichtezeiten am Dekorator z. B. nach einem Formatwechsel der zu bedruckenden Hohlkörper 01 verringert werden.

### Bezugszeichenliste

- 01: Hohlkörper; Zweiteildose
- 02: Mandrelrad
- 03: Segmentrad
- 04: Druckformzylinder; Plattenzylinder
- 05: -
- 06: Farbwerk
- 07: Farbauftragswalze
- 08: Rasterwalze
- 09: Kammerrakelsystem
- 10: -
- 11: Motor (04)
- 12: Motor (08)
- 13: Reiterwalze
- 14: Plattenwechsler
- 15: -
- 16: Auflagefläche
- 17: Traverse
- 18: Hebelanordnung, erste
- 19: Drehachse, erste
- 20: -
- 21: Antrieb, erster
- 22: Anschlag, erster
- 23: Hebelanordnung, zweite
- 24: Hebelanordnung, dritte
- 25: -
- 26: Drehachse, zweite
- 27: Antrieb, zweiter
- 28: Antrieb, dritter
- 29: Anschlagssystem, erstes
- 30: -
- 31: Anschlagssystem, zweites
- 32: Segment (03)
- 33: Drucktuch
- 34: Rotationsachse (03)
- 35: -
- 36: Aussparung
- 37: Kante (33)
- 38: Einhängeschenkel (33)
- 39: Kante (36)
- 40: -
- 41: Rotationsachse (02)
- 42: Speichereinrichtung
- 43: Einrichtung
- 44: Einrichtung
- 45: -
- 46: Schlitten
- 47: Spachtel
- 48: Schaltelement, erstes
- 49: Schaltelement, zweites
- 50: -
- 51: Schaltelement, drittes
- 52: Anschlag
- 53: Welle
- 54: Hohlwelle
- 55: -
- 56: Anschluss für den Kühlmittelzufluss
- 57: Anschluss für den Kühlmittelabfluss
- 58: Antrieb; Motor (03)
- 59: Gehäuse
- 60: -
- 61: Stator
- 62: Rotor
- 63: Wälzlager
- 64: Drehgeber
- 65: -
- 66: Gestell
- 67: Klemmelement
- 68: Grundkörper (03)
- 69: Fügestelle
- 70: -
- 71: Verbindungselement
- 72: Reiterlehre
- 73: Haltemagnet
- 74: Fördereinrichtung
- 75: -
- 76: Förderrad
- 77: Antrieb (02)
- 78: Antrieb (76; 92)
- 79: Datenbus
- 80: -
- 81: Übergabeposition
- 82: Steuereinheit
- 83: Antriebsregler
- 84: Leistungsteil
- 85: -
- 86: Beschleunigungsband
- 87: Antrieb (86)
- 88: Lackiereinrichtung
- 89: Lackauftragswalze
- 90: -
- 91: Antrieb (89)
- 92: Transferscheibe
- 93: Fördereinrichtung; Transportkette
- 94: Antrieb (93)
- 95: -
- 96: Abbremsband
- 97: Antrieb
- 98: Blaslufteinrichtung
- 99: Saugeinrichtung
- 100: -
- 101: Saugpumpe
- 102: Kupplung
- 103: Saugöffnung
- 104: Luftstrom
- 105: -
- 106: Kanal

- A: Winkelposition
- B: Winkelposition
- d04: Außendurchmesser
- d07: Außendurchmesser
- d08: Außendurchmesser
- G: Gerade
- ϕ1: Winkelposition, erste
- ϕ2: Winkelposition, zweite
- ω: Winkelbereich

## Patentansprüche

1. Vorrichtung zum Bedrucken von Hohlkörpern (01), mit einem Segmentrad (03) und einer Einrichtung zum sequentiellen Zuführen der Hohlkörper (01) an den Umfang des Segmentrades (03), wobei diese Einrichtung zumindest ein Förderrad (76) und ein Mandrelrad (02) aufweist, wobei in Transportrichtung der Hohlkörper (01) zunächst das Förderrad (76), dann das Mandrelrad (02) und danach das Segmentrad (03) angeordnet sind, wobei am Umfang des Förderrades (76) mehrere Mitnehmer und am Umfang des Mandrelrades (02) mehrere Halteeinrichtungen jeweils zur Aufnahme von jeweils einem im Zusammenwirken mit dem Segmentrad (03) zu bedruckenden Hohlkörper (01) angeordnet sind, wobei das Förderrad (76) eine Saugeinrichtung (99) zum Ansaugen des jeweiligen dem Segmentrad (03) jeweils zuzuführenden Hohlkörpers (01) aufweist, wobei die Saugeinrichtung (99) eine Saugpumpe (101) aufweist, wobei die Saugpumpe (101) in Abhängigkeit von einer Winkelposition (A; B) des Förderrades (76) von einer zentralen Steuereinheit (82) aus zugeschaltet oder abgeschaltet ist und bei ihrer Zuschaltung einen Unterdruck erzeugt, wobei ein vom Förderrad (76) zum Mandrelrad (02) zu fördernder an einem der Mitnehmer des Förderrades (76) angeordneter Hohlkörper (01) in einem Winkelbereich (ω) des rotierenden Förderrades (76) durch den Unterdruck an dem betreffenden Mitnehmer des Förderrades (76) gehalten wird, **dadurch gekennzeichnet, dass** der Antrieb (78) des Förderrades (76) als ein lagegeregelter motorischer Direktantrieb ausgebildet ist, wobei der Winkelbereich (ω), in welchem ein vom Förderrad (76) zum Mandrelrad (02) zu fördernder Hohlkörper (01) an einem der am Umfang des Förderrades (76) angeordneten Mitnehmer gehalten wird, und/oder eine Winkelposition, an der ein vom Förderrad (76) zum Mandrelrad (02) zu fördernder Hohlkörper (01) vom Förderrad (76) an das Mandrelrad (02) übergeben wird, jeweils in Schrittweiten von 0,01 mm oder in noch geringeren Schrittweiten eingestellt oder zumindest einstellbar ist.

2. Vorrichtung nach Anspruch 1, **dadurch gekennzeichnet, dass** das Förderrad (76) an seinem Umfang im Bereich von mindestens einem seiner Mitnehmer jeweils mindestens eine Saugöffnung (103) aufweist, wobei ein von der zugeschalteten Saugpumpe (101) erzeugter Luftstrom (104) an der betreffenden Saugöffnung (103) denjenigen Unterdruck erzeugt, durch welchen ein vom Förderrad (76) zum Mandrelrad (02) zu fördernder Hohlkörper (01) an einem der am Umfang des Förderrades (76) angeordneten Mitnehmer gehalten wird.

3. Vorrichtung nach Anspruch 1 oder 2, **dadurch gekennzeichnet, dass** der Winkelbereich (ω) des rotierenden Förderrades (76), in welchem ein vom Förderrad (76) zum Mandrelrad (02) zu fördernder von einem der Mitnehmer dieses Förderrades (76) aufgenommener Hohlkörper (01) durch den Unterdruck an dem betreffenden Mitnehmer dieses Förderrades (76) gehalten wird, weniger als 180°oder weniger als 120° beträgt und/oder dass dieser Winkelbereich (ω) des rotierenden Förderrades (76) durch diejenige Winkelposition (A), an der die Saugpumpe (101) zugeschaltet ist, und diejenige Winkelposition (B), an der die Saugpumpe (101) abgeschaltet ist, festgelegt ist.

4. Vorrichtung nach Anspruch 1 oder 2 oder 3, **dadurch gekennzeichnet, dass** in der Peripherie des Förderrades (76) eine Blaslufteinrichtung (98) angeordnet ist, wobei die Blaslufteinrichtung (98) die Aufnahme eines Hohlkörpers (01) an einem der Mitnehmer des Förderrades (76) dadurch unterstützt, dass die Blaslufteinrichtung (98) in Abhängigkeit von einer Winkelposition des Förderrades (76) jeweils mindestens einen Luftstoß in Richtung des Förderrades (76) auf den betreffenden Hohlkörper (01) ausstößt.

5. Vorrichtung nach Anspruch 1 oder 2 oder 3 oder 4, **dadurch gekennzeichnet, dass** die Saugpumpe (101) sowohl beim rotierenden wie auch beim still stehenden Förderrad (76) zuschaltbar ist.

6. Vorrichtung nach Anspruch 1 oder 2 oder 3 oder 4 oder 5, **dadurch gekennzeichnet, dass** die zentrale Steuereinheit (82) als ein zu dieser Vorrichtung gehörender Leitstand ausgebildet ist.

7. Vorrichtung nach Anspruch 1 oder 2 oder 3 oder 4 oder 5 oder 6, **dadurch gekennzeichnet, dass** das Mandrelrad (02) und das Förderrad (76) separat von einem Antrieb (58) des Segmentrades (03) jeweils durch einen eigenen Antrieb (77; 78) angetrieben sind.

8. Vorrichtung nach Anspruch 7, **dadurch gekennzeichnet, dass** der Antrieb (58) des Segmentrades (03) und/oder der Antrieb (77) des Mandrelrades (02) jeweils als ein lagegeregelter motorischer Direktantrieb ausgebildet ist.

9. Vorrichtung nach Anspruch 7 oder 8, **dadurch gekennzeichnet, dass** eine vom Antrieb (78) des Förderrades (76) ausgeübte Drehbewegung mit der vom Antrieb (77) des Mandrelrades (02) ausgeübten Drehbewegung synchronisiert ist.

10. Vorrichtung nach Anspruch 1 oder 2 oder 3 oder 4 oder 5 oder 6 oder 7 oder 8 oder 9, **dadurch gekennzeichnet, dass** die Saugpumpe (101) über eine Kupplung (102) dem Förderrad (76) zugeschaltet oder zumindest zuschaltbar ist.

11. Vorrichtung nach Anspruch 10, **dadurch gekennzeichnet, dass** die Kupplung (102) von der zentralen Steuereinheit (82) aus geschaltet oder zumindest schaltbar ist.

12. Vorrichtung nach Anspruch 1 oder 2 oder 3 oder 4 oder 5 oder 6 oder 7 oder 8 oder 9 oder 10 oder 11, **dadurch gekennzeichnet, dass** die am Umfang des Mandrelrades (02) jeweils zur Aufnahme von jeweils einem im Zusammenwirken mit dem Segmentrad (03) zu bedruckenden Hohlkörper (01) angeordneten mehreren Halteeinrichtungen konzentrisch zur Umfangslinie des Mandrelrades (02) jeweils in Form eines aus einer Stirnseite des Mandrelrades (02) auskragenden Aufspanndorns ausgebildet sind.

13. Vorrichtung nach Anspruch 1 oder 2 oder 3 oder 4 oder 5 oder 6 oder 7 oder 8 oder 9 oder 10 oder 11 oder 12, **dadurch gekennzeichnet, dass** die zu bedruckenden Hohlkörper (01) jeweils als eine Zweiteildose ausgebildet sind, deren jeweilige Mantelfläche zu bedrucken ist.

14. Vorrichtung nach Anspruch 1 oder 2 oder 3 oder 4 oder 5 oder 6 oder 7 oder 8 oder 9 oder 10 oder 11 oder 12 oder 13, **dadurch gekennzeichnet, dass** diese Vorrichtung eine Produktionsgeschwindigkeit im Bereich von 1.500 bis 3.000 oder im Bereich von 1.800 bis 2.500 Hohlkörpern (01) pro Minute aufweist.

## Claims

1. A device for printing on hollow bodies (01), having a segmented wheel (03) and a device for sequentially feeding the hollow bodies (01) to the periphery of the segmented wheel (03), wherein said device comprises at least a conveyor wheel (76) and a mandrel wheel (02), wherein in the transport direction of the hollow bodies (01), first the conveyor wheel (76), then the mandrel wheel (02) and thereafter the segmented wheel (03) are arranged, wherein a plurality of driver elements is arranged on the periphery of the conveyor wheel (76), and a plurality of holding devices is arranged on the periphery of the mandrel wheel (02), each holding device being provided for receiving a hollow body (01), which is to be printed in cooperation with the segmented wheel (03), wherein the conveyor wheel (76) has a suction apparatus (99) for suctioning each hollow body (01) to be supplied to the segmented wheel (03), wherein the suction apparatus (99) has a suction pump (101), wherein the suction pump (101) is switched on or off by a central control unit (82) in dependence on the angular position (A; B) of the conveyor wheel (76) and, when switched on, produces a negative pressure, wherein a hollow body (01) which is to be conveyed to the mandrel wheel (02) by the conveyor wheel (76) and which is arranged on one of the driver elements of the conveyor wheel (76) is held on the particular driver element of the conveyor wheel (76) by the negative pressure in an angular range (ω) of the rotating conveyor wheel (76), **characterized in that** the drive (78) of the conveyor wheel (76) is configured as a position controlled motorized direct drive, wherein the angular range (ω) within which a hollow body (01) to be conveyed by the conveyor wheel (76) to the mandrel wheel (02) is held on a driver element arranged on the circumference of the conveyor wheel (76), and/or an angular position, at which a hollow body (01) to be conveyed by the conveyor wheel (76) to the mandrel wheel (02) is transferred by the conveyor wheel (76) to the mandrel wheel (02) is adjusted or at least can be adjusted in increments of 0.01 mm or less.

2. The device according to claim 1, **characterized in that** the conveyor wheel (76) has at least one suction opening (103) on its circumference in the region of at least one of its driver elements, wherein an air flow (104) generated by the switched-on suction pump (101) generates, at the relevant suction opening (103), the negative pressure by which a hollow body (01), to be conveyed by the conveyor wheel (76) to the mandrel wheel (02), is held at one of the driver elements arranged on the circumference of the conveyor wheel (76).

3. The device according to claim 1 or 2, **characterized in that** the angular range (ω) of the rotating conveyor wheel (76), within which a hollow body (01) that is received by one of the driver elements of the conveyor wheel (76) and that is to be conveyed by the conveyor wheel (76) to the mandrel wheel (02), is held by the negative pressure at the relevant driver element of the conveyor wheel is less than 180° or is less than 120°, and/or that this angular range (ω) of the rotating conveyor wheel (76) is determined by the angular position (A) at which the suction pump (101) is switched on and the angular position (B) at which the suction pump (101) is switched off.

4. The device according to claim 1 or 2 or 3, **characterized in that** in the periphery of the conveyor wheel (76), a blowing air device (98) is arranged, wherein the blowing air device (98) supports the receipt of a hollow body (01) at one of the driver elements of the conveyor wheel (76), **in that** the blowing air device (98) emits at least one blast of air at the relevant hollow body (01), in a direction of the conveyor wheel (76), based on an angular position of the conveyor wheel (76).

5. The device according to claim 1 or 2 or 3 or 4, **characterized in that** the suction pump (101) can be switched on when the conveyor wheel (76) is rotating and when it is stationary.

6. The device according to claim 1 or 2 or 3 or 4 or 5, **characterized in that** the central control unit (82) is configured as a control station associated with this device.

7. The device according to claim 1 or 2 or 3 or 4 or 5 or 6, **characterized in that** the mandrel wheel (02) and the conveyor wheel (76) are driven separately from a drive (58) of the segmented wheel (03), in each case by a dedicated drive (77; 78) .

8. The device according to claim 7, **characterized in that** the drive (58) of the segmented wheel (03) and/or the drive (77) of the mandrel wheel (02) is respectively configured as a position controlled motorized direct drive.

9. The device according to claim 7 or 8, **characterized in that** a rotational movement executed by the drive (78) of the conveyor wheel (76) is synchronized with the rotational movement executed by the drive (77) of the mandrel wheel (02).

10. The device according to claim 1 or 2 or 3 or 4 or 5 or 6 or 7 or 8 or 9, **characterized in that** the suction pump (101) is connected to or at least can be connected to the conveyor wheel (76) via a coupling (102).

11. The device according to claim 10, **characterized in that** the coupling (102) is switched or at least can be switched from the central control unit (82).

12. The device according to claim 1 or 2 or 3 or 4 or 5 or 6 or 7 or 8 or 9 or 10 or 11, **characterized in that** the plurality of holding devices arranged on the circumference of the mandrel wheel (02) and each provided for receiving a hollow body (01) to be printed in cooperation with the segmented wheel (03), are each configured as a clamping mandrel protruding from an end face of the mandrel wheel (02), concentrically to a circumferential line of the mandrel wheel (02).

13. The device according to claim 1 or 2 or 3 or 4 or 5 or 6 or 7 or 8 or 9 or 10 or 11 or 12, **characterized in that** the hollow bodies (01) to be printed are each configured as a two-part can, a respective lateral surface of which is to be printed.

14. The device according to claim 1 or 2 or 3 or 4 or 5 or 6 or 7 or 8 or 9 or 10 or 11 or 12 or 13, **characterized in that** this device has a production speed ranging from 1,500 to 3,000 or ranging from 1,800 to 2,500 hollow bodies (01) per minute.

## Revendications

1. Dispositif pour imprimer des corps creux (01), avec une roue segmentée (03) et un système pour l'amenée séquentielle des corps creux (01) à la périphérie de la roue segmentée (03), dans lequel ce système présente au moins une roue de transport (76) et une roue à mandrins (02), dans lequel tout d'abord la roue de transport (76), puis la roue à mandrins (02) et ensuite la roue segmentée (03) sont disposées dans la direction de transport des corps creux (01), dans lequel plusieurs entraîneurs sont disposés sur la périphérie de la roue de transport (76) et plusieurs systèmes de retenue sur la périphérie de la roue à mandrins (02) respectivement pour la réception de respectivement un corps creux (01) à imprimer en coopération avec la roue segmentée (03), dans lequel la roue de transport (76) présente un système d'aspiration (99) pour l'aspiration du corps creux (01) respectif à amener respectivement à la roue segmentée (03), dans lequel le système d'aspiration (99) présente une pompe d'aspiration (101), dans lequel la pompe d'aspiration (101) est mise en circuit ou mise hors circuit à partir d'une unité de commande centrale (82) en fonction d'une position angulaire (A ; B) de la roue de transport (76) et lors de sa mise en circuit génère une pression négative, dans lequel un corps creux (01) destiné à être transporté par la roue de transport (76) vers la roue à mandrins (02), disposé sur un des entraîneurs de la roue de transport (76), est maintenu sur l'entraîneur concerné de la roue de transport (76) dans une plage angulaire (ω) de la roue de transport (76) rotative par la pression négative, **caractérisé en ce que** l'entraînement (78) de la roue de transport (76) est réalisé sous la forme d'un entraînement direct motorisé réglé en position, dans lequel la plage angulaire (ω), dans laquelle un corps creux (01) destiné à être transporté par la roue de transport (76) vers la roue à mandrins (02) est maintenu sur un entraîneur disposé sur la périphérie de la roue de transport (76), et/ou une position angulaire, dans laquelle un corps creux (01) destiné à être transporté par la roue de transport (76) vers la roue à mandrins (02) est transféré de la roue de transport (76) à la roue à mandrins (02), est réglée ou au moins réglable respectivement par incréments de 0,01 mm ou par incréments encore plus petits.

2. Dispositif selon la revendication 1, **caractérisé en ce que** la roue de transport (76) présente sur sa périphérie dans la zone d'au moins un de ses entraîneurs respectivement au moins une ouverture d'aspiration (103), dans lequel un flux d'air (104) généré par la pompe d'aspiration (101) mise en circuit génère sur l'ouverture d'aspiration (103) concernée la pression négative par laquelle un corps creux (01) destiné à être transporté par la roue de transport (76) vers la roue à mandrins (02) est maintenu sur un des entraîneurs disposés sur la périphérie de la roue de transport (76).

3. Dispositif selon la revendication 1 ou 2, **caractérisé en ce que** la plage angulaire (ω) de la roue de transport (76) rotative, dans laquelle un corps creux (01) destiné à être transporté par la roue de transport (76) vers la roue à mandrins (02), reçu par un des entraîneurs de cette roue de transport (76) est maintenu par la pression négative sur l'entraîneur concerné de cette roue de transport (76), est inférieure à 180° ou inférieure à 120° et/ou que cette plage angulaire (ω) de la roue de transport (76) rotative est définie par la position angulaire (A) dans laquelle la pompe d'aspiration (101) est mise en circuit, et la position angulaire (B) dans laquelle la pompe d'aspiration (101) est mise hors circuit.

4. Dispositif selon la revendication 1 ou 2 ou 3, **caractérisé en ce qu'**un système d'air de soufflage (98) est disposé dans la périphérie de la roue de transport (76), dans lequel le système d'air de soufflage (98) soutient la réception d'un corps creux (01) sur un des entraîneurs de la roue de transport (76), du fait que le système d'air de soufflage (98) expulse respectivement au moins un souffle d'air en direction de la roue de transport (76) sur le corps creux (01) concerné en fonction d'une position angulaire de la roue de transport (76) .

5. Dispositif selon la revendication 1 ou 2 ou 3 ou 4, **caractérisé en ce que** la pompe d'aspiration (101) peut être mise en circuit aussi bien lorsque la roue de transport (76) est en rotation que lorsqu'elle est immobile.

6. Dispositif selon la revendication 1 ou 2 ou 3 ou 4 ou 5, **caractérisé en ce que** l'unité de commande centrale (82) est réalisée sous la forme d'un pupitre de contrôle faisant partie de ce dispositif.

7. Dispositif selon la revendication 1 ou 2 ou 3 ou 4 ou 5 ou 6, **caractérisé en ce que** la roue à mandrins (02) et la roue de transport (76) sont entraînées respectivement par un entraînement (77 ; 78) propre de manière séparée d'un entraînement (58) de la roue segmentée (03).

8. Dispositif selon la revendication 7, **caractérisé en ce que** l'entraînement (58) de la roue segmentée (03) et/ou l'entraînement (77) de la roue à mandrins (02) est réalisé respectivement sous la forme d'un entraînement direct motorisé réglé en position.

9. Dispositif selon la revendication 7 ou 8, **caractérisé en ce qu'**un mouvement rotatif exercé par l'entraînement (78) de la roue de transport (76) est synchronisé avec le mouvement rotatif exercé par l'entraînement (77) de la roue à mandrins (02) .

10. Dispositif selon la revendication 1 ou 2 ou 3 ou 4 ou 5 ou 6 ou 7 ou 8 ou 9, **caractérisé en ce que** la pompe d'aspiration (101) est raccordée ou au moins peut être raccordée à la roue de transport (76) par l'intermédiaire d'un accouplement (102).

11. Dispositif selon la revendication 10, **caractérisé en ce que** l'accouplement (102) est commuté ou au moins peut être commuté à partir de l'unité de commande centrale (82).

12. Dispositif selon la revendication 1 ou 2 ou 3 ou 4 ou 5 ou 6 ou 7 ou 8 ou 9 ou 10 ou 11, **caractérisé en ce que** les différents systèmes de maintien disposés sur la périphérie de la roue à mandrins (02) respectivement pour la réception de respectivement un corps creux (01) à imprimer en coopération avec la roue segmentée (03) sont réalisés de manière concentrique par rapport à la ligne périphérique de la roue à mandrins (02) respectivement sous forme d'un mandrin de serrage faisant saillie d'une face frontale de la roue à mandrins (02).

13. Dispositif selon la revendication 1 ou 2 ou 3 ou 4 ou 5 ou 6 ou 7 ou 8 ou 9 ou 10 ou 11 ou 12, **caractérisé en ce que** les corps creux (01) à imprimer sont réalisés respectivement sous la forme d'une boîte en deux parties, dont la surface d'enveloppe respective est à imprimer.

14. Dispositif selon la revendication 1 ou 2 ou 3 ou 4 ou 5 ou 6 ou 7 ou 8 ou 9 ou 10 ou 11 ou 12 ou 13, **caractérisé en ce que** ce dispositif présente une vitesse de production dans la plage de 1500 à 3000 ou dans la plage de 1800 à 2500 corps creux (01) par minute.
